(19) **Europäisches Patentamt / European Patent Office / Office européen des brevets**

(11) **EP 3 964 794 A1**

(12) **EUROPEAN PATENT APPLICATION**
published in accordance with Art. 153(4) EPC

(43) Date of publication:
**09.03.2022 Bulletin 2022/10**

(21) Application number: **20817880.6**

(22) Date of filing: **02.06.2020**

(51) International Patent Classification (IPC):
**G01C 21/16** (2006.01)

(52) Cooperative Patent Classification (CPC):
**G01C 21/16; G01C 25/00**

(86) International application number:
**PCT/CN2020/094020**

(87) International publication number:
**WO 2020/244521 (10.12.2020 Gazette 2020/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.06.2019 CN 201910493764**

(71) Applicant: **Huawei Technologies Co., Ltd.**
**Longgang District**
**Shenzhen,**
**Guangdong 518129 (CN)**

(72) Inventors:
• **WANG, Jianguo**
  **Shenzhen, Guangdong 518129 (CN)**
• **WANG, Xuzhen**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **MOTION STATE DETERMINATION METHOD AND APPARATUS**

(57) A motion state determining method and apparatus are provided. The method includes: determining a weight of a grid cell in a velocity grid $W_1$ based on measurement data from a sensor (step 301), where the velocity grid $W_1$ includes a plurality of grid cells, each grid cell in the plurality of grid cells corresponds to one velocity vector, each velocity vector includes at least one velocity component, and the measurement data includes a velocity measurement value; and determining a motion state of the sensor based on the weight of the grid cell (step 302), where the motion state of the sensor includes a velocity vector of the sensor, and the velocity vector of the sensor includes at least one velocity component. According to the motion state determining method, the motion state of the sensor can be accurately determined.

FIG. 3

**Description**

## TECHNICAL FIELD

This application relates to the field of sensor technologies, and in particular, to a motion state determining method and apparatus.

## BACKGROUND

A variety of sensors, such as a radar, sonar, ultrasonic sensor, and a visual sensor including a camera, are usually configured in an advanced driver assistant system (advanced driver assistant system, ADAS) or autonomous driving (autonomous driving, AD) system, to perceive an ambient environment and target information. By using the information obtained by the above sensors, functions such as classification, recognition and tracking of the ambient environment and objects can be realized. Platforms of the sensors may be a vehicle, ship-borne, airborne, or satellite-borne system. These sensors are deployed on the sensor platforms and can provide measurement data of targets moving relative to a reference system or targets stationary relative to the reference system around a mobile device. The reference system may be the earth or an inertial coordinate system relative to the earth. For example, the targets moving relative to the reference system may be vehicles, pedestrians, and the like. The targets stationary relative to the reference system may be obstacles, guardrails, curbs, lamp poles, surrounding trees, buildings, and the like. The measurement data may include one or more of a distance of the target relative to the sensor, an azimuth angle of the target relative to the sensor, a pitch angle of the target relative to the sensor, a radial velocity of the target relative to the sensor, and a scattering cross section of the target relative to the sensor.

Compared to a sensor at a fixed position, motion of the sensor deployed on the mobile device will cause the following effects: First, the targets moving relative to the reference system and the targets stationary relative to the reference system are usually analyzed and processed by using different methods. The targets moving relative to the reference system usually need to be classified, recognized, and tracked. The targets stationary relative to the reference system usually need to be classified and recognized, to provide additional information for autonomous driving, such as obstacles and drivable areas. The motion of the sensor will make it impossible to distinguish the targets moving relative to the reference system from the targets stationary relative to the reference system, and then it is impossible to analyze and process the targets moving relative to the reference system and the targets stationary relative to the reference system by using the different methods. Second, the tracking of the targets moving relative to the reference system is usually model-based. A conventional target motion model is usually assumed to be defined relative to a ground plane or geodetic coordinate system, and the motion of the sensor will lead to invalidation of the conventional model or degradation of tracking performance. Therefore, it is necessary to estimate the motion state of the sensor, especially its velocity, to compensate for the above impact.

In the conventional technology, manners of obtaining the motion state of the sensor include: (1) A position of the vehicle can be obtained by using a global navigation satellite system (global navigation satellite system, GNSS), such as a global positioning system (global positioning system, GPS), and a motion state of the vehicle can be obtained based on specific positions at a plurality of time points. However, precision of a civil GNSS is low and usually in a meter scale, and often there is a large error. (2) A velocity vector of the sensor is measured by using an inertial measurement unit (inertial measurement unit, IMU) on the mobile device. However, the velocity vector measured by the IMU is usually obtained based on an accelerated velocity measured by an accelerometer, and measurement errors will accumulate over time. In addition, it is susceptible to electromagnetic interference. Therefore, how to accurately determine the motion state of the sensor, especially the velocity vector, is an urgent problem to be resolved currently.

## SUMMARY

Embodiments of this application provide a motion state determining method and apparatus, to accurately determine a motion state of a sensor.

According to a first aspect, an embodiment of this application provides a motion state determining method. The method includes: determining a weight of a grid cell in a velocity grid $W_1$ based on measurement data from a sensor, where the velocity grid $W_1$ includes a plurality of grid cells, each grid cell in the plurality of grid cells corresponds to one velocity vector, each velocity vector includes at least one velocity component, and the measurement data includes a velocity measurement value; and determining a motion state of the sensor based on the weight of the grid cell, where the motion state of the sensor includes a velocity vector of the sensor, and the velocity vector of the sensor includes at least one velocity component. According to the method described in the first aspect, the velocity vector of the sensor may be accurately determined based on the measurement data from the sensor.

Optionally, in addition to the velocity vector of the sensor, the motion state of the sensor may further include a position of the sensor. For example, the position of the sensor may be obtained based on the velocity vector and a time interval by using a specified start time point or an initial position as a reference.

In an optional implementation, the velocity grid $W_1$ is determined based on at least one of a resolution cell size and a reference velocity vector. Specifically, the velocity grid $W_1$ is determined based on at least one of the reference velocity vector and a resolution cell size of the velocity grid $W_1$ in each dimension direction.

Optionally, the velocity grid $W_1$ may be determined based on at least one of the resolution cell size and the reference velocity vector, and based on at least one of a resolution cell quantity, a minimum velocity of a velocity component, and a velocity range of the velocity component. Specifically, the velocity grid $W_1$ is determined based on at least one of the reference velocity vector and the resolution cell size of the velocity grid $W_1$ in each dimension direction, and at least one of a resolution cell quantity of the velocity grid $W_1$ in each dimension direction, a minimum velocity of each velocity component of the velocity grid $W_1$, and a velocity range of the velocity component of the velocity grid $W_1$.

Optionally, the velocity grid $W_1$ may be used to determine the velocity vector of the sensor, where a grid cell in the velocity grid $W_1$ corresponds to a candidate velocity vector of the sensor; or the velocity grid $W_1$ may be used to determine a sensor-measured velocity of a target stationary relative to a reference system, where a grid cell in the velocity grid $W_1$ corresponds to a candidate velocity vector of the target stationary relative to the reference system. For example, a vehicle or unmanned aerial vehicle sensor is used as an example. The reference system may be a geodetic coordinate system, or an inertial coordinate system moving uniformly relative to the earth, and the target stationary relative to the reference system may be an object in an ambient environment, such as a guardrail, a curb, a lamp pole, or a building.

In an optional implementation, a specific implementation of determining the velocity vector of the sensor based on the weight of the grid cell is: determining the motion state of the sensor based on a first grid cell in the velocity grid $W_1$, where the first grid cell in the velocity grid $W_1$ is a grid cell with a largest weight in the velocity grid $W_1$, the first grid cell in the velocity grid $W_1$ is a grid cell that is in a neighborhood of a grid cell with a largest weight in the velocity grid $W_1$ and that is closest to the reference velocity vector, or the first grid cell in the velocity grid $W_1$ is a grid cell that is among a plurality of grid cells with maximum weights in the velocity grid $W_1$ and that corresponds to a velocity vector closest to the reference velocity vector. The grid cells with maximum weights may be grid cells whose weights are greater than a threshold, or the grid cells with maximum weights may be grid cells whose weight sizes are sorted before a preset position. According to the optional implementation, the motion state of the sensor can be accurately determined based on a velocity vector corresponding to the first grid cell in the velocity grid $W_1$.

In an optional implementation, a specific implementation of determining the weight of the grid cell in the velocity grid $W_1$ based on the measurement data from the sensor is: determining a second grid cell (i, j) based on an $n^{th}$ piece of measurement data, and weighting the second grid cell (i, j) based on a weighted increment or weighting factor, where a velocity vector corresponding to the second grid cell (i, j) satisfies

$$\left| v_x(i) \cdot \cos\theta_n + v_y(j) \cdot \sin\theta_n + \dot{r}_n \right| \leq T_1 ;$$

or

determining a second grid cell (i, j, k) based on an $n^{th}$ piece of measurement data, and weighting the second grid cell (i, j, k) based on a weighted increment or weighting factor, where a velocity vector corresponding to the second grid cell (i, j, k) satisfies

$$\left| v_x(i) \cdot \cos\varphi_n \cos\theta_n + v_y(j) \cdot \sin\varphi_n \sin\theta_n + v_z(k) \cdot \sin\varphi_n + \dot{r}_n \right| \leq T_2 ,$$

where

$\theta_n$ is a measurement value of an azimuth angle included in the $n^{th}$ piece of measurement data, $\varphi_n$ is a measurement value of a pitch angle included in the $n^{th}$ piece of measurement data, $\dot{r}_n$ is a measurement value of a radial velocity included in the $n^{th}$ piece of measurement data, $v_x(i)$ is an x-axis component of the velocity vector corresponding to the second grid cell, $v_y(j)$ is a y-axis component of the velocity vector corresponding to the second grid cell, $v_z(k)$ is a z-axis component of the velocity vector of the second grid cell, and both $T_1$ and $T_2$ are non-negative thresholds. According to the optional implementation, only the second grid cell may be weighted, and other low-probability grid cells are ignored, to effectively reduce grid cells whose weighted increments or weighting factors need to be calculated, and effectively reduce a calculation amount.

In an optional implementation, a specific implementation of determining the weight of the grid cell in the velocity grid $W_1$ based on the measurement data from the sensor is: determining a second grid cell (i, j) based on an $n^{th}$ piece of measurement data, and weighting the second grid cell (i, j) based on a weighted increment or weighting factor, where a velocity vector corresponding to the second grid cell (i, j) satisfies

$$\left| v_x(\mathrm{i}) \cdot \cos\theta_n + v_y(\mathrm{j}) \cdot \sin\theta_n - \dot{r}_n \right| \le T_1;$$

or

determining a second grid cell (i, j, k) based on an $n^{\text{th}}$ piece of measurement data, and weighting the second grid cell (i, j, k) based on a weighted increment or weighting factor, where a velocity vector corresponding to the second grid cell (i, j, k) satisfies

$$\left| v_x(\mathrm{i}) \cdot \cos\varphi_n \cos\theta_n + v_y(\mathrm{j}) \cdot \sin\varphi_n \sin\theta_n + v_z(\mathrm{k}) \cdot \sin\varphi_n - \dot{r}_n \right| \le T_2,$$

where

$\theta_n$ is a measurement value of an azimuth angle included in the $n^{\text{th}}$ piece of measurement data, $\varphi_n$ is a measurement value of a pitch angle included in the $n^{\text{th}}$ piece of measurement data, $\dot{r}_n$ is a measurement value of a radial velocity included in the $n^{\text{th}}$ piece of measurement data, $v_x(\mathrm{i})$ is an x-axis component of the velocity vector corresponding to the second grid cell, $v_y(\mathrm{j})$ is a y-axis component of the velocity vector corresponding to the second grid cell, $v_z(\mathrm{k})$ is a z-axis component of the velocity vector of the second grid cell, and both $T_1$ and $T_2$ are non-negative thresholds. According to the optional implementation, only the second grid cell may be weighted, and other low-probability grid cells are ignored, to effectively reduce grid cells whose weighted increments or weighting factors need to be calculated, and effectively reduce a calculation amount.

Optionally, for one piece of measurement data from the sensor, one weighted increment may be determined for one grid cell in the velocity grid $W_1$, and a weight of the grid cell in the velocity grid $W_1$ is determined by accumulating weighted increments corresponding to one or more pieces of measurement data from the sensor. In this case, the weight of the grid cell is obtained in a cumulative sum form. Optionally, for one piece of measurement data from the sensor, one weighting factor may be determined for one grid cell in the velocity grid $W_1$, and a weight of the grid cell in the velocity grid $W_1$ is determined by multiplying weighting factors corresponding to one or more pieces of measurement data from the sensor. In this case, the weight of the grid cell is obtained in a product form. That is, the grid cell may be weighted in a weighted increment form, or may be weighted in the product form.

In an optional implementation, the weighted increment or weighting factor of the grid cell in the velocity grid $W_1$ is a preset value, the weighted increment or weighting factor of the grid cell in the velocity grid $W_1$ is a value determined based on the $n^{\text{th}}$ piece of measurement data, or the weighted increment or weighting factor of the grid cell in the velocity grid $W_1$ is a value determined based on the $n^{\text{th}}$ piece of measurement data and distribution of a scattering section corresponding to a preset target type. In this way, the weight of the grid cell can be obtained more precisely, and thus the motion state, especially the velocity vector, of the sensor, can be obtained more precisely.

In an optional implementation, the first grid cell in the velocity grid $W_1$ is the grid cell with the largest weight in the velocity grid $W_1$; and when the velocity grid $W_1$ has a plurality of grid cells with the largest weight, the first grid cell in the velocity grid $W_1$ is a grid cell that is among the plurality of grid cells with the largest weight and that corresponds to a largest velocity vector, where the largest velocity vector may refer to a velocity vector with a maximum norm or a maximum speed. The norm may be a Euclidean norm or a norm of another type. Alternatively, when the velocity grid $W_1$ has a plurality of grid cells with the largest weight, the first grid cell in the velocity grid $W_1$ is a grid cell that is among the plurality of grid cells with the largest weight and that corresponds to a velocity vector closest to the reference velocity vector. The velocity vector closest to the reference velocity vector refers to a velocity vector with a smallest distance from the reference velocity vector. The distance may be a Euclidean distance, a Mahalanobis distance, or a distance of another type.

In an optional implementation, a specific implementation of determining the motion state of the sensor based on the first grid cell in the velocity grid $W_1$ is: determining that a velocity vector corresponding to the first grid cell in the velocity grid $W_1$ is the velocity vector of the sensor. In this optional implementation, the velocity vector of the first grid cell in the velocity grid $W_1$ among a plurality of velocity vectors in the velocity grid $W_1$ is most likely to be the velocity vector of the sensor. Therefore, the velocity vector corresponding to the first grid cell in the velocity grid $W_1$ may be directly determined as the velocity vector of the sensor.

In an optional implementation, a specific implementation of determining the motion state of the sensor based on the first grid cell in the velocity grid $W_1$ is: determining that an opposite number of each velocity component of a velocity vector corresponding to the first grid cell in the velocity grid $W_1$ is each velocity component of the velocity vector of the sensor. In this optional implementation, the velocity vector corresponding to the first grid cell in the velocity grid $W_1$ among a plurality of velocity vectors in the velocity grid $W_1$ is most likely to be a velocity vector corresponding to the target stationary relative to the reference system. Because the velocity vector of the sensor and a velocity component of the velocity vector of the target stationary relative to the reference system are same in magnitude, but opposite in direction, the opposite number of the velocity component of the velocity vector corresponding to the first grid cell in the velocity grid $W_1$ may be determined as the velocity component of the velocity vector of the sensor.

In an optional implementation, a specific implementation of determining the motion state of the sensor based on the first grid cell in the velocity grid $W_1$ is: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, where m=1, 2, ..., M, and M is an integer; and determining that a velocity vector corresponding to the first grid cell in the velocity grid $W_M$ is the velocity vector of the sensor. In this optional implementation, after a velocity vector corresponding to the first grid cell in the velocity grid $W_1$ is determined, M-1 iterations are performed to determine the velocity vector of the sensor. According to this optional implementation, the velocity vector of the sensor can be determined more accurately.

In an optional implementation, a specific implementation of determining the motion state of the sensor based on the first grid cell in the velocity grid $W_1$ is: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, where m=1, 2, ..., M, and M is an integer; and determining that an opposite number of each velocity component of a velocity vector corresponding to the first grid cell in the velocity grid $W_M$ is each velocity component of the velocity vector of the sensor. In this optional implementation, after a velocity vector corresponding to the first grid cell in the velocity grid $W_1$ is determined, M-1 iterations are performed to determine the velocity vector of the sensor. According to this optional implementation, the velocity vector of the sensor can be determined more accurately.

In an optional implementation, after the velocity vector of the sensor is determined, measurement data of the target stationary relative to the reference system may be further determined based on the velocity vector of the sensor from the measurement data. According to this optional implementation, measurement data of a target moving relative to the reference system and the measurement data of the target stationary relative to the reference system can be separated.

In an optional implementation, a specific implementation of determining the motion state of the sensor based on the first grid cell in the velocity grid $W_1$ is: determining, based on the velocity vector corresponding to the first grid cell in the velocity grid $W_1$, measurement data of the target stationary relative to the reference system from the measurement data; and determining the velocity vector of the sensor based on the measurement data of the target stationary relative to the reference system. According to this optional implementation, the velocity vector of the sensor can be determined accurately.

In an optional implementation, a specific implementation of determining the velocity vector of the sensor based on the measurement data of the target stationary relative to the reference system is: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined based on newly determined measurement data of the target stationary relative to the reference system, and the newly determined measurement data of the target stationary relative to the reference system is determined based on the velocity vector corresponding to the first grid cell in the velocity grid $W_{m-1}$, where m=1, 2, ..., M, and M is an integer; and determining that a velocity vector corresponding to the first grid cell in the velocity grid $W_M$ is the velocity vector of the sensor. In this optional implementation, after the measurement data of the target stationary relative to the reference system is determined based on the velocity vector corresponding to the first grid cell in the velocity grid $W_1$ from the measurement data, M-1 iterations are performed based on the measurement data of the target stationary relative to the reference system, to determine the velocity vector of the sensor. Therefore, according to this optional implementation, the velocity vector of the sensor can be determined more accurately.

In an optional implementation, a specific implementation of determining the velocity vector of the sensor based on the measurement data of the target stationary relative to the reference system is: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined based on newly determined measurement data of the target stationary relative to the reference system, and the newly determined measurement data of the target stationary relative to the reference system is determined based on the velocity vector corresponding to the first grid cell in the velocity grid $W_{m-1}$, where m=1, 2, ..., M, and M is an integer; and determining that an opposite number of each velocity component of a velocity vector corresponding to the first grid cell in the velocity grid $W_M$ is each velocity component of the velocity vector of the sensor. In this optional implementation, after the measurement data of the target stationary relative to the reference system is determined based on the velocity vector corresponding to the first grid cell in the velocity grid $W_1$ from the measurement data, M-1 iterations are performed based on the measurement data of the target stationary relative to the reference system, to determine the velocity vector of the sensor. Therefore, according to this optional implementation, the velocity vector of the sensor can be determined more accurately.

In an optional implementation, a specific implementation of determining the velocity vector of the sensor based on the measurement data of the target stationary relative to the reference system is: determining the velocity vector of the sensor according to the following measurement equation:

$$-\dot{r}_k = h_k v_s - n_{\dot{r}},$$

where

$\dot{r}_k$ is a measurement value of a radial velocity of a $k^{th}$ target stationary relative to the reference system, $n_{\dot{r}}$ is a measurement error of the radial velocity, $v_s$ is the velocity vector of the sensor, $v_s$ is a two-dimensional vector, and $h_k = [\cos\theta_k \sin\theta_k]$ ; or $v_s$ is a three-dimensional vector, and $h_k = [\cos\varphi_k\cos\theta_k \ \cos\varphi_k\sin\theta_k \ \sin\varphi_k]$, where $\theta_k$ is a measurement value of an azimuth angle of the $k^{th}$ target stationary relative to the reference system, and $\varphi_k$ is a measurement value of a pitch angle of the $k^{th}$ target stationary relative to the reference system. According to this optional implementation, the velocity vector of the sensor can be determined more accurately.

In an optional implementation, a specific implementation of determining the velocity vector of the sensor based on the measurement data of the target stationary relative to the reference system is: determining the velocity vector of the sensor according to the following measurement equation:

$$\dot{r}_k = h_k v_T + n_{\dot{r}},$$

where

$\dot{r}_k$ is a measurement value of a radial velocity of a $k^{th}$ target stationary relative to the reference system, $v_T$ is a velocity vector of the target stationary relative to the reference system, $n_{\dot{r}}$ is a measurement error of the radial velocity, $v_T$ is a two-dimensional vector, and $h_k = [\cos\theta_k \sin\theta_k]$; or $v_T$ is a three-dimensional vector, and $h_k = [\cos\varphi_k\cos\theta_k \ \cos\varphi_k \sin\theta_k \ \sin\varphi_k]$, where $\theta_k$ is a measurement value of an azimuth angle of the $k^{th}$ target stationary relative to the reference system, and $\varphi_k$ is a measurement value of a pitch angle of the $k^{th}$ target stationary relative to the reference system. The velocity vector $v_s$ of the sensor can be obtained according to $v_s = -v_T$. According to this optional implementation, the velocity vector of the sensor can be determined more accurately.

In an optional implementation, a specific implementation of determining the velocity vector of the sensor according to the measurement equation is: obtaining the velocity vector of the sensor according to the measurement equation and based on a least square method and/or sequential block filtering. According to this optional implementation, the velocity vector of the sensor can be determined more accurately.

In an optional implementation, a specific implementation of determining the motion state of the sensor based on the first grid cell in the velocity grid $W_1$ is: determining the velocity vector of the sensor based on a velocity vector corresponding to the first grid cell in the velocity grid $W_1$, a velocity vector corresponding to the first grid cell in the velocity grid $W_m$, or a velocity vector of the sensor estimated based on the measurement data of the target stationary relative to the reference system and a first velocity vector. The first velocity vector includes a velocity vector of the sensor determined based on measurement data of a previous frame and/or a reference velocity vector of the sensor, where the reference velocity vector of the sensor may be a velocity vector of the sensor measured by an IMU or another apparatus. According to this optional implementation, by using a temporal and/or spatial correlation of motion, the velocity vector of the sensor may be determined more accurately based on a reference velocity vector and a velocity vector of the sensor obtained based on current measurement data and/or a velocity vector of the sensor determined last time.

According to a second aspect, a motion state determining apparatus is provided. The apparatus may perform the method according to any one of the first aspect and the optional implementations of the first aspect. The functions may be implemented by hardware, or may be implemented by hardware executing corresponding software. The hardware or software includes one or more units corresponding to the foregoing functions. The unit may be software and/or hardware. Based on a same inventive concept, for a problem-resolving principle and beneficial effects of the motion state determining apparatus, refer to the method and beneficial effects according to any one of the first aspect and the optional implementations of the first aspect. Details are not described again.

According to a third aspect, a motion state determining apparatus is provided. The motion state determining apparatus includes a processor and a communication interface. Optionally, the apparatus further includes a memory. The processor, the communication interface, and the memory are connected.

In an optional design, the communication interface may be a transceiver or a receiver and a transmitter that are independently disposed. The communication interface is configured to implement communication with another network element.

In another optional design, the communication interface may be an interface circuit, and the interface circuit is used by the processor to obtain or output information or data. For example, the interface circuit is used by the processor to read data from the memory or write data. For another example, the interface circuit is used by the processor to receive information or data outside the apparatus, or send information or data outside the apparatus.

The memory is configured to store a program, and the processor invokes the program stored in the memory, to implement the method according to any one of the first aspect and the optional implementations of the first aspect. For a problem-resolving implementation and beneficial effects of the motion state determining apparatus, refer to the method and beneficial effects according to any one of the first aspect and the optional implementations of the first aspect. Details are not described again.

According to a fourth aspect, a computer program product is provided. When the computer program product runs on a computer, the computer is enabled to perform the method according to any one of the first aspect and the optional implementations of the first aspect.

According to a fifth aspect, a chip product is provided. The chip product performs the method according to any one of the first aspect and the optional implementations of the first aspect.

According to a sixth aspect, a computer-readable storage medium is provided. The computer-readable storage medium stores instructions; and when the instructions are run on a computer, the computer is enabled to perform the method according to any one of the first aspect and the optional implementations of the first aspect.

**BRIEF DESCRIPTION OF DRAWINGS**

FIG. 1 is a schematic diagram of a system architecture according to an embodiment of this application;
FIG. 2 is a schematic diagram of measurement data according to an embodiment of this application;
FIG. 3 is a schematic flowchart of a motion state determining method according to an embodiment of this application;
FIG. 4 is a schematic diagram of a velocity grid according to an embodiment of this application;
FIG. 5 is a schematic diagram of another velocity grid according to an embodiment of this application;
FIG. 6 is a schematic diagram of still another velocity grid according to an embodiment of this application;
FIG. 7 is a schematic flowchart of another motion state determining method according to an embodiment of this application;
FIG. 8 is a schematic diagram of still another velocity grid according to an embodiment of this application;
FIG. 9 is a schematic structural diagram of a motion state determining apparatus according to an embodiment of this application; and
FIG. 10 is a schematic structural diagram of another motion state determining apparatus according to an embodiment of this application.

**DESCRIPTION OF EMBODIMENTS**

The following further describes specific embodiments of this application in detail with reference to the accompanying drawings.

The embodiments of this application provide a motion state determining method and a motion state determining apparatus, to accurately determine a motion state, especially a velocity vector, of a sensor.

To better understand the embodiments of this application, the following describes a system architecture applicable to the embodiments of this application.

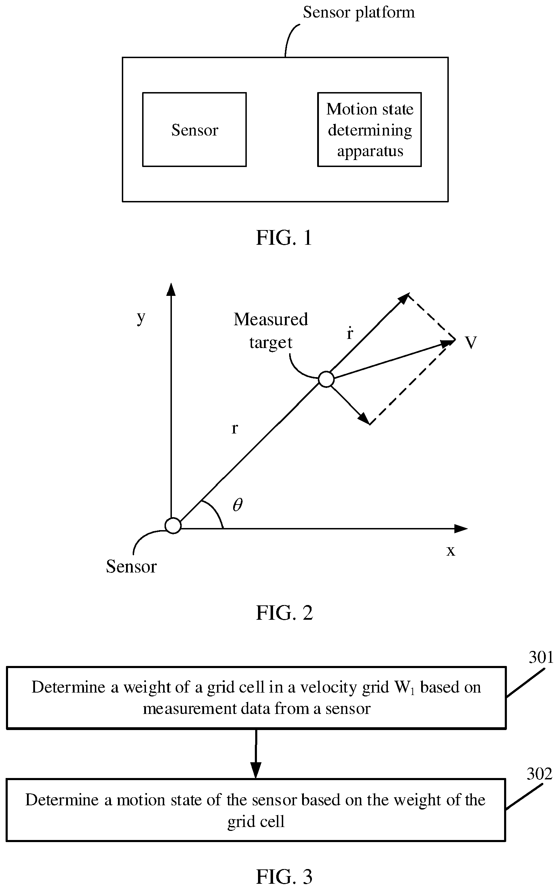

FIG. 1 is a schematic diagram of a system architecture according to an embodiment of this application. As shown in FIG. 1, the system architecture includes a sensor platform. The sensor platform is equipped with a sensor. The system architecture further includes a motion state determining apparatus. The motion state determining apparatus may be deployed on the sensor platform, that is, the motion state determining apparatus may be integrated with the sensor platform. Alternatively, the motion state determining apparatus may be deployed outside the sensor platform, and the motion state determining apparatus communicates with the sensor platform by using a wireless network. FIG. 1 shows an example in which the motion state determining apparatus is deployed on the sensor platform.

The sensor platform may be a mobile device. For example, the sensor platform may be a vehicle platform, such as a car, a motorcycle, or a bicycle. Alternatively, the sensor platform may be a ship-borne platform, such as a ship, a steamer, or a motorboat. Alternatively, the sensor platform may be an airborne platform, such as a drone, a helicopter, a jet aircraft, or a balloon. Alternatively, the sensor platform may be a satellite-borne platform, for example, a satellite.

The sensor may be a radar sensor, for example, a millimeter wave radar or a laser radar. Alternatively, the sensor may be a sonar or ultrasonic sensor. Alternatively, the sensor may be a visual sensor or an imaging sensor, such as a camera, a camera, or an imaging radar such as a laser radar and a synthetic aperture radar. Alternatively, the sensor may be a direction finding sensor capable of measuring a frequency shift. The direction finding sensor obtains radial velocity information by measuring a frequency shift of a received signal relative to a known frequency.

It should be further noted that physical composition of the sensor herein may be one or more physical sensors. For example, each physical sensor of the one or more physical sensors may separately measure an azimuth angle, a pitch angle, and a radial velocity, or the azimuth angle, the pitch angle, and the radial velocity may be derived from measurement data of the one or more physical sensors. This is not limited herein.

The sensor can perform measurement on a surrounding target (for example, a target stationary relative to a reference system or a target moving relative to the reference system, an obstacle, or a building), to obtain measurement data of the surrounding target. For example, a radar is used as an example. As shown in FIG. 2, the measurement data may include one or more of a distance r of the target relative to the sensor, an azimuth angle $\theta$ of the target relative to the sensor, a pitch angle $\varphi$ of the target relative to the sensor, a radial velocity $\dot{r}$ of the target relative to the sensor, and a scattering cross section of the target relative to the sensor.

The following further describes a motion state determining method and a motion state determining apparatus provided in this application.

FIG. 3 is a schematic flowchart of a motion state determining method according to an embodiment of this application. The method may be performed by a sensor system, a fusion perception system, or a planning/control system integrated with the foregoing systems, such as an assisted driving or autonomous driving system. Alternatively, the method may be performed by software or hardware (for example, a motion state determining apparatus connected wirelessly or wiredly to a corresponding sensor or integrated with a corresponding sensor). The following different execution steps may be implemented in a centralized manner or in a distributed manner. As shown in FIG. 3, the motion state determining method includes the following step 301 and step 302.

301: Determine a weight of a grid cell in a velocity grid $W_1$ based on measurement data from a sensor.

In step 301, the measurement data from the sensor includes a velocity measurement value, where the velocity measurement value may be a radial velocity measurement value, for example, a radial velocity r of a surrounding object or target relative to the sensor. Optionally, the measurement data may further include an angle measurement value, for example, an azimuth angle $\theta$ and/or a pitch angle $\varphi$ of the target relative to the sensor. Optionally, the measurement data from the sensor may further include one or more of a distance r of the target relative to the sensor and a scattering cross section of the target relative to the sensor. In addition, the measurement data from the sensor may further include a direction cosine value of the surrounding object or target relative to the sensor. The measurement value may also be information obtained after original measurement data from the sensor is transformed. For example, the direction cosine value may be obtained from the azimuth angle and/or the pitch angle of the target relative to the sensor, or may be obtained from a Cartesian coordinate position and the distance of the target. Specifically, a correspondence between a direction cosine and an azimuth angle and/or a pitch angle is as follows:

For a two-dimensional velocity vector:

$\Lambda_x = cos\theta$, and $\Lambda_y = sin\theta$, where
$\Lambda_x, \Lambda_y$ are direction cosines, and $\theta$ is the azimuth angle.

For a three-dimensional velocity vector:

$\Lambda_x = cos\varphi cos\theta$, $\Lambda_y = cos\varphi sin\theta$, and $\Lambda_z = sin\varphi$, where

$\Lambda_x, \Lambda_y$ and $\Lambda_z$ are direction cosines, $\theta$ is the azimuth angle, and $\varphi$ is the pitch angle. In a formula or calculation manner described below, the direction cosine and the azimuth angle and/or the pitch angle may be interchanged according to the foregoing correspondence.

Alternatively, the measurement data in step 301 may be other data obtained through measurement by the sensor. This is not limited in this embodiment of this application.

The measurement data from the sensor may be one frame of measurement data from the sensor. When a radar or sonar sensor is used as an example, the sensor may transmit a signal periodically or aperiodically and obtain measurement data from a received echo signal. For example, the signal transmitted may be a linear frequency modulation signal. Distance information of the target may be obtained based on a delay of the echo signal. The radial velocity measurement value of the target relative to the sensor may be obtained based on phase differences between a plurality of echo signals. The angle measurement value of the target relative to the sensor may be obtained based on a plurality of transmit and/or receive antenna array geometries of the sensor. In addition, the sensor may also be a passive sensor, and passively receives a signal within a period of time to obtain the angle measurement value of the target relative to the sensor. In addition, an offset of a frequency of a received signal relative to a reference frequency may also be measured to obtain the radial velocity measurement value of the target. It may be understood that, due to a diversity of objects or targets in an ambient environment, the sensor may obtain a plurality of pieces of measurement data within a field of view of the sensor for subsequent use. The sensor may perform periodic measurement on the surrounding target with a fixed time length as a cycle, or may perform triggered measurement on a specified area based on a specified time window. Regardless of the periodic measurement or the triggered measurement, the sensor may obtain one or more frames of measurement data. Each frame of measurement data may include a plurality of pieces of measurement data, and each frame of measurement data may be considered as a "snapshot" of the objects or the targets in the ambient environment taken by the sensor.

The velocity grid $W_1$ includes a plurality of grid cells, each grid cell in the plurality of grid cells corresponds to one velocity vector, and each velocity vector includes at least one velocity component.

Optionally, the velocity vector corresponding to each grid cell may be determined based on an index of the grid cell in each dimension and a resolution cell size in each dimension.

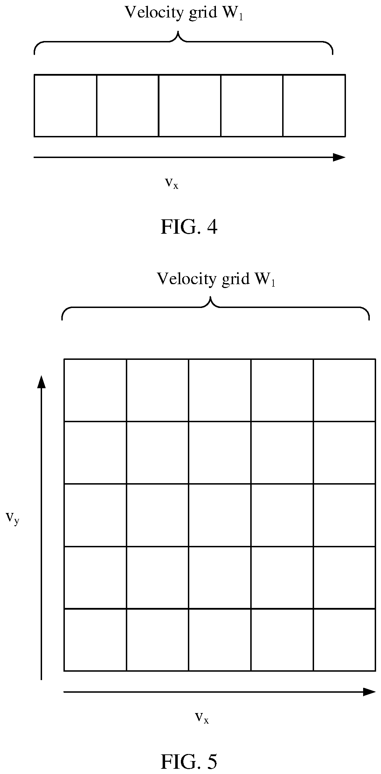

The velocity grid $W_1$ may be a one-dimensional grid. In this case, the velocity vector corresponding to the grid cell includes one velocity component. For example, as shown in FIG. 4, the velocity grid $W_1$ is a one-dimensional grid including five grid cells. Each grid cell corresponds to one velocity vector, and the velocity vector includes one x-axis velocity component $v_x$. Alternatively, the velocity vector includes one y-axis velocity component $v_y$, or the velocity vector includes one z-axis velocity component $v_z$. That the velocity vector in the velocity grid $W_1$ shown in FIG. 4 includes the velocity component $v_x$ is used as an example.

Each grid cell may be represented by an index i. A velocity vector corresponding to a grid cell i is $v_x(i)$. A resolution cell size of the one-dimensional velocity grid $W_1$ shown in FIG. 4 may be equal to an absolute value of a difference between velocity vectors corresponding to two adjacent grid cells, or a step length of a grid cell in the velocity grid $W_1$. For example, the resolution cell size of the velocity grid $W_1$ is 0.5 m/s (meters per second), and the velocity vector corresponding to the grid cell i $v_x(i) = 0.5 \cdot i$ m/s. It should be noted that a value range and a start value of the index may be flexibly set based on a requirement, and details are not described herein.

The velocity grid $W_1$ may be a two-dimensional grid. In this case, the velocity vector corresponding to the grid cell includes two velocity components. For example, as shown in FIG. 5, the velocity grid $W_1$ includes 25 grid cells. Each grid cell corresponds to one velocity vector, and the velocity vector includes an x-axis velocity component $v_x$ and a y-axis velocity component $v_y$. Alternatively, the velocity vector includes a y-axis velocity component $v_y$ and a z-axis velocity component $v_z$, or the velocity vector includes an x-axis velocity component $v_x$ and a z-axis velocity component $v_z$. That the velocity vector in the velocity grid $W_1$ shown in FIG. 5 includes the velocity component $v_x$ and the velocity component $v_y$ is used as an example. As shown in FIG. 5, the velocity grid $W_1$ is a two-dimensional grid, including two dimensions $v_x$ and $v_y$. The velocity grid $W_1$ includes five grid cells in the $v_x$ dimension, where i=0, 1, ..., 4; and includes five grid cells in the $v_y$ dimension, where j=0, 1, ..., 4. Therefore, the velocity grid $W_1$ includes 25 grid cells in total.

Each grid cell may be represented by an index (i, j). For example, an index value i=0, 1, ..., $N_{vx}$-1, and j=0, 1, ..., $N_{vy}$-1. $N_{vx}$ is a resolution cell quantity of the velocity grid $W_1$ in the $v_x$ dimension; and $N_{vy}$ is a resolution cell quantity of the velocity grid $W_1$ in the $v_y$ dimension, where $N_{vx}$ and $N_{vy}$ are positive integers. A velocity vector corresponding to a grid cell (i, j) is $[v_x(i) \ v_y(j)]^T$, where $[]^T$ represents transposition of a matrix or vector. A resolution cell size of the velocity grid $W_1$ is $v_{x,res}$ in the $v_x$ dimension, and a resolution cell size of the velocity grid $W_1$ is $v_{y,res}$ in the $v_y$ dimension, where $v_{x,res}$ and $v_{y,res}$ may be the same or may be different. Obviously, $v_{x,res}$ may be equal to an absolute value of a difference between velocity components $v_x$ corresponding to two adjacent grid cells of the velocity grid $W_1$ in the $v_x$ dimension, or a step length of the velocity grid $W_1$ in the $v_x$ dimension. $v_{y,res}$ may be equal to an absolute value of a difference between velocity components $v_y$ corresponding to two adjacent grid cells of the velocity grid $W_1$ in the $v_y$ dimension, or a step length of the velocity grid $W_1$ in the $v_y$ dimension. For example, that $v_{x,res}$ and $v_{y,res}$ are 0.5 m/s and 0.25 m/s respectively is used as an example. The velocity vector corresponding to the grid cell (i, j) is $[v_x(i)\ v_y(j)]^T$, namely $[0.5 \cdot i\ 0.25 \cdot j]^T$. Other resolution cell sizes apply in a same manner. It should be noted that a value range and a start value of the index and a resolution cell size in each dimension may be flexibly set based on a requirement, and details are not described herein.

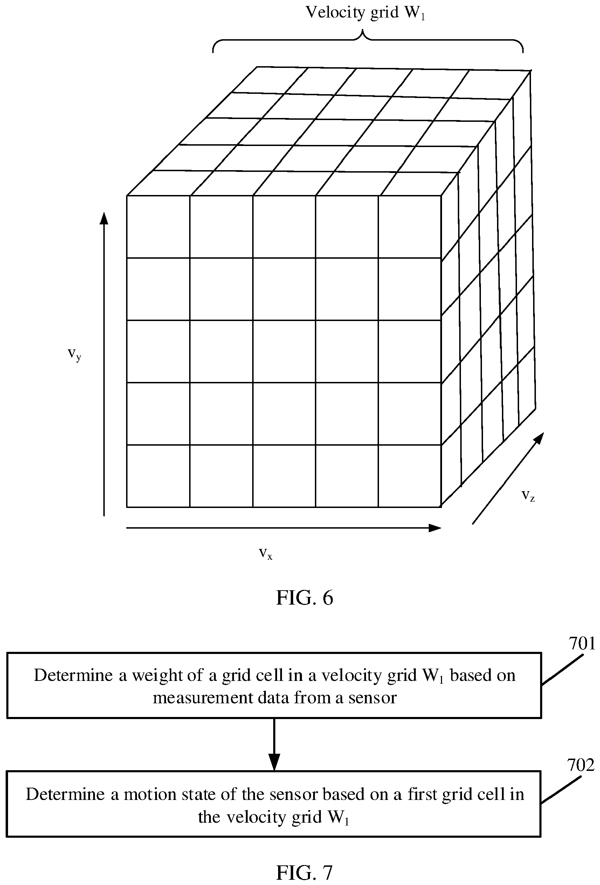

The velocity grid $W_1$ may be a three-dimensional grid. In this case, the velocity vector corresponding to the grid cell includes three velocity components. For example, as shown in FIG. 6, the velocity grid $W_1$ includes 125 grid cells. Each grid cell corresponds to one velocity vector, and the velocity vector includes an x-axis velocity component $v_x$, a y-axis velocity component $v_y$, and a z-axis velocity component $v_z$. As shown in FIG. 6, the velocity grid $W_1$ is a three-dimensional grid, including three dimensions $v_x$, $v_y$, and $v_z$. The velocity grid $W_1$ includes five grid cells in the $v_x$ dimension, where i=0, 1, ..., 4; includes five grid cells in the $v_y$ dimension, where j=0, 1, ..., 4; and includes five grid cells in the $v_z$ dimension, where k=0, 1, ..., 4. Therefore, the velocity grid $W_1$ includes 125 grid cells in total.

Each grid cell may be represented by an index (i, j, k). For example, an index value i=0, 1, ..., $N_{vx}$-1, j=0, 1, ..., $N_{vy}$-1, and k=0, 1, ..., $N_{vz}$-1. $N_{vx}$ is a resolution cell quantity of the velocity grid $W_1$ in the $v_x$ dimension; $N_{vy}$ is a resolution cell quantity of the velocity grid $W_1$ in the $v_y$ dimension; and $N_{vz}$ is a resolution cell quantity of the velocity grid $W_1$ in the $v_z$ dimension, where $N_{vx}$, $N_{vy}$, and $N_{vz}$ are positive integers. A velocity vector corresponding to a grid cell (i, j, k) is $[v_x(i)\ v_y(j)\ v_z(k)]^T$, where $[]^T$ represents transposition of a matrix or vector. A resolution cell size of the velocity grid $W_1$ is $v_{x,res}$ in the $v_x$ dimension, a resolution cell size of the velocity grid $W_1$ is $v_{y,res}$ in the $v_y$ dimension, and a resolution cell size of the velocity grid $W_1$ is $v_{z,res}$ in the $v_z$ dimension, where $v_{x,res}$, $v_{y,res}$, and $v_{z,res}$ may be the same or may be different. $v_{x,res}$ may be equal to an absolute value of a difference between velocity components $v_x$ corresponding to two adjacent grid cells of the velocity grid $W_1$ in the $v_x$ dimension, or a step length of the velocity grid $W_1$ in the $v_x$ dimension. $v_{y,res}$ may be equal to an absolute value of a difference between velocity components $v_y$ corresponding to two adjacent grid cells of the velocity grid $W_1$ in the $v_y$ dimension, or a step length of the velocity grid $W_1$ in the $v_y$ dimension. $v_{z,res}$ may be equal to an absolute value of a difference between velocity components $v_z$ corresponding to two adjacent grid cells of the velocity grid $W_1$ in the $v_z$ dimension, or a step length of the velocity grid $W_1$ in the $v_z$ dimension. For example, that $v_{x,res}$, $v_{y,res}$, and $v_{z,res}$ are 0.5 m/s, 1.0 m/s, and 2.5 m/s respectively is used as an example. The velocity vector corresponding to the grid cell (i, j, k) is $[v_x(i)\ v_y(j)\ v_z(k)]^T = [0.5 \cdot i\ 1.0 \cdot j\ 2.5 \cdot k]^T$. Resolution cell sizes of other grid cells apply in a same manner. It should be noted that a value range and a start value of the index and a resolution cell size in each dimension may be flexibly set based on a requirement, and details are not described herein.

The velocity grid $W_1$ may be used to determine a velocity vector of the sensor, where a grid cell in the velocity grid $W_1$ corresponds to a candidate velocity vector of the sensor; or the velocity grid $W_1$ may be used to determine a sensor-measured velocity of a target, where a grid cell in the velocity grid $W_1$ corresponds to a candidate velocity vector of the target. The sensor-measured target may be a target stationary relative to a reference system. For example, a vehicle or unmanned aerial vehicle sensor is used as an example. The reference system may be a geodetic coordinate system, or an inertial coordinate system moving uniformly relative to the earth, and the target may be an object in an ambient environment, such as a guardrail, a curb, a lamp pole, or a building. When a ship-borne sensor is used as an example, the target may be a water surface buoy, a lighthouse, a shoreline, or an island building. When a satellite-borne sensor is used as an example, the target reference object may be a reference object that is stationary or moving uniformly relative to a fixed star or a satellite, such as a spaceship.

In an optional implementation, the velocity grid $W_1$ is determined based on at least one of a resolution cell size of the grid and a reference velocity vector. Specifically, the velocity grid $W_1$ is determined based on at least one of the reference velocity vector and a resolution cell size of the velocity grid $W_1$ in each dimension direction. The reference velocity vector may be a velocity vector obtained from another apparatus or another sensor. For example, the reference velocity vector may be a velocity vector of the sensor obtained by using an IMU, or the reference velocity vector is obtained by using a controller area network (controller area network, CAN) bus of a vehicle in which the sensor is located. The reference velocity vector may alternatively be a preset velocity vector initial value of the sensor or the target. For example, the velocity vector initial value may be a velocity vector value determined by using an initially set parameter such as the resolution cell size according to the method provided in the present invention.

Optionally, the velocity grid $W_1$ may be determined based on at least one of the resolution cell size and the reference velocity vector, and based on at least one of a resolution cell quantity, a minimum velocity of a velocity component, and a velocity range of the velocity component. Specifically, the velocity grid $W_1$ is determined based on at least one of the reference velocity vector and the resolution cell size of the velocity grid $W_1$ in each dimension direction, and at least one of a resolution cell quantity of the velocity grid $W_1$ in each dimension, a minimum velocity of each velocity component of the velocity grid $W_1$, and a velocity range of the velocity component of the velocity grid $W_1$.

That is, the velocity grid $W_1$ may also be determined before step 301 is performed. The following separately describes in detail three specific manners of determining the velocity grid $W_1$.

Manner 1: The velocity grid $W_1$ is determined based on the reference velocity vector and the resolution cell size and quantity of the velocity grid $W_1$ in each dimension.

The reference velocity vector may be obtained from another sensor, such as an IMU, or another device, such as a device of a platform on which the sensor is located, such as a CAN bus of a vehicle in which the sensor is located. The reference velocity vector may alternatively be a preset velocity vector initial value of the sensor or the target. For example, the velocity vector initial value may be a velocity vector value determined by using an initially set parameter such as the resolution cell size according to the method provided in the present invention.

The resolution cell size and quantity of the velocity grid $W_1$ in each dimension may be preset or set according to a predefined rule, may be input by a user, or may be set by default.

The reference velocity vector is equal to a velocity vector corresponding to a grid cell at a specified position in the velocity grid $W_1$ or is between velocity vectors corresponding to two or more grid cells at specified positions. For example, the reference velocity vector is equal to a velocity vector corresponding to a grid cell located at a central position or near a central position of the velocity grid $W_1$, or the reference velocity vector is between velocity vectors corresponding to two or more grid cells around a central position of the velocity grid $W_1$.

That the velocity grid $W_1$ is a two-dimensional grid is used as an example. The velocity vector corresponding to the grid cell includes two velocity components $v_x$ and $v_y$. Two components of the reference velocity vector are $v_{x,ref}$ and $v_{y,ref}$. The reference velocity vector is equal to a velocity vector corresponding to a grid cell whose position is ($i_0$, $j_0$) in the velocity grid. The velocity components corresponding to each grid cell (i, j) in the velocity grid $W_1$ are respectively:

$$v_x\left(\mathrm{i}\right) = v_{x,ref} + (\mathrm{i}-\mathrm{i_0})\cdot v_{x,res},$$

where i=0, 1, ..., and $N_{vx}$-1 (1); and

$$v_y\left(\mathrm{j}\right) = v_{y,ref} + \cdot(\mathrm{j}-\mathrm{j_0})\cdot v_{y,res},$$

where j=0, 1, ..., and $N_{vy}$-1 (2), where $v_{x,res}$ and $v_{y,res}$ are resolution cell sizes of the velocity grid $W_1$ in a $v_x$ dimension and a $v_y$ dimension respectively. $N_{vx}$ and $N_{vy}$ are resolution cell quantities of the velocity grid $W_1$ in the $v_x$ dimension and the $v_y$ dimension respectively.

Optionally, the reference velocity vector may be equal to the velocity vector corresponding to the grid cell ($i_0$, $j_0$), where $i_0$ may be 0, 1, ..., $N_{vx}$-1, and $j_0$ may be 0, 1, ..., $N_{vy}$-1. Preferably, the grid cell ($i_0$, $j_0$) is located at or near a central position of the velocity grid. For example, io may be $N_{vx}$/2, $N_{vx}$/2-1, or $N_{vx}$/2+1, and $j_0$ may be $N_{vy}$/2, $N_{vy}$/2-1, or $N_{vy}$/2+1.

The resolution cell sizes of the velocity grid $W_1$ in the $v_x$ dimension and the $v_y$ dimension are respectively $v_{x,res}$ =2.5 m/s, and $v_{y,res}$ =0.5 m/s. The resolution cell quantities of the velocity grid $W_1$ in the $v_x$ dimension and the $v_y$ dimension are both 25. Therefore, a central grid cell in the velocity grid $W_1$ is a grid cell (12, 12). Assuming that the reference velocity vector is [10 2]$^T$, a velocity vector corresponding to the grid cell (12, 12) is [10 10]$^T$. The velocity components corresponding to the grid cell (i, j) are respectively:

$$v_x\left(\mathrm{i}\right) = 10 + (\mathrm{i}-12)\cdot 2.5 = -20 + \mathrm{i}\cdot 2.5,$$

where i=0, 1, ..., 24; and

$$v_y\left(\mathrm{j}\right) = 2 + (\mathrm{j}-12)\cdot 0.5 = -4 + \mathrm{j}\cdot 0.5,$$

where j=0, 1, ..., 24.

Velocity vectors corresponding to all other grid cells can be determined based on the same principle.

That the velocity grid $W_1$ is a three-dimensional grid is used as an example. Velocity components corresponding to each grid cell (i, j, k) in the velocity grid may be respectively:

$$v_x\left(\mathrm{i}\right) = v_{x,ref} + (\mathrm{i}-\mathrm{i_0})\cdot v_{x,res},$$

where i=0, 1, ..., $N_{vx}$-1 (3);

$$v_y\left(\mathrm{j}\right) = v_{y,ref} + (\mathrm{j}-\mathrm{j_0})\cdot v_{y,res},$$

where j=0, 1, ..., $N_{vy}$-1 (4); and

$$v_z\left(k\right) = v_{z,ref} + (k-k_0) \cdot v_{z,res},$$

where k=0, 1, ..., $N_{vz}$-1 (5), where

$v_{x,res}$, $v_{y,res}$, and $v_{z,res}$ are resolution cell sizes of the velocity grid $W_1$ in a $v_x$ dimension, a $v_y$ dimension, and a $v_z$ dimension respectively. $N_{vx}$, $N_{vy}$, and $N_{vz}$ are resolution cell quantities of the velocity grid $W_1$ in the $v_x$ dimension, the $v_y$ dimension, and the $v_z$ dimension respectively. The reference velocity vector $[v_{x,ref}\ v_{y,ref}\ v_{z,ref}]^T$ is equal to a velocity vector corresponding to a grid cell ($i_0$, $j_0$, $k_0$), where $i_0$ may be 0, 1, ..., $N_{vx}$-1, $j_0$ may be 0, 1, ..., $N_{vy}$-1, and ko may be 0, 1, ..., $N_{vz}$-1. Preferably, the grid cell ($i_0$, jo, ko) is located at or near a central position of the velocity grid. For example, io may be $N_{vx}$/2, $N_{vx}$/2-1, or $N_{vx}$/2+1, $j_0$ may be $N_{vy}$/2, $N_{vy}$/2-1, or $N_{vy}$/2+1, and $k_0$ may be $N_{vz}$/2, $N_{vz}$/2-1, or $N_{vz}$/2+1.

Similarly, one-dimensional and three-dimensional velocity grids $W_1$ may be determined by using a method similar to the foregoing method, and details are not described herein.

Manner 2: The velocity grid $W_1$ is determined based on a minimum value of each velocity component of the velocity grid $W_1$, and the resolution cell size and quantity of the velocity grid $W_1$ in each dimension.

The minimum value of the velocity component of the velocity grid $W_1$, and the resolution cell size and quantity of the velocity grid $W_1$ in each dimension may be input by a user, or may be set by default.

That the velocity grid $W_1$ is a two-dimensional grid is used as an example. A velocity vector corresponding to each grid cell (i, j) includes two velocity components, where $v_x(i) = v_{x,min} + i \cdot v_{x,res}$, and i=0, 1, ..., $N_{vx}$-1; and $v_y(j) = v_{y,min} + j \cdot v_{y,res}$, and j=0, 1, ..., $N_{vy}$-1. $v_{x,min}$ and $v_{y,min}$ are minimum values of the velocity component $v_x$ and the velocity component $v_y$ of the velocity grid $W_1$ respectively. $N_{vx}$ and $N_{vy}$ are resolution cell quantities of the velocity grid $W_1$ in a $v_x$ dimension and a $v_y$ dimension respectively. $v_{x,res}$ and $v_{y,res}$ are resolution cell sizes of the velocity grid $W_1$ in the $v_x$ dimension and the $v_y$ dimension respectively.

An example in which $v_{x,min}$=-20 m/s, $v_{y,min}$ =-10 m/s, $v_{x,res}$ =0.25 m/s, and $v_{y,res}$ =0.5 m/s is used. As shown in FIG. 5, when $N_{vx}$ =40, and $N_{vx}$ =20, the velocity vector corresponding to the grid cell (i, j) is $[v_x(i)\ v_y(j)]^T$=[-20+0.25·i-10+0.5·j]$^T$, where i=0, 1, ..., $N_{vx}$-1, and j=0, 1, ..., $N_{vy}$-1.

Manner 3: The velocity grid $W_1$ is determined based on a value range of each velocity component of the velocity grid $W_1$, and the resolution cell size of the velocity grid $W_1$ in each dimension.

The range of the velocity component of the velocity grid $W_1$, and the resolution cell size of the velocity grid $W_1$ in each dimension may be input by a user, or may be set by default. For example, the range of each velocity component of the velocity grid $W_1$ may be determined based on a range of each component of a velocity vector of a sensor platform; or the range of each velocity component of the velocity grid $W_1$ may be determined based on a range of each component of a velocity vector of a target measured by the sensor.

That the velocity grid $W_1$ is a two-dimensional grid is used as an example. A velocity vector corresponding to each grid cell (i, j) includes two velocity components $v_x$ and $v_y$. Value ranges of the velocity components are respectively $[v_{x,min}, v_{y,min}]$ and $[v_{x,max}, v_{y,max}]$. Resolution cell sizes of the velocity grid $W_1$ in a $v_x$ dimension and a $v_y$ dimension are respectively $v_{x,res}$ and $v_{y,res}$. The velocity vectors corresponding to the grid cell (i, j) are respectively:

$$v_x\left(i\right) = v_{x,min} + i \cdot v_{x,res},$$

$$v_y\left(j\right) = v_{y,min} + j \cdot v_{y,res},$$

where i=0, 1, ..., $N_{vx}$-1 (6); and where j=0, 1, ..., $N_{vy}$-1 (7), where $N_{vx}$=1+( $v_{x,max}$ - $v_{x,min}$ )/ $v_{x,res}$ and $N_{vy}$=1+( $v_{y,max}$ - $v_{y,min}$ )/ $v_{y,res}$ are respectively resolution cell quantities of the velocity grid $W_1$ in the $v_x$ dimension and the $v_y$ dimension.

When a vehicle sensor is used as an example, a velocity range corresponding to $v_x$ may be [-30, 40] m/s, and a velocity range corresponding to $v_y$ is [-10, 10] m/s. The resolution cell sizes in the $v_x$ dimension and the $v_y$ dimension are respectively $v_{x,res}$ =2 m/s, and $v_{y,res}$ =1 m/s. It can be determined that the resolution cell quantities of the velocity grid $W_1$ in the $v_x$ dimension and the $v_y$ dimension are respectively $N_{vx}$=36 and $N_{vx}$=21. Therefore, it can be determined that velocity components corresponding to each grid cell in the velocity grid $W_1$ are respectively $v_x(i)$ =-20+2·i, where i=0, ..., 35; and $v_y(j)$ =-10+1·j, where j=0, ..., 20.

In this embodiment of this application, the weight of the grid cell in the velocity grid $W_1$ is determined based on the measurement data from the sensor.

Specifically, for one piece of measurement data from the sensor, one weighted increment may be determined for one grid cell in the velocity grid $W_1$, and a weight of the grid cell in the velocity grid $W_1$ is determined by accumulating weighted increments corresponding to one or more pieces of measurement data from the sensor. In this case, the weight of the grid cell is obtained in a cumulative sum form.

For example, a two-dimensional velocity grid is used as an example. A weight of a grid cell $(i,j)$ in the velocity grid $W_1$ may be expressed as:

$$w(i,j) = \sum_{n=1}^{N_m} w_n(i,j) \quad (8),$$

where

$w(i, j)$ is the weight of the grid cell $(i,j)$, $w_n(i,j)$ is a weighted increment that is of the grid cell $(i,j)$ and that is determined based on an $n^{th}$ piece of measurement data, and $N_m$ is a quantity of measurement data.

For example, a three-dimensional velocity grid is used as an example. A weight of a grid cell $(i,j, k)$ in the velocity grid may be expressed as:

$$w(i,j,k) = \sum_{n=1}^{N_m} w_n(i,j,k) \quad (9),$$

where

$w(i,j,k)$ is the weight of the grid cell $(i,j,k)$, $w_n(i,j,k)$ is a weighted increment that is of the grid cell $(i,j, k)$ and that is determined based on an $n^{th}$ piece of measurement data, and $N_m$ is a quantity of measurement data.

Alternatively, specifically, for one piece of measurement data from the sensor, one weighting factor may be determined for one grid cell in the velocity grid $W_1$, and a weight of the grid cell in the velocity grid $W_1$ is determined by multiplying weighting factors corresponding to one or more pieces of measurement data from the sensor. In this case, the weight of the grid cell is obtained in a product form.

For example, a two-dimensional velocity grid is used as an example. A weight of a grid cell $(i,j)$ in the velocity grid may be expressed as:

$$w(i,j) = \prod_{n=1}^{N_m} f_n(i,j) \quad (10),$$

where

$w(i,j)$ is the weight of the grid cell $(i,j)$, $f_n(i,j)$ is a weighting factor that is of the grid cell $(i,j)$ and that is determined based on an $n^{th}$ piece of measurement data, and $N_m$ is a quantity of measurement data.

For example, a three-dimensional velocity grid is used as an example. A weight of a grid cell $(i,j, k)$ in the velocity grid may be expressed as:

$$w(i,j,k) = \prod_{n=1}^{N_m} f_n(i,j,k) \quad (11),$$

where

$w(i,j,k)$ is the weight of the grid cell $(i,j,k)$, $f_n(i,j,k)$ is a weighting factor that is of the grid cell $(i,j, k)$ and that is determined based on an $n^{th}$ piece of measurement data, and $N_m$ is a quantity of measurement data.

In this application, the weight of the grid cell may be obtained in the foregoing cumulative sum form or product form.

Specifically, for one piece of measurement data from the sensor, one weighted increment or weighting factor may be determined for each grid cell in the velocity grid $W_1$. Alternatively, some corresponding grid cells in the velocity grid $W_1$ may be determined based on one piece of measurement data from the sensor, so that one weighted increment or weighting factor is determined for a corresponding grid cell.

The following describes in detail how to determine some corresponding grid cells in the velocity grid $W_1$ based on one piece of measurement data from the sensor.

That the velocity grid $W_1$ is a two-dimensional grid is used as an example. A grid cell that is in the velocity grid $W_1$ and that corresponds to one piece of measurement data may be determined in the following manner 1.

Manner 1: A second grid cell $(i, j)$ in the velocity grid $W_1$ is determined based on the $n^{th}$ piece of measurement data, and the second grid cell $(i, j)$ is weighted based on a weighted increment or weighting factor, where a velocity vector corresponding to the second grid cell $(i, j)$ satisfies

$$\left| v_x(i) \cdot \cos\theta_n + v_y(j) \cdot \sin\theta_n + \dot{r}_n \right| \leq T_1 \quad (12).$$

where

$\theta_n$ and $\dot{r}_n$ are respectively a measurement value of an azimuth angle and a measurement value of a radial velocity that are included in the n$^{th}$ piece of measurement data, $v_x$(i) and $v_y$(j) are respectively an x-axis velocity component and a y-axis velocity component of the velocity vector corresponding to the grid cell (i, j), and $T_1$ is a non-negative threshold. For example, $T_1$ may be maximum or minimum values of resolution cell sizes $v_{x,res}$ and $v_{y,res}$ .

If the n$^{th}$ piece of measurement data comes from a target stationary relative to a reference system, a radial velocity $\dot{r}_s$ of the sensor relative to the target stationary relative to the reference system and a radial velocity $\dot{r}_n$ of the target stationary relative to the reference system relative to the sensor are opposite to each other, that is, $\dot{r}_s = -\dot{r}_n$. If the velocity vector of the sensor is $[v_x(i)\ v_y(j)]^T$, $\dot{r}_s = v_x(i) \cdot cos\theta_n + v_y(j) \cdot sin\theta_n - n_{\dot{r}}$, where $n_{\dot{r}}$ is an error caused by measurement noise and resolution cell quantization noise. Therefore, if the n$^{th}$ piece of measurement data comes from the target stationary relative to the reference system, the velocity vector corresponding to the grid cell (i, j) that satisfies the inequation (12) is more likely to be the velocity vector of the sensor. Therefore, the grid cell (i, j) that satisfies the foregoing inequation is weighted, and other low-probability grid cells are ignored, to effectively reduce grid cells whose weighted increments or weighting factors need to be calculated, and effectively reduce a calculation amount.

Optionally, in an implementation, for the n$^{th}$ piece of measurement data, the grid cell (i, j) that satisfies the foregoing inequation (12) may be obtained by traversing grid cells in the velocity grid. Specifically, an n$^{th}$ piece of measurement data in one frame of measurement data from the sensor includes at least a measurement value $\theta_n$ of an azimuth angle and a measurement value $\dot{r}_n$ of a radial velocity. For the grid cell (i, j) in the velocity grid, if the velocity vector $[v_x(i)\ v_y(j)]^T$ corresponding to the grid cell (i, j) satisfies the inequation (12), the weighted increment $w_n(i,j)$ or weighting factor $f_n(i,j)$ corresponding to the grid cell (i, j) is calculated. Otherwise, the weighted increment $w_n(i,j)$ or weighting factor $f_n(i,j)$ corresponding to the grid cell (i, j) does not need to be calculated; or equivalently, the weighted increment $w_n(i,j)$ corresponding to the grid cell (i, j) is set to 0 or a constant, or the weighting factor $f_n(i,j)$ is set to 1 or a constant.

Optionally, in another implementation, for the n$^{th}$ piece of measurement data, resolution cells of one dimension in the velocity grid may be traversed, and resolution cells of another dimension may be determined by using the foregoing inequation (12), to obtain the grid cell that satisfies the foregoing inequation (12) and calculate the weighted increment or weighting factor corresponding to the grid cell.

That the velocity grid is a two-dimensional grid is used as an example. Resolution cells i in a $v_x$ dimension may be traversed. For example, i=0, ..., $N_{vx}$-1. For each resolution cell i, one or more resolution cells j in a $v_y$ dimension may be determined, where the resolution cell j satisfies

$$j = \left\lceil \frac{\dot{r}_n - v_x(i) \cdot cos\theta_n}{v_{y,res} \cdot sin\theta_n} \right\rceil, \quad j = \left\lfloor \frac{\dot{r}_n - v_x(i) \cdot cos\theta_n}{v_{y,res} \cdot sin\theta_n} \right\rfloor, \text{ or } j = round\left( \frac{\dot{r}_n - v_x(i) \cdot cos\theta_n}{v_{y,res} \cdot sin\theta_n} \right) \quad (13).$$

Therefore, the grid cell (i, j) corresponding to the n$^{th}$ piece of measurement data is determined.

Alternatively, resolution cells j in a $v_y$ dimension may be traversed. For example, j=0, ..., $N_{vy}$-1. For each resolution cell j, one or more resolution cells i in a $v_x$ dimension may be determined, where the resolution cell i satisfies

$$i = \left\lceil \frac{\dot{r}_n - v_y(j) \cdot sin\theta_n}{v_{x,res} \cdot cos\theta_n} \right\rceil, \quad i = \left\lfloor \frac{\dot{r}_n - v_y(j) \cdot sin\theta_n}{v_{x,res} \cdot cos\theta_n} \right\rfloor, \text{ or } i = round\left( \frac{\dot{r}_n - v_y(j) \cdot sin\theta_n}{v_{x,res} \cdot cos\theta_n} \right) \quad (14).$$

Therefore, the grid cell (i, j) corresponding to the n$^{th}$ piece of measurement data is determined.

Alternatively, when $|sin\theta_n| \geq |cos\theta_n|$, the resolution cells i in the $v_x$ dimension are traversed, and one or more resolution cells j in the $v_y$ dimension are determined according to (13), to determine the grid cell (i, j) corresponding to the n$^{th}$ piece of measurement data; or when $|sin\theta_n| \leq |cos\theta_n|$, the resolution cells j in the $v_y$ dimension are traversed, and one or more resolution cells i in the $v_x$ dimension are determined according to (14), to determine the grid cell (i, j) corresponding to the n$^{th}$ piece of measurement data.

In the foregoing formula (13) or (14), $\lceil x \rceil$ indicates a rounding up operation, that is, taking a minimum integer not less than x; $\lfloor x \rfloor$ indicates a rounding down operation, that is, taking a maximum integer not greater than x; and $round(x)$ indicates a rounding off operation, that is, rounding off a decimal part of x to get an integer.

For example, as shown in FIG. 5, the velocity grid $W_1$ includes a total of 25 grid cells: a grid cell (0, 0) to a grid cell (4, 4). The grid cells (i, j) may be checked one by one, where i=0, 1, ..., 4, and j=0, 1, ..., 4. If the velocity vectors $v_x$(i) and $v_y$(j) corresponding to the grid cell (i, j) satisfy the inequation (12), a weighted increment or weighting factor corresponding to the grid cell (i, j) may be calculated. For another example, resolution cells i in the $v_x$ dimension may be checked one by one, where i=0, 1, ..., 4; and one or more resolution cells j in the $v_y$ dimension may be determined according to (13), to determine the grid cell (i, j) and calculate a weighted increment or weighting factor corresponding to the grid cell (i, j). For another example, resolution cells j in the $v_y$ dimension may be checked one by one, where j=0, 1, ..., 4; and one or more resolution cells i in the $v_x$ dimension may be determined according to (14), to determine the grid cell (i, j) and calculate a weighted increment or weighting factor corresponding to the grid cell (i, j). Alternatively, if $|sin\theta_n| \geq |cos\theta_n|$, resolution cells i in the $v_x$ dimension may be checked one by one, where i=0, 1, ..., 4; and one or more resolution cells j in the $v_y$ dimension may be determined according to (13). Otherwise, resolution cells j in the $v_y$ dimension may be checked one by one, where j=0, 1, ..., 4; and one or more resolution cells i in the $v_x$ dimension may be determined according to (14), to determine the grid cell (i, j) and calculate a weighted increment or weighting factor corresponding to the grid cell (i, j).

Similarly, for a given $n^{th}$ piece of measurement data, for example, including a measurement value of an azimuth angle, a measurement value of a pitch angle, and a measurement value of a radial velocity, a grid cell (i, j, k) that is in a three-dimensional velocity grid and that corresponds to the $n^{th}$ piece of measurement data can be obtained. Details are not described herein.

For the grid cell (i, j) in the velocity grid, if the velocity vector $[v_x(i)\ v_y(j)]^T$ corresponding to the grid cell (i, j) satisfies the inequation (12), (13), or (14), the weighted increment $w_n(i,j)$ or weighting factor $f_n(i,j)$ corresponding to the grid cell (i, j) is calculated. Otherwise, the weighted increment $w_n(i,j)$ or weighting factor $f_n(i,j)$ corresponding to the grid cell (i, j) does not need to be calculated; or equivalently, the weighted increment $w_n(i,j)$ corresponding to the grid cell (i, j) is set to 0 or a constant, or the weighting factor $f_n(i,j)$ is set to 1 or a constant.

The weighted increment or weighting factor of the second grid cell is described below.

It should be noted that following calculation of a weighted increment or weighting factor may be used for the second grid cell, or may be used for any grid cell in the velocity grid for the $n^{th}$ piece of measurement data.

Optionally, the weighted increment or weighting factor of the grid cell (i, j) may be a preset value. For example, the preset value may be 1, 2 or another preconfigured constant value.

Optionally, the weighted increment or weighting factor of the grid cell (i, j) may be determined based on the $n^{th}$ piece of measurement data. In this way, the weighting can be performed more precisely, and thus a motion state, especially the velocity vector, of the sensor, can be obtained more precisely.

Specifically, the weighted increment or weighting factor of the grid cell (i, j) may be an exponential function or a linear or a quadratic function of the $n^{th}$ piece of measurement data. For example, the exponential function may be an exponential probability density function or a normal probability density function. For another example, the linear or quadratic function may be a logarithmic form of an exponential probability density function, or a logarithmic form of a normal probability density function.

For example, for the $n^{th}$ piece of measurement data including measurement values of an azimuth angle and a radial velocity, the weighted increment $w_n(i,j)$ of the grid cell (i, j) may be

$$w_n(i,j) = a_0 exp\left(-\frac{1}{\beta_0} \cdot \left|\frac{v_x(i)\cdot cos\theta_n + v_y(j)\cdot sin\theta_n + \dot{r}_n}{\sigma}\right|\right) \quad (15),$$

$$w_n(i,j) = a_0 exp\left(-\frac{1}{\beta_0} \cdot \frac{\left|v_x(i)\cdot cos\theta_n + v_y(j)\cdot sin\theta_n + \dot{r}_n\right|^2}{\sigma^2}\right) \quad (16),$$

$$w_n(i,j) = ln(a_0) - \frac{1}{\beta_0} \cdot \left|\frac{v_x(i)\cdot cos\theta_n + v_y(j)\cdot sin\theta_n + \dot{r}_n}{\sigma}\right| \quad (17),$$

or

$$w_n(i,j) = ln(a_0) - \frac{1}{\beta_0} \cdot \frac{\left|v_x(i)\cdot cos\theta_n + v_y(j)\cdot sin\theta_n + \dot{r}_n\right|^2}{\sigma^2} \quad (18).$$

Optionally, for the $n^{th}$ piece of measurement data, the weighting factor $f_n(i,j)$ of the grid cell (i, j) may be

$$f_n(i,j) = a_0 exp\left(-\frac{1}{\beta_0} \cdot \left|\frac{v_x(i)\cdot cos\theta_n + v_y(j)\cdot sin\theta_n + \dot{r}_n}{\sigma}\right|\right) \quad (19),$$

or

$$f_n(i,j) = a_0 exp\left(-\frac{1}{\beta_0} \cdot \frac{|v_x(i) \cdot cos\theta_n + v_y(j) \cdot sin\theta_n + \dot{r}_n|^2}{\sigma^2}\right) \quad (20).$$

For formulas (15) to (20), $\sigma$ is a standard deviation, and $\sigma$ may be a preset constant. Alternatively, $\sigma$ can be obtained based on a measurement error of the radial velocity. For example, $\sigma$ can be obtained as follows:

$\sigma^2 = \sigma_{\dot{r}}^2 + \Delta \quad (21),$ (21), (21), where

$\sigma_{\dot{r}}^2$ is the measurement error of the radial velocity, and $\triangle$ is a compensation item. $\triangle$ may be a preset constant. Alternatively, $\triangle$ may be determined based on the resolution cell size of the velocity grid $W_1$. For example, $\triangle$ can be obtained according to the following formula: $\Delta = \left[(v_x^2(i) + \sigma_{vx}^2)sin^2(\theta_n) + (v_y^2(j) + \sigma_{vy}^2)cos^2(\theta_n) - v_x(i) \cdot v_y(j) \cdot sin(2\theta_n)\right] \cdot \sigma_\theta^2 \quad (22),$ (22),, where

$\sigma_\theta^2$ is a variance of a measurement error of the azimuth angle, and $\sigma_{vx}^2$ and $\sigma_{vy}^2$ are variances of quantization errors of the velocity grid in dimensions $V_x$ and $V_y$. For example, $\sigma_{vx}^2$ and $\sigma_{vy}^2$ may be respectively

$$\sigma_{vx}^2 = \frac{1}{12}v_{x,res}^2, \sigma_{vy}^2 = \frac{1}{12}v_{y,res}^2.$$

$v_{x,res}$ and $v_{y,res}$ are the resolution cell sizes of the velocity grid $W_1$ in the $v_x$ dimension and the $v_y$ dimension respectively. $\alpha_0$ and $\beta_0$ are configuration parameters. For example, $a_0 = \frac{1}{\sqrt{2\pi} \cdot \sigma}$ , and $\beta_0 = 2$.

Optionally, the weighted increment or weighting factor of the grid cell (i, j) may be determined based on the $n^{th}$ piece of measurement data and distribution of a scattering section corresponding to a preset target type, where the $n^{th}$ piece of measurement data includes a measurement value of the scattering section.

Optionally, the distribution of the scattering section corresponding to the preset target type may be determined based on an average value and a standard deviation.

The scattering section may be a radar cross-section (radar cross-section, RCS). Alternatively, the scattering section may be a scattering section of a sonar or ultrasonic sensor. The distribution of the scattering section corresponding to the preset target type may be determined by collecting measurement values of various targets in various scenarios. For example, the distribution of the scattering section corresponding to the preset target type may be obtained based on measurement data of targets involved in traffic, such as a guardrail, a curb, a lamp pole and a nearby building, and a target moving relative to a reference system, such as a vehicle and a pedestrian.

In this way, in addition to using a velocity and an angle measurement value of the target, a scattering cross section feature of the target can be used, so that the weighting can be performed more precisely by using a feature difference of the target, and thus the motion state, especially the velocity vector, of the sensor, can be obtained more precisely.

Specifically, a scattering cross section feature item included in the weighted increment or weighting factor of the grid cell (i, j) may be an exponential function or a linear or a quadratic function of the measurement value of the scattering cross section in the $n^{th}$ piece of measurement data. For example, the exponential function may be an exponential probability density function or a normal probability density function. For another example, the linear or quadratic function may be a logarithmic form of an exponential probability density function, or a logarithmic form of a normal probability density function.

For example, for the $n^{th}$ piece of measurement data, the weighted increment $w_n(i,j)$ of the grid cell (i, j) may be

$$w_n(i,j) = w'_n(i,j) \cdot \sum_c \left[a_c \cdot exp\left(-\frac{1}{\beta_c} \cdot \left|\frac{CS_n - \overline{CS}(c)}{\sigma_{CS(c)}}\right|\right)\right] \quad (23),$$

$$w_n(i,j) = w'_n(i,j) \cdot \sum_c \left[a_c \cdot exp\left(-\frac{1}{\beta_c} \cdot \frac{|CS_n - \overline{CS}(c)|^2}{\sigma_{CS(c)}^2}\right)\right] \quad (24),$$

$$w_n(i,j) = lnw_n'(i,j) + ln\sum_c \left[a_c \cdot exp\left(-\frac{1}{\beta_c} \cdot \left|\frac{CS_n - \overline{CS}(c)}{\sigma_{CS(c)}}\right|\right)\right] \quad (25),$$

or

$$w_n(i,j) = lnw_n'(i,j) + ln\sum_c \left[a_c \cdot exp\left(-\frac{1}{\beta_c} \cdot \frac{|CS_n - \overline{CS}(c)|^2}{\sigma_{CS(c)}^2}\right)\right] \quad (26),$$

where

$w_n'(i,j)$ may be a constant. Alternatively, $w_n'(i,j)$ maybe $w_n(i,j)$ in formula (15) or formula (16).

Optionally, for the $n^{th}$ piece of measurement data, the weighting factor $f_n(i,j)$ of the grid cell (i, j) may be

$$f_n(i,j) = f_n'(i,j) \cdot \sum_c \left[a_c \cdot exp\left(-\frac{1}{\beta_c} \cdot \left|\frac{CS_n - \overline{CS}(c)}{\sigma_{CS(c)}}\right|\right)\right] \quad (27),$$

or

$$f_n(i,j) = f_n'(i,j) \cdot \sum_c \left[a_c \cdot exp\left(-\frac{1}{\beta_c} \cdot \frac{|CS_n - \overline{CS}(c)|^2}{\sigma_{CS(c)}^2}\right)\right] \quad (28),$$

where

$f_n'(i,j)$ may be a constant. Alternatively, $f_n'(i,j)$ may be $f_n(i,j)$ in formula (19) or formula (20).

For $\sigma$, refer to the foregoing description of $\sigma$. $\alpha_0$ and $\beta_0$ are configuration parameters. For example, $\alpha_0 = \frac{1}{\sqrt{2\pi} \cdot \sigma}$, and $\beta_0$=2. $CS_n$ is the measurement value of the scattering section in the $n^{th}$ piece of measurement data. $\overline{CS}(c)$ is an average value of a scattering section corresponding to a preset target type c. $\sigma_{CS(c)}$ is a standard deviation of the scattering section corresponding to the preset target type c. The preset target type c may be a static obstacle, a curb, a guardrail, or the like. For example, for the curb or guardrail, typical values may be $\overline{CS}(c)$=-5.4 dBm$^2$ (dBm$^2$), and $\sigma_{CS(c)}$=8.2 dBm$^2$. $\alpha_c$ and $\beta_c$ are configuration parameters. For example, $\alpha_c = \frac{1}{\sqrt{2\pi} \cdot \sigma_{CS(c)}}$, and $\beta_c$=2.

That the velocity grid $W_1$ is a three-dimensional grid is used as an example. In this case, a velocity vector corresponding to a grid cell includes three velocity components. A grid cell that is in the velocity grid $W_1$ and that corresponds to one piece of measurement data and a corresponding weight may be determined in the following manner 2.

Manner 2: A second grid cell (i, j, k) in the velocity grid $W_1$ is determined based on the $n^{th}$ piece of measurement data, and the second grid cell (i, j, k) is weighted based on a weighted increment or weighting factor, where a velocity vector corresponding to the second grid cell (i, j, k) satisfies

$$\left|v_x(i)cos\varphi_n cos\theta_n + v_y(j)cos\varphi_n sin\theta_n + v_z(k)sin\varphi_n + \dot{r}_n\right| \leq T_2 \quad (29),$$

where

$\theta_n, \varphi_n$ and $\dot{r}_n$ are respectively a measurement value of an azimuth angle, a measurement value of a pitch angle, and a measurement value of a radial velocity that are included in the $n^{th}$ piece of measurement data, $v_x(i), v_y(j)$ and $v_z(k)$ are respectively an x-axis velocity component, a y-axis velocity component, and a z-axis velocity component of the velocity vector corresponding to the second grid cell (i, j, k), and $T_2$ is a non-negative threshold. For example, $T_2$ may be maximum or minimum values of resolution cell sizes $v_{x,res}, v_{y,res}$, and $v_{z,res}$.

Similar to the above two-dimensional velocity vector or two-dimensional velocity grid, if the $n^{th}$ piece of measurement data comes from a target stationary relative to a reference system, a radial velocity $\dot{r}_s$ of the sensor relative to the target stationary relative to the reference system and a radial velocity $\dot{r}_n$ of the target stationary relative to the reference system relative to the sensor are opposite to each other, that is, $\dot{r}_s = -\dot{r}_n$. Therefore, if the $n^{th}$ piece of measurement data comes from the target stationary relative to the reference system, the velocity vector corresponding to the grid cell (i, j, k) that satisfies the inequation (29) is more likely to be the velocity vector of the sensor. Therefore, the grid cell (i, j, k) that satisfies the foregoing inequation is weighted, and other low-probability grid cells are ignored, to effectively reduce grid cells whose weighted increments or weighting factors need to be calculated, and effectively reduce a calculation amount.

Optionally, in an implementation, for the nth piece of measurement data, resolution cells of each dimension in the velocity grid may be traversed successively, and the foregoing inequation (29) is used to obtain the grid cell that satisfies the foregoing inequation (29) and calculate the weighted increment or weighting factor corresponding to the grid cell.

Optionally, in another implementation, for the nth piece of measurement data, resolution cells of one dimension in the velocity grid may be traversed, and resolution cells of another one or two dimensions may be determined by using the foregoing inequation (29), to obtain the grid cell that satisfies the foregoing inequation (29) and calculate the weighted increment or weighting factor corresponding to the grid cell. The principle is similar to that of manner 1, and details are not described herein.

For the grid cell (i, j, k) in the velocity grid, if the velocity vector $[v_x(i)\ v_y(j)\ v_z(k)]^T$ corresponding to the grid cell (i, j, k) satisfies the inequation (29) or an inequation similar to (13) or (14), the weighted increment $w_n(i,j,k)$ or weighting factor $f_n(i,j,k)$ corresponding to the grid cell (i, j, k) is calculated. Otherwise, the weighted increment $w_n(i,j,k)$ or weighting factor $f_n(i,j,k)$ corresponding to the grid cell (i, j, k) does not need to be calculated; or equivalently, the weighted increment $w_n(i,j,k)$ corresponding to the grid cell (i, j, k) is set to 0 or a constant, or the weighting factor $f_n(i,j,k)$ is set to 1 or a constant.

The weighted increment or weighting factor of the grid cell corresponding to the nth piece of measurement data is described below.

It should be noted that following calculation of a weighted increment or weighting factor may be used for the second grid cell, or may be used for any grid cell in the velocity grid for the nth piece of measurement data.

Optionally, the weighted increment or weighting factor of the grid cell (i, j, k) may be a preset value. For example, the preset value may be 1, 2 or another preconfigured constant value.

Optionally, the weighted increment or weighting factor of the grid cell (i, j, k) may be determined based on the nth piece of measurement data. In this way, the weighting can be performed more precisely, and thus a motion state, especially the velocity vector, of the sensor, can be obtained more precisely.

Specifically, the weighted increment or weighting factor of the grid cell (i, j, k) may be an exponential function or a linear or a quadratic function of the nth piece of measurement data. For example, the exponential function may be an exponential probability density function or a normal probability density function; and the linear or quadratic function may be a logarithmic form of an exponential probability density function, a logarithmic form of a normal probability density function, or the like.

For example, for the nth piece of measurement data including measurement values of an azimuth angle, a pitch angle, and a radial velocity, the weighted increment $w_n(i,j,k)$ of the grid cell (i, j, k) may be

$$w_n(i,j,k) = a_0 exp\left(-\frac{1}{\beta_0} \cdot \left|\frac{v_x(i) \cdot cos\varphi_n cos\theta_n + v_y(j) \cdot cos\varphi_n sin\theta_n + v_z(k) \cdot sin\varphi_n + \dot{r}_n}{\sigma}\right|\right) \quad (30),$$

$$w_n(i,j,k) = a_0 exp\left(-\frac{1}{\beta_0} \cdot \frac{\left|v_x(i) \cdot cos\varphi_n cos\theta_n + v_y(j) \cdot cos\varphi_n sin\theta_n + v_z(k) \cdot sin\varphi_n + \dot{r}_n\right|^2}{\sigma^2}\right) \quad (31),$$

$$w_n(i,j,k) = ln(a_0) - \frac{1}{\beta_0} \cdot \left|\frac{v_x(i) \cdot cos\varphi_n cos\theta_n + v_y(j) \cdot cos\varphi_n sin\theta_n + v_z(k) \cdot sin\varphi_n + \dot{r}_n}{\sigma}\right| \quad (32),$$

or

$$w_n(i,j,k) = ln(a_0) - \frac{1}{\beta_0} \cdot \frac{\left|v_x(i) \cdot cos\varphi_n cos\theta_n + v_y(j) \cdot cos\varphi_n sin\theta_n + v_z(k) \cdot sin\varphi_n + \dot{r}_n\right|^2}{\sigma^2} \quad (33).$$

Optionally, for the nth piece of measurement data, the weighting factor $f_n(i,j,k)$ of the grid cell (i, j, k) may be

$$f_n(i,j,k) = a_0 exp\left(-\frac{1}{\beta_0} \cdot \left|\frac{v_x(i) \cdot cos\varphi_n cos\theta_n + v_y(j) \cdot cos\varphi_n sin\theta_n + v_z(k) \cdot sin\varphi_n + \dot{r}_n}{\sigma}\right|\right) \quad (34),$$

or

$$f_n(i,j,k) = a_0 exp\left(-\frac{1}{\beta_0} \cdot \frac{|v_x(i)\cdot cos\varphi_n cos\theta_n + v_y(j)\cdot cos\varphi_n sin\theta_n + v_z(k)\cdot sin\varphi_n + \dot{r}_n|^2}{\sigma^2}\right) \quad (35).$$

For formulas (30) to (35), $\sigma$ is a standard deviation, and $\sigma$ may be a preset constant. Alternatively, $\sigma$ can be obtained based on a measurement error of the radial velocity. For example, $\sigma$ can be obtained as follows:

$$\sigma^2 = \sigma_{\dot{r}}^2 + \Delta \quad (36),$$

where
$\sigma_r^2$ is the measurement error of the radial velocity, and $\Delta$ is a compensation item. $\Delta$ may be a preset constant. Alternatively, $\Delta$ may be determined based on the resolution cell size of the velocity grid $W_1$. For example, $\Delta$ can be obtained according to the following formula:

$$\Delta = \left[(v_x^2(i) + \sigma_{vx}^2)sin^2(\theta_n) + (v_y^2(j) + \sigma_{vy}^2)cos^2(\theta_n) - v_x(i) \cdot v_y(j) \cdot sin(2\theta_n)\right] \cdot cos^2(\varphi_n) \cdot \sigma_\theta^2$$

$$+[v_h^2 \cdot sin^2(\varphi_n) + (v_z^2(j) + \sigma_{vz}^2)cos^2(\varphi_n) - v_h \cdot v_z(k) \cdot sin(2\varphi_n)] \cdot \sigma_\varphi^2 \quad (37), \text{ and}$$

and

$$v_h = v_x(i)cos\theta_n + v_y(j)sin\theta_n \quad (38),$$

where
$\sigma_\theta^2$ and $\sigma_\varphi^2$ are respectively a variance of a measurement error of the azimuth angle and a variance of a measurement error of the pitch angle, and $\sigma_{vx}^2$, $\sigma_{vy}^2$, and $\sigma_{vz}^2$ are variances of quantization errors of the velocity grid in dimensions $v_x$, $v_y$, and $v_z$ respectively. For example, $\sigma_{vx}^2$, $\sigma_{vy}^2$, and $\sigma_{vz}^2$ may be respectively $\sigma_{vx}^2 = \frac{1}{12}v_{x,res}^2$, $\sigma_{vy}^2 = \frac{1}{12}v_{y,res}^2$, $\sigma_{vz}^2 = \frac{1}{12}v_{z,res}^2$.

$v_{x,res}$, $v_{y,res}$, and $v_{z,res}$ are the resolution cell sizes of the velocity grid $W_1$ in the $v_x$ dimension, the $v_y$ dimension, and the $v_z$ dimension respectively. $\alpha_0$ and $\beta_0$ are configuration parameters. For example, $a_0 = \frac{1}{\sqrt{2\pi}\cdot\sigma}$, and $\beta_0 = 2$.

Optionally, the weighted increment or weighting factor of the grid cell (i, j, k) may be determined based on the $n^{th}$ piece of measurement data and distribution of a scattering section corresponding to a preset target type, where the $n^{th}$ piece of measurement data includes a measurement value of the scattering section.

Specifically, the distribution of the scattering section corresponding to the preset target type may be determined based on an average value and a standard deviation. The scattering section may be a scattering cross section of a radar, sonar, or ultrasonic sensor, or a sensor of another type.

In this way, in addition to using a velocity and an angle measurement value of the target, a scattering cross section feature of the target can be used, so that the weighting can be performed more precisely by using a feature difference of the target, and thus the motion state, especially the velocity vector, of the sensor, can be obtained more precisely.

Specifically, a scattering cross section feature item included in the weighted increment or weighting factor of the grid cell (i, j, k) may be an exponential function or a linear or a quadratic function of the measurement value of the scattering cross section in the $n^{th}$ piece of measurement data. For example, the exponential function may be an exponential probability density function or a normal probability density function; and the linear or quadratic function may be a logarithmic form of an exponential probability density function, a logarithmic form of a normal probability density function, or the like.

For example, for the $n^{th}$ piece of measurement data, the weighted increment $w_n(i,j,k)$ of the grid cell (i, j, k) may be

$$w_n(i,j,k) = w_n'(i,j,k) \cdot \sum_c \left[ a_c \cdot exp\left( -\frac{1}{\beta_c} \cdot \left| \frac{CS_n - \overline{CS}(c)}{\sigma_{CS(c)}} \right| \right) \right] \quad (39),$$

$$w_n(i,j,k) = w_n'(i,j,k) \cdot \sum_c \left[ a_c \cdot exp\left( -\frac{1}{\beta_c} \cdot \frac{|CS_n - \overline{CS}(c)|^2}{\sigma_{CS(c)}^2} \right) \right] \quad (40),$$

$$w_n(i,j,k) = ln w_n'(i,j,k) + ln \sum_c \left[ a_c \cdot exp\left( -\frac{1}{\beta_c} \cdot \left| \frac{CS_n - \overline{CS}(c)}{\sigma_{CS(c)}} \right| \right) \right] \quad (41),$$

or

$$w_n(i,j,k) = ln w_n'(i,j,k) + ln \sum_c \left[ a_c \cdot exp\left( -\frac{1}{\beta_c} \cdot \frac{|CS_n - \overline{CS}(c)|^2}{\sigma_{CS(c)}^2} \right) \right] \quad (42)$$

where

$w_n'(i,j,k)$ may be a constant. Alternatively, $w_n'(i,j,k)$ may be $w_n(i,j,k)$ in formula (30) or formula (31).

Optionally, for the $n^{th}$ piece of measurement data, the weighting factor $f_n(i,j,k)$ of the grid cell (i, j, k) may be

$$f_n(i,j,k) = f_n'(i,j,k) \cdot \sum_c \left[ a_c \cdot exp\left( -\frac{1}{\beta_c} \cdot \left| \frac{CS_n - \overline{CS}(c)}{\sigma_{CS(c)}} \right| \right) \right] \quad (43),$$

or

$$f_n(i,j,k) = f_n'(i,j,k) \cdot \sum_c \left[ a_c \cdot exp\left( -\frac{1}{\beta_c} \cdot \frac{|CS_n - \overline{CS}(c)|^2}{\sigma_{CS(c)}^2} \right) \right] \quad (44),$$

where

$f_n'(i,j,k)$ may be a constant. Alternatively, $f_n'(i,j,k)$ maybe $f_n(i,j,k)$ in formula (34) or formula (35).

$\sigma$ is a standard deviation, and $\sigma$ may be a preset constant. Alternatively, $\sigma$ can be obtained based on a measurement error of the radial velocity. $\alpha_0$ and $\beta_0$ are configuration parameters. For example, $a_0 = \frac{1}{\sqrt{2\pi} \cdot \sigma}$ , and $\beta_0$=2. $CS_n$ is the measurement value of the scattering section in the $n^{th}$ piece of measurement data. $\overline{CS}(c)$ is an average value of a scattering section corresponding to a preset target type c. $\sigma_{CS(c)}$ is a standard deviation of the scattering section corresponding to the preset target type c. The preset target type c may be a static obstacle, a curb, a guardrail, or the like. For example, for the curb or guardrail, typical values may be $\overline{CS}(c)$=-5.4dBm$^2$, and $\sigma_{CS(c)}$=8.2 dBm$^2$. $\alpha_c$ and $\beta_c$ are configuration parameters. For example, $a_c = \frac{1}{\sqrt{2\pi} \cdot \sigma_{CS(c)}}$ , and $\beta_c$=2.

That the velocity grid $W_1$ is a two-dimensional grid is used as an example. In this case, a velocity vector corresponding to a grid cell includes two velocity components. A grid cell that is in the velocity grid $W_1$ and that corresponds to one piece of measurement data and a corresponding weight may be determined in the following manner 3.

Manner 3: A second grid cell (i, j) in the velocity grid $W_1$ is determined based on the $n^{th}$ piece of measurement data, and the second grid cell (i, j) is weighted based on a weighted increment or weighting factor, where a velocity vector corresponding to the second grid cell (i, j) satisfies

$$\left| v_x(i) \cdot \cos\theta_n + v_y(j) \cdot \sin\theta_n - \dot{r}_n \right| \leq T_1 \quad (45),$$

where

$\theta_n$ and $\dot{r}_n$ are respectively a measurement value of an azimuth angle and a measurement value of a radial velocity that are included in the nth piece of measurement data, $v_x(i)$ and $v_y(j)$ are respectively an x-axis component and a y-axis component of the velocity vector corresponding to the second grid cell, and $T_1$ is a non-negative threshold. For example, $T_1$ may be maximum or minimum values of resolution cell sizes $V_{x,res}$ and $V_{y,res}$.

If the nth piece of measurement data comes from a target stationary relative to a reference system, a radial velocity $r_s$ of the sensor relative to the target stationary relative to the reference system and a radial velocity $\dot{r}_n$ of the target n stationary relative to the reference system relative to the sensor are opposite to each other, that is, $r_s = -\dot{r}_n$. If the velocity vector of the sensor is $[v_x(i) \; v_y(j)]^T$, $\dot{r}_n = v_x(i) \cdot cos\theta_n + v_y(j) \cdot sin\theta_n - n_r$, where $n_r$ is an error caused by measurement noise and resolution cell quantization noise. Therefore, if the nth piece of measurement data comes from the target stationary relative to the reference system, the velocity vector corresponding to the grid cell (i, j) that satisfies the inequation (45) is more likely to be an opposite number of the velocity vector of the sensor. Therefore, the grid cell (i, j) that satisfies the foregoing inequation is weighted, and other low-probability grid cells are ignored, to effectively reduce grid cells whose weighted increments or weighting factors need to be calculated, and effectively reduce a calculation amount.

A principle of determining the grid cell corresponding to one piece of measurement data in manner 3 is similar to that in manner 1, except that the velocity vector corresponding to the second grid cell (i, j) herein satisfies a different inequation. A method for determining the grid cell corresponding to the nth piece of measurement data is not described herein again by using an example.

For the grid cell (i, j) in the velocity grid, if the velocity vector $[v_x(i) \; v_y(j)]^T$ corresponding to the grid cell (i, j) satisfies the inequation (45), the weighted increment $w_n(i,j)$ or weighting factor $f_n(i,j)$ corresponding to the grid cell (i, j) is calculated. Otherwise, the weighted increment $w_n(i,j)$ or weighting factor $f_n(i,j)$ corresponding to the grid cell (i, j) does not need to be calculated; or equivalently, the weighted increment $w_n(i,j)$ corresponding to the grid cell (i, j) is set to 0 or a constant, or the weighting factor $f_n(i,j)$ is set to 1 or a constant.

The weighted increment or weighting factor of the grid cell corresponding to the nth piece of measurement data is described below.

It should be noted that following calculation of a weighted increment or weighting factor may be used for the second grid cell, or may be used for any grid cell in the velocity grid for the nth piece of measurement data.

Optionally, the weighted increment or weighting factor of the grid cell (i, j) may be a preset value. For example, the preset value may be 1, 2 or another preconfigured constant value.

Optionally, the weighted increment or weighting factor of the grid cell (i, j) may be determined based on the nth piece of measurement data. In this way, the weighting can be performed more precisely, and thus a motion state, especially the velocity vector, of the sensor, can be obtained more precisely.

Specifically, the weighted increment or weighting factor of the grid cell (i, j) may be an exponential function or a linear or a quadratic function of the nth piece of measurement data. For example, the exponential function may be an exponential probability density function or a normal probability density function. For another example, the linear or quadratic function may be a logarithmic form of an exponential probability density function, or a logarithmic form of a normal probability density function.

For example, for the nth piece of measurement data including measurement values of an azimuth angle and a radial velocity, the weighted increment $w_n(i,j)$ of the grid cell (i, j) may be

$$w_n(i,j) = a_0 exp\left(-\frac{1}{\beta_0} \cdot \left|\frac{v_x(i) \cdot cos\theta_n + v_y(j) \cdot sin\theta_n - \dot{r}_n}{\sigma}\right|\right) \quad (46),$$

$$w_n(i,j) = a_0 exp\left(-\frac{1}{\beta_0} \cdot \frac{\left|v_x(i) \cdot cos\theta_n + v_y(j) \cdot sin\theta_n - \dot{r}_n\right|^2}{\sigma^2}\right) \quad (47),$$

$$w_n(i,j) = ln(a_0) - \frac{1}{\beta_0} \cdot \left|\frac{v_x(i) \cdot cos\theta_n + v_y(j) \cdot sin\theta_n - \dot{r}_n}{\sigma}\right| \quad (48),$$

or

$$w_n(i,j) = ln(a_0) - \frac{1}{\beta_0} \cdot \frac{\left|v_x(i) \cdot cos\theta_n + v_y(j) \cdot sin\theta_n - \dot{r}_n\right|^2}{\sigma^2} \quad (49).$$

Optionally, for the nth piece of measurement data, the weighting factor $f_n(i,j)$ of the grid cell (i, j) may be

$$f_n(i,j) = a_0 exp\left(-\frac{1}{\beta_0} \cdot \left|\frac{v_x(i)\cdot cos\theta_n + v_y(j)\cdot sin\theta_n - \dot{r}_n}{\sigma}\right|\right) \quad (50),$$

or

$$f_n(i,j) = a_0 exp\left(-\frac{1}{\beta_0} \cdot \frac{|v_x(i)\cdot cos\theta_n + v_y(j)\cdot sin\theta_n - \dot{r}_n|^2}{\sigma^2}\right) \quad (51).$$

For formulas (46) to (51), $\sigma$ is a standard deviation, and $\sigma$ may be a preset constant. Alternatively, $\sigma$ can be obtained based on a measurement error of the radial velocity. For example, $\sigma$ can be obtained according to (21). $a_0$ and $\beta_0$ are configuration parameters. For example, $a_0 = \frac{1}{\sqrt{2\pi}\cdot\sigma}$ , and $\beta_0$=2.

Optionally, the weighted increment or weighting factor of the grid cell (i, j) may be determined based on the $n^{th}$ piece of measurement data and distribution of a scattering section corresponding to a preset target type, where the $n^{th}$ piece of measurement data includes a measurement value of the scattering section.

Specifically, the distribution of the scattering section corresponding to the preset target type may be determined based on an average value and a standard deviation.

The scattering section may be a radar cross-section. Alternatively, the scattering section is a scattering section of a sonar or ultrasonic sensor. In this way, in addition to using a velocity and an angle measurement value of the target, a scattering cross section feature of the target can be used, so that the weighting can be performed more precisely by using a feature difference of the target, and thus the motion state, especially the velocity vector, of the sensor, can be obtained more precisely.

For example, for the $n^{th}$ piece of measurement data, the weighted increment $w_n(i,j)$ of the grid cell (i, j) may be shown in (23), (24), (25), or (26), where $w'_n(i,j)$ may be a constant, or may be $w_n(i,j)$ in formula (46) or formula (47).

Optionally, for the $n^{th}$ piece of measurement data, the weighting factor $f_n(i,j)$ of the grid cell (i, j) may be shown in (27) or (28), where $f'_n(i,j)$ may be a constant, for example, $f'_n(i,j)$ may alternatively be $f_n(i,j)$ in formula (50) or formula (51).

That the velocity grid $W_1$ is a three-dimensional grid is used as an example. In this case, a velocity vector corresponding to a grid cell includes three velocity components. A grid cell that is in the velocity grid $W_1$ and that corresponds to one piece of measurement data and a corresponding weight may be determined in the following manner 4.

Manner 4: A second grid cell (i, j, k) in the velocity grid $W_1$ is determined based on the $n^{th}$ piece of measurement data, and the second grid cell (i, j, k) is weighted based on a weighted increment or weighting factor, where a velocity vector corresponding to the second grid cell (i, j, k) satisfies

$$|v_x(i)cos\varphi_n cos\theta_n + v_y(j)cos\varphi_n sin\theta_n + v_z(k)sin\varphi_n - \dot{r}_n| \le T_2 \quad (52),$$

, where

$\theta_n$, $\varphi_n$ and $\dot{r}_n$ are respectively a measurement value of an azimuth angle, a measurement value of a pitch angle, and a measurement value of a radial velocity that are included in the $n^{th}$ piece of measurement data,

$v_x(i)$, $v_y(j)$ and $v_z(k)$ are respectively an x-axis velocity component, a y-axis velocity component, and a z-axis velocity component of the velocity vector corresponding to the second grid cell (i, j, k), and $T_2$ is a non-negative threshold. For example, $T_2$ may be maximum or minimum values of resolution cell sizes $v_{x,res}$, $v_{y,res}$, and $v_{z,res}$.

Similar to the above two-dimensional velocity vector or two-dimensional velocity grid, if the $n^{th}$ piece of measurement data comes from a target stationary relative to a reference system, a radial velocity $r_s$ of the sensor relative to the target stationary relative to the reference system and a radial velocity $\dot{r}_n$ of the target stationary relative to the reference system relative to the sensor are opposite to each other, that is, $\dot{r}_s = -\dot{r}_n$. Therefore, if the $n^{th}$ piece of measurement data comes from the target stationary relative to the reference system, the velocity vector corresponding to the grid cell (i, j, k) that satisfies the inequation (52) is more likely to be an opposite number of the velocity vector of the sensor. Because a quantity of targets stationary relative to the reference system is relatively large in an environment, when a weight of a grid cell is higher, it is more likely that a velocity vector corresponding to the grid cell is a velocity vector of the target stationary relative to the reference system. An opposite number of the velocity vector of the target stationary relative to the reference system is the velocity vector of the sensor. Therefore, the grid cell (i, j) that satisfies the foregoing inequation is weighted, and other low-probability grid cells are ignored, to effectively reduce grid cells whose weighted increments or weighting factors need to be calculated, and effectively reduce a calculation amount.

A principle of the grid cell corresponding to the piece of measurement data in manner 4 is similar to that in manner 2, except that the velocity vector corresponding to the second grid cell (i, j, k) herein satisfies a different relationship. A method for determining the grid cell corresponding to the $n^{th}$ piece of measurement data is not described herein again by using an example.

For the grid cell (i, j, k) in the velocity grid, if the velocity vector $[v_x(i)\ v_y(j)\ v_z(k)]^T$ corresponding to the grid cell (i, j, k) satisfies the inequation (52), the weighted increment $w_n(i,j,k)$ or weighting factor $f_n(i,j,k)$ corresponding to the grid cell (i, j, k) is calculated. Otherwise, the weighted increment $w_n(i,j,k)$ or weighting factor $f_n(i,j,k)$ corresponding to the grid cell (i, j, k) does not need to be calculated; or equivalently, the weighted increment $w_n(i,j,k)$ corresponding to the grid cell (i, j, k) is set to 0 or a constant, or the weighting factor $f_n(i,j,k)$ is set to 1 or a constant.

The weighted increment or weighting factor of the grid cell corresponding to the $n^{th}$ piece of measurement data is described below.

It should be noted that following calculation of a weighted increment or weighting factor may be used for the second grid cell, or may be used for any grid cell in the velocity grid for the $n^{th}$ piece of measurement data.

Optionally, the weighted increment or weighting factor of the grid cell (i, j, k) may be a preset value. For example, the preset value may be 1, 2 or another preconfigured constant value.

Optionally, the weighted increment or weighting factor of the grid cell (i, j, k) is determined based on the $n^{th}$ piece of measurement data. In this way, the weighting can be performed more precisely, and thus a motion state, especially the velocity vector, of the sensor, can be obtained more precisely.

Specifically, the weighted increment or weighting factor of the grid cell (i, j, k) may be an exponential function or a linear or a quadratic function of the $n^{th}$ piece of measurement data. For example, the exponential function may be an exponential probability density function or a normal probability density function; and the linear or quadratic function may be a logarithmic form of an exponential probability density function, a logarithmic form of a normal probability density function, or the like.

For example, for the $n^{th}$ piece of measurement data including measurement values of an azimuth angle, a pitch angle, and a radial velocity, the weighted increment $w_n(i,j,k)$ of the grid cell (i, j, k) may be

$$w_n(i,j,k) = a_0 exp\left(-\frac{1}{\beta_0} \cdot \left|\frac{v_x(i)\cdot cos\varphi_n cos\theta_n + v_y(j)\cdot cos\varphi_n sin\theta_n + v_z(k)\cdot sin\varphi_n - \dot{r}_n}{\sigma}\right|\right) \quad (53),$$

$$w_n(i,j,k) = a_0 exp\left(-\frac{1}{\beta_0} \cdot \frac{\left|v_x(i)\cdot cos\varphi_n cos\theta_n + v_y(j)\cdot cos\varphi_n sin\theta_n + v_z(k)\cdot sin\varphi_n - \dot{r}_n\right|^2}{\sigma^2}\right) \quad (54),$$

$$w_n(i,j,k) = ln(a_0) - \frac{1}{\beta_0} \cdot \left|\frac{v_x(i)\cdot cos\varphi_n cos\theta_n + v_y(j)\cdot cos\varphi_n sin\theta_n + v_z(k)\cdot sin\varphi_n - \dot{r}_n}{\sigma}\right| \quad (55),$$

or

$$w_n(i,j,k) = ln(a_0) - \frac{1}{\beta_0} \cdot \frac{\left|v_x(i)\cdot cos\varphi_n cos\theta_n + v_y(j)\cdot cos\varphi_n sin\theta_n + v_z(k)\cdot sin\varphi_n - \dot{r}_n\right|^2}{\sigma^2} \quad (56).$$

Optionally, for the $n^{th}$ piece of measurement data, the weighting factor $f_n(i,j,k)$ of the grid cell (i, j, k) may be

$$f_n(i,j,k) = a_0 exp\left(-\frac{1}{\beta_0} \cdot \left|\frac{v_x(i)\cdot cos\varphi_n cos\theta_n + v_y(j)\cdot cos\varphi_n sin\theta_n + v_z(k)\cdot sin\varphi_n - \dot{r}_n}{\sigma}\right|\right) \quad (57),$$

or

$$f_n(i,j,k) = a_0 exp\left(-\frac{1}{\beta_0} \cdot \frac{\left|v_x(i)\cdot cos\varphi_n cos\theta_n + v_y(j)\cdot cos\varphi_n sin\theta_n + v_z(k)\cdot sin\varphi_n - \dot{r}_n\right|^2}{\sigma^2}\right) \quad (58).$$

For formulas (53) to (58), $\sigma$ is a standard deviation, and $\sigma$ may be a preset constant. Alternatively, $\sigma$ can be obtained based on a measurement error of the radial velocity. For example, $\sigma$ can be obtained according to formulas (36) to (38). $a_0$ and $\beta_0$ are configuration parameters. For example, $a_0 = \frac{1}{\sqrt{2\pi} \cdot \sigma}$ , and $\beta_0 = 2$ .

Optionally, the weighted increment or weighting factor of the grid cell (i, j, k) may be determined based on the $n^{th}$ piece of measurement data and distribution of a scattering section corresponding to a preset target type, where the $n^{th}$ piece of measurement data includes a measurement value of the scattering section.

Specifically, the distribution of the scattering section corresponding to the preset target type may be determined based on an average value and a standard deviation. The scattering section may be a scattering cross section of a radar, sonar, or ultrasonic sensor, or a sensor of another type.

In this way, in addition to using a velocity and an angle measurement value of the target, a scattering cross section feature of the target can be used, so that the weighting can be performed more precisely by using a feature difference of the target, and thus the motion state, especially the velocity vector, of the sensor, can be obtained more precisely.

For example, for the $n^{th}$ piece of measurement data, the weighted increment $w_n(i,j,k)$ of the grid cell (i, j, k) may be shown in (39), (40), (41), or (42), where $w'_n(i,j,k)$ may be a constant. Alternatively, $w'_n(i,j,k)$ may be $w_n(i,j,k)$ in formula (53) or formula (54).

Optionally, for the $n^{th}$ piece of measurement data, the weighting factor $f_n(i,j,k)$ of the grid cell (i, j, k) may be shown in (43) or (44), where $f'_n(i,j,k)$ may be a constant. Alternatively, $f'_n(i,j,k)$ may be $f_n(i,j,k)$ in formula (57) or formula (58).

302: Determine the motion state of the sensor based on the weight of the grid cell in the velocity grid $W_1$, where the motion state of the sensor includes the velocity vector of the sensor.

The weight of the grid cell may be a sum of weighted increments of a plurality of pieces of measurement data in the grid cell. For example, a weight of a two-dimensional grid cell is shown in formula (8), and a weight of a three-dimensional grid cell is shown in formula (9). Alternatively, the weight of the grid cell may be a product of weighting factors of a plurality of pieces of measurement data in the grid cell. For example, a weight of a two-dimensional grid cell is shown in formula (10), and a weight of a three-dimensional grid cell is shown in formula (11).

In this embodiment of this application, a dimension of the velocity vector of the sensor and a velocity component included are the same as a dimension and a velocity component that are of a velocity grid or a grid cell. For example, if a velocity vector corresponding to a one-dimensional velocity grid $W_1$ or grid cell includes a velocity component $v_x$, the velocity vector of the sensor is one-dimensional and includes the velocity component $v_x$. If a velocity vector corresponding to a two-dimensional velocity grid $W_1$ or grid cell includes velocity components $v_x$ and $v_y$, the velocity vector of the sensor is a two-dimensional vector, including the velocity components $v_x$ and $v_y$ . Similarly, for a three-dimensional velocity grid, the velocity vector of the sensor is a three-dimensional vector, including velocity components $v_x$, $v_y$ and $v_z$.

Optionally, in addition to the velocity vector of the sensor, the motion state of the sensor may further include a position of the sensor. For example, the position of the sensor may be obtained based on the velocity vector and a time interval by using a specified start time point or an initial position as a reference.

Optionally, the determining the motion state of the sensor based on the weight of the grid cell in the velocity grid $W_1$ may include: determining a first grid cell based on the weight of the grid cell in the velocity grid $W_1$, where a velocity vector corresponding to the first grid cell is the velocity vector of the sensor.

Specifically, in this case, the grid cell in the velocity grid $W_1$ corresponds to a candidate velocity vector of the sensor. The grid cell and the weight of the grid cell may be determined according to one or more combinations of formulas (8) to (11) and (12) to (44).

Optionally, the first grid cell may be a grid cell with a largest weight in the velocity grid $W_1$; the first grid cell may be a grid cell that is in a neighborhood of a grid cell with a largest weight in the velocity grid $W_1$ and that is closest to the reference velocity vector; or the first grid cell may be a grid cell that is among a plurality of grid cells with maximum weights in the velocity grid $W_1$ and that corresponds to a velocity vector closest to the reference velocity vector. The grid cells with maximum weights may be grid cells whose weights are greater than a threshold, or the grid cells with maximum weights may be N grid cells with the largest weight.

For example, as shown in FIG. 4, an example in which the velocity grid includes grid cells 0 to 4 is used. If a weight of the grid cell 3 in the grid cells 0 to 4 is the largest, the first grid cell may be the grid cell 3. Alternatively, if a weight of the grid cell 3 is the largest, the grid cell 2 and the grid cell 4 are in a neighborhood of the grid cell 3, and a velocity vector corresponding to the grid cell 2 is closest to the reference velocity vector, the first grid cell may be the grid cell 2. Alternatively, if weights of the grid cell 2 and the grid cell 3 in the grid cells 0 to 4 are greater than the threshold, and a velocity vector corresponding to the grid cell 2 is closest to the reference velocity vector, the first grid cell may be the grid cell 2. Alternatively, the grid cells with maximum weights may be the N grid cells with the largest weight. For example, the grid cells 0 to 4 are sorted in descending order of weights, to obtain a sorting result as follows: grid cell 4, grid cell 3, grid cell 2, grid cell 1, and grid cell 0. The grid cells with maximum weights are three grid cells with the largest weight. In this case, the grid cell 4, the grid cell 3, and the grid cell 2 are the grid cells with maximum weights. If a velocity vector corresponding to the grid cell 2 is closest to the reference velocity vector, the first grid cell may be the grid cell 2. It is similar when a velocity vector corresponding to a grid cell in the velocity grid $W_1$ includes a plurality of velocity components, and details are not described herein.

In this embodiment of the present invention, the weight of the grid cell in the velocity grid $W_1$ is determined based on the measurement data from the sensor, where the measurement data includes at least the velocity measurement value, and the motion state of the sensor is determined based on the weight of grid cell in the velocity grid, where the motion state of the sensor includes at least the velocity vector of the sensor. Because there is relative motion between the sensor and a target measured by the sensor, the measurement data from the sensor may include a measurement value of a velocity of the relative motion. In addition, targets stationary relative to a reference system in targets measured by the sensor are distributed diversely with a large amount of data, and velocity vectors of the targets stationary relative to the reference system and components of a velocity of the sensor are opposite to each other. Therefore, a weight of a grid cell that is in the velocity grid and that corresponds to the velocity vector of the sensor will be the largest. Therefore, according to the method of the present invention, measurement data corresponding to a plurality of targets stationary relative to the reference system can be effectively used, and impact of a measurement error or interference can be effectively reduced, so that the manner of determining the motion state has higher precision. In addition, the velocity vector of the sensor can be determined based on single frame data in the method, thereby achieving good real-time results.

Optionally, the determining the motion state of the sensor based on the weight of the grid cell in the velocity grid may alternatively include: determining a first grid cell based on the weight of the grid cell in the velocity grid, where each velocity component of the velocity vector of the sensor is an opposite number of each velocity component of the velocity vector corresponding to the first grid cell.

Specifically, in this case, the grid cell in the velocity grid corresponds to a candidate velocity vector of a target measured by the sensor. The target measured by the sensor may be a target stationary relative to a reference system, for example, the reference system may be a geodetic coordinate system, or an inertial coordinate system relative to the earth.

The weight of the grid cell may be determined according to one or more combinations of formulas (8) to (11), (23) to (26), and (45) to (58).

Optionally, the first grid cell may be a grid cell with a largest weight in the velocity grid $W_1$; the first grid cell may be a grid cell that is in a neighborhood of a grid cell with a largest weight in the velocity grid $W_1$ and that is closest to the reference velocity vector; or the first grid cell may be a grid cell that is among a plurality of grid cells with maximum weights in the velocity grid $W_1$ and that corresponds to a velocity vector closest to the reference velocity vector. For specific descriptions of the first grid cell in the velocity grid $W_1$, refer to descriptions in the foregoing method embodiment. Details are not described herein again.

In this embodiment of the present invention, the weight of the grid cell in the velocity grid is determined based on the measurement data from the sensor, where the measurement data includes at least the velocity measurement value, and the motion state of the sensor is determined based on the weight of grid cell in the velocity grid, where the motion state of the sensor includes at least the velocity vector of the sensor. Because there is relative motion between the sensor and the target measured by the sensor, the measurement data from the sensor may include a measurement value of a velocity of the relative motion. In addition, targets stationary relative to the reference system in targets measured by the sensor are distributed diversely with a large amount of data. Therefore, a weight of a grid cell that is in the velocity grid and that corresponds to a velocity vector of the target stationary relative to the reference system will be the largest. Therefore, according to the method of the present invention, measurement data corresponding to a plurality of targets stationary relative to the reference system can be effectively used, impact of a measurement error or interference can be effectively reduced, velocity vectors of the targets stationary relative to the reference system are obtained, and velocity components of the velocity vectors of the targets stationary relative to the reference system and velocity components of a velocity of the sensor are opposite to each other, so that a high-precision motion state of the sensor can be obtained by using this method. In addition, the velocity vector of the sensor can be determined based on single frame data in the method, thereby achieving good real-time results.

The first grid cell may be determined based on weights of all grid cells in the velocity grid, or may be determined based on weights of some grid cells in the velocity grid, for example, grid cells on a diagonal or minor diagonal or back-diagonal or minor back-diagonal line in the velocity grid; or grid cells that are in the velocity grid and that correspond to velocity vectors within a neighborhood of the reference velocity vector. By using the some grid cells, computation of searching can be reduced effectively, while correctness of searching results can be ensured without too much loss.

FIG. 7 is a schematic flowchart of a motion state determining method according to an embodiment of this application. As shown in FIG. 7, the motion state determining method includes the following step 701 and step 702, where step 702 is a specific implementation of step 302.

701: Determine a weight of a grid cell in a velocity grid $W_1$ based on measurement data from a sensor.

A specific implementation principle of step 701 is the same as that of step 301. For details, refer to the implementation principle of step 301. Details are not described herein.

702: Determine a motion state of the sensor based on a first grid cell in the velocity grid $W_1$.

The first grid cell in the velocity grid $W_1$ may be a grid cell with a largest weight in the velocity grid $W_1$, the first grid cell may be a grid cell that is in a neighborhood of a grid cell with a largest weight in the velocity grid and that is closest to a reference velocity vector, or the first grid cell may be a grid cell that is among a plurality of grid cells with maximum weights in the velocity grid and that corresponds to a velocity vector closest to a reference velocity vector. For specific descriptions of the first grid cell in the velocity grid $W_1$, refer to descriptions in the foregoing method embodiment. Details are not described herein again.

If a velocity vector corresponding to the grid cell in the velocity grid $W_1$ is a candidate velocity vector of the sensor, a velocity vector of the first grid cell in the velocity grid $W_1$ among a plurality of velocity vectors in the velocity grid $W_1$ is most likely to be a velocity vector of the sensor. Therefore, the velocity vector of the sensor can be accurately determined based on the first grid cell.

If a velocity vector corresponding to the grid cell in the velocity grid $W_1$ is a candidate velocity vector of a target measured by the sensor, the velocity vector of the first grid cell in the velocity grid $W_1$ among a plurality of velocity vectors in the velocity grid $W_1$ is most likely to be a velocity vector of a target stationary relative to a reference system. Each velocity component of the velocity vector of the target stationary relative to the reference system and each velocity component of the velocity vector of the sensor are equal in size but opposite in direction. Therefore, each velocity component of the velocity vector of the sensor is an opposite number of each velocity component of the velocity vector of the target stationary relative to the reference system. Targets stationary relative to the reference system in targets measured by the sensor are distributed diversely with a large amount of data. Therefore, velocity vectors of the targets stationary relative to the reference system can be accurately determined based on the first grid cell, so that the velocity vector of the sensor can be accurately determined. Therefore, according to the method described in FIG. 7, the velocity vector of the sensor can be determined accurately.

In an optional implementation, when the velocity grid $W_1$ has a plurality of grid cells with the largest weight, the first grid cell in the velocity grid $W_1$ is a grid cell that is among the plurality of grid cells with the largest weight and that corresponds to a largest velocity vector. For example, in the velocity grid $W_1$ shown in FIG. 5, if weights of a grid cell (3, 3) and a grid cell (4, 4) are the largest, the first grid cell in the velocity grid $W_1$ is a grid cell with a largest velocity vector in the grid cell (3, 3) and the grid cell (4, 4). The largest velocity vector may refer to a velocity vector with a maximum norm or a maximum speed. The norm may be a Euclidean norm or a norm of another type. For example, a Euclidean norm of a velocity vector of the grid cell (3, 3) is $\sqrt{V_x^2(3)+V_y^2(3)}$, and a Euclidean norm of a velocity vector of the grid cell (4, 4) is $\sqrt{V_x^2(4)+V_y^2(4)}$. If $\sqrt{V_x^2(3)+V_y^2(3)}$ is greater than $\sqrt{V_x^2(4)+V_y^2(4)}$, the grid cell (3, 3) is the first grid cell in the velocity grid $W_1$.

In an optional implementation, when the velocity grid $W_1$ has a plurality of grid cells with the largest weight, the first grid cell in the velocity grid $W_1$ is a grid cell that is among the plurality of grid cells with the largest weight and that corresponds to a velocity vector closest to the reference velocity vector. The reference velocity vector of the sensor may be a velocity vector measured by an IMU or another device, or may be a velocity vector obtained based on iterations in the present invention. The velocity vector closest to the reference velocity vector refers to a velocity vector with a smallest distance from the reference velocity vector. The distance may be a Euclidean distance, a Mahalanobis distance, or a distance of another type. For example, in the velocity grid $W_1$ shown in FIG. 5, if weights of a grid cell (3, 3) and a grid cell (4, 4) are the largest, the reference velocity vector is $(V_{xc}, V_{yc})$, a Euclidean distance between the grid cell (3, 3) and the reference velocity vector $(V_{xc}, V_{yc})$ is $\sqrt{(V_x(3)\text{-}V_{xc})^2+(V_y(3)\text{-}V_{yc})^2}$, a Euclidean distance between the grid cell (4, 4) and the reference velocity vector $(V_{xc}, V_{yc})$ is $\sqrt{(V_x(4)\text{-}V_{xc})^2+(V_y(4)\text{-}V_{yc})^2}$, and $\sqrt{(V_x(3)\text{-}V_{xc})^2+(V_y(3)\text{-}V_{yc})^2}$ is less than $\sqrt{(V_x(4)\text{-}V_{xc})^2+(V_y(4)\text{-}V_{yc})^2}$, the grid cell (3, 3) is the first grid cell in the velocity grid $W_1$.

The motion state of the sensor includes the velocity vector of the sensor. Optionally, in addition to the velocity vector of the sensor, the motion state of the sensor may further include other data, such as a position of the sensor.

The following describes six manners of determining the motion state of the sensor based on the velocity vector corresponding to the first grid cell in the velocity grid $W_1$, and certainly a specific implementation in which a motion state determining apparatus determines the motion state of the sensor based on the velocity vector corresponding to the first grid cell in the velocity grid $W_1$ may be another manner. This is not limited in this embodiment of this application.

Manner 1: The specific implementation of determining the motion state of the sensor based on the first grid cell in the velocity grid $W_1$ is: determining that the velocity vector corresponding to the first grid cell in the velocity grid $W_1$ is the velocity vector of the sensor.

In manner 1, the velocity vector of the first grid cell in the velocity grid $W_1$ among the plurality of velocity vectors in the velocity grid $W_1$ is most likely to be the velocity vector of the sensor. Therefore, the velocity vector corresponding to the first grid cell in the velocity grid $W_1$ may be directly determined as the velocity vector of the sensor.

Manner 2: The specific implementation of determining the motion state of the sensor based on the first grid cell in the velocity grid $W_1$ is: determining that an opposite number of each component of the velocity vector corresponding to the first grid cell in the velocity grid $W_1$ is each velocity component of the velocity vector of the sensor. That is, each velocity component of the velocity vector of the sensor is equal to the opposite number of each velocity component of the velocity vector corresponding to the first grid cell in the velocity grid $W_1$. In manner 2, the velocity vector corresponding to the first grid cell in the velocity grid $W_1$ among the plurality of velocity vectors in the velocity grid $W_1$ is most likely to be the velocity vector corresponding to the target stationary relative to the reference system. Because the velocity component of the velocity vector of the sensor and the velocity component of the velocity vector of the target stationary relative to the reference system are same in magnitude, but opposite in direction, the opposite number of the velocity component of the velocity vector corresponding to the first grid cell in the velocity grid $W_1$ may be determined as the velocity component of the velocity vector of the sensor. For example, if the velocity vector corresponding to the first grid cell in the velocity grid $W_1$ is (5, 4), the velocity vector of the sensor is (-5, -4).

Manner 3: The specific implementation of determining the motion state of the sensor based on the first grid cell in the velocity grid $W_1$ is: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, where m=1, 2, ..., M, and M is an integer; and determining that a velocity vector corresponding to the first grid cell in the velocity grid $W_M$ is the velocity vector of the sensor.

Optionally, the first grid cell in the velocity grid $W_m$ may be a grid cell with a largest weight in the velocity grid $W_m$, the first grid cell in the velocity grid $W_m$ may be a grid cell that is in a neighborhood of a grid cell with a largest weight in the velocity grid $W_m$ and that is closest to the reference velocity vector, or the first grid cell in the velocity grid $W_m$ may be a grid cell that is among a plurality of grid cells with maximum weights in the velocity grid $W_m$ and that corresponds to a velocity vector closest to the reference velocity vector. A specific implementation principle of the first grid cell in the velocity grid $W_m$ is similar to that of the first grid cell in the velocity grid $W_1$, and details are not described herein.

Specifically, the reference velocity vector may be equal to a velocity vector corresponding to a grid cell in the velocity grid $W_m$. Preferably, the reference velocity vector may be equal to a velocity vector corresponding to a grid cell located at a central position of the velocity grid $W_m$, or may be equal to a velocity vector corresponding to a grid cell located near a central position. A two-dimensional grid is used as an example. The grid may be similarly obtained according to formula (1) and formula (2), and details are not described herein.

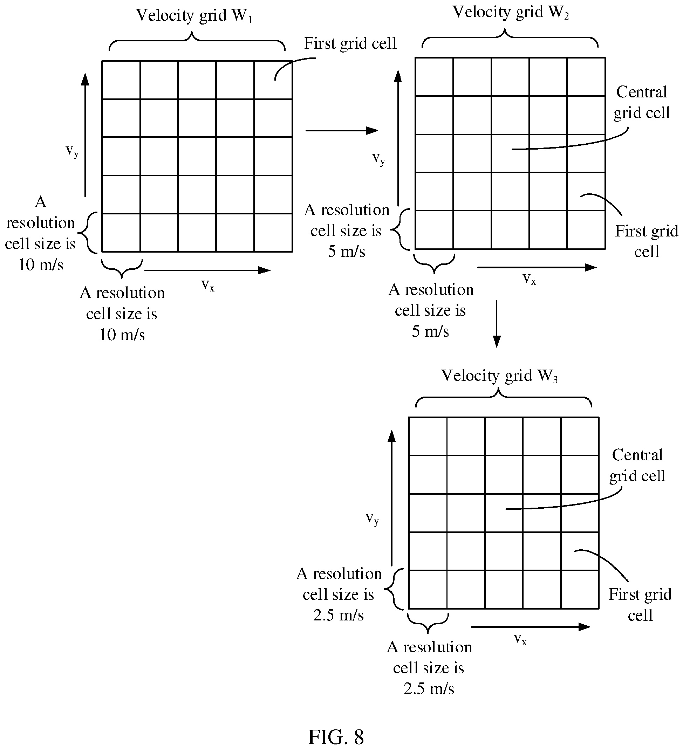

For example, the velocity grid $W_m$ is a two-dimensional grid, where m=1, 2, ..., M, and M is 3. As shown in FIG. 8, after a first grid cell in a velocity grid $W_1$ is determined, a velocity grid $W_2$ is determined based on a velocity vector corresponding to the first grid cell, where a quantity of grid cells included in the velocity grid $W_2$ may be the same as or different from a quantity of resolution cells included in the velocity grid $W_1$. In FIG. 8, for example, the quantity of grid cells included in the velocity grid $W_2$ is the same as the quantity of resolution cells included in the velocity grid $W_1$. The velocity vector corresponding to the first grid cell in the velocity grid $W_1$ is used as a reference velocity vector, and the reference velocity vector is equal to a velocity vector corresponding to a grid cell located at a central position of the velocity grid $W_2$. A resolution cell size of the velocity grid $W_2$ is less than a resolution cell size of the velocity grid $W_1$. For example, as shown in FIG. 8, resolution cell sizes of the velocity grid $W_2$ in a $v_x$ dimension and in a $v_y$ dimension are respectively half resolution cell sizes of the velocity grid $W_1$ in a $v_x$ dimension and in a $v_y$ dimension. The velocity grid $W_2$ may be determined based on the velocity vector corresponding to the grid cell located at the central position of the velocity grid $W_2$ and a resolution cell size and quantity of the velocity grid $W_2$ in each dimension, which is similar to formula (1) and formula (2) as described above. After the velocity grid $W_2$ is determined, a weight of each grid cell in the velocity grid $W_2$ is determined based on the measurement data from the sensor by using a same principle of determining the weight of the grid cell in the velocity grid $W_1$. Then, a first grid cell in the velocity grid $W_2$ is determined, where the first grid cell in the velocity grid $W_2$ is a grid cell with a largest weight in the velocity grid $W_2$.

As shown in FIG. 8, after the first grid cell in the velocity grid $W_2$ is determined, a velocity grid $W_3$ may be determined based on a velocity vector corresponding to the first grid cell in the velocity grid $W_2$, where a quantity of grid cells included in the velocity grid $W_3$ may be the same as or different from the quantity of resolution cells included in the velocity grid $W_2$. In FIG. 8, for example, the quantity of grid cells included in the velocity grid $W_3$ is the same as the quantity of resolution cells included in the velocity grid $W_2$. The velocity vector corresponding to the first grid cell in the velocity grid $W_2$ is used as a reference velocity vector, and the reference velocity vector is equal to a velocity vector corresponding to a grid cell located at a central position of the velocity grid $W_3$. A resolution cell size of the velocity grid $W_3$ is less than the resolution cell size of the velocity grid $W_2$. For example, as shown in FIG. 8, resolution cell sizes of the velocity grid $W_3$ in a $v_x$ dimension and in a $v_y$ dimension are respectively half the resolution cell sizes of the velocity grid $W_2$ in the $v_x$ dimension and in the $v_y$ dimension. The velocity grid $W_3$ may be determined based on the velocity vector corresponding to the grid cell located at the central position of the velocity grid $W_3$ and a resolution cell size and quantity of the velocity grid $W_3$ in each dimension, which is similar to formula (3) and formula (4) as described above. After the velocity grid $W_3$ is determined, a weight of each grid cell in the velocity grid $W_3$ is determined based on the measurement data from the sensor by using the same principle of determining the weight of the grid cell in the velocity grid $W_1$. Then, a first grid cell in the velocity grid $W_3$ is determined, where the first grid cell in the velocity grid $W_3$ is a grid cell with a largest weight in the velocity grid $W_3$. Finally, a velocity vector corresponding to the first grid cell in the velocity grid $W_3$ is determined as the velocity vector of the sensor.

As described above, the velocity vector of the first grid cell in the velocity grid $W_{m-1}$ may be taken as the reference velocity vector of the velocity grid $W_m$; the velocity grid $W_m$ is determined based on the reference velocity vector of the velocity grid $W_m$ and the resolution cell size and quantity of the velocity grid $W_m$ in each dimension; the weight of the grid cell in the velocity grid $W_m$ is determined based on the measurement data from the sensor; and the motion state of the sensor, especially the velocity vector of the sensor, is determined based on the weight of the grid cell in the velocity grid $W_m$. The velocity vector of the sensor is the velocity vector corresponding to the first grid cell in the velocity grid $W_M$.

Optionally, the reference velocity vector of the velocity grid $W_m$ is not necessarily the velocity vector corresponding to the grid cell located at the central position of the velocity grid $W_m$. For reasons such as discretization, the reference velocity vector of the velocity grid $W_m$ may be a velocity vector corresponding to a grid cell in a neighborhood of the central position of the velocity grid $W_m$, or may be a velocity vector corresponding to a grid cell slightly deviating from the central position of the velocity grid $W_m$.

It can be learned that in manner 3, after the velocity vector corresponding to the first grid cell in the velocity grid $W_1$ is determined, m-1 iterations are performed to determine the velocity vector of the sensor. Because the velocity vector of the first grid cell in the velocity grid $W_{m-1}$ may be used as the reference velocity vector of the velocity grid $W_m$, the resolution cell size of the velocity grid $W_m$ in each dimension may be less than the resolution cell size of the velocity grid $W_{m-1}$ in each dimension, and the resolution cell quantity of the velocity grid $W_m$ in each dimension may be equal to a resolution cell quantity of the velocity grid $W_{m-1}$ in each dimension, an initial velocity grid may be obtained based on a larger resolution cell according to manner 3, to quickly obtain an initial velocity vector of the sensor. A resolution cell size is gradually reduced in an iterative process, to improve precision of the velocity vector of the sensor, that is, to more accurately determine the velocity vector of the sensor. In addition, a problem of great computation consumption caused by directly determining the velocity grid based on a smallest resolution cell size is avoided.

Manner 4: The specific implementation of determining the velocity vector of the sensor based on the first grid cell in the velocity grid $W_1$ is: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, where m=1, 2, ..., M, and M is an integer; and determining that magnitude of each component of the velocity vector of the sensor is an opposite number of each component of a velocity vector corresponding to the first grid cell in the velocity grid $W_M$.

Optionally, the first grid cell in the velocity grid $W_m$ is a grid cell with a largest weight in the velocity grid $W_m$, the first grid cell in the velocity grid $W_m$ may be a grid cell that is in a neighborhood of a grid cell with a largest weight in the velocity grid $W_m$ and that is closest to the reference velocity vector, or the first grid cell in the velocity grid $W_m$ may be a grid cell that is among a plurality of grid cells with maximum weights in the velocity grid $W_m$ and that corresponds

to a velocity vector closest to the reference velocity vector. A specific implementation principle of the first grid cell in the velocity grid $W_m$ is similar to that of the first grid cell in the velocity grid $W_1$, and details are not described herein.

Specifically, the reference velocity vector may be equal to a velocity vector corresponding to a grid cell in the velocity grid $W_m$. Preferably, the reference velocity vector may be equal to a velocity vector corresponding to a grid cell located at a central position of the velocity grid $W_m$, or may be equal to a velocity vector corresponding to a grid cell located near a central position. A two-dimensional grid is used as an example. The grid may be similarly obtained according to formula (1) and formula (2), and details are not described herein. For reasons such as discretization, the velocity vector corresponding to the first grid cell in the velocity grid $W_{m-1}$ may be a velocity vector corresponding to a grid cell slightly deviating from a central grid cell in the velocity grid $W_m$.

A difference between manner 3 and manner 4 lies in that, in manner 3, velocity vectors corresponding to grid cells in the velocity grid $W_1$ to the velocity grid $W_m$ are candidate velocity vectors of the sensor, while in manner 4, velocity vectors corresponding to grid cells in the velocity grid $W_1$ to the velocity grid $W_m$ are candidate velocity vectors of the target measured by the sensor. A principle of determining the first grid cell in the velocity grid $W_m$ in manner 4 is the same as that of determining the first grid cell in the velocity grid $W_m$ in manner 3, and details are not described herein again by using an example. The velocity vector corresponding to the first grid cell in the velocity grid $W_m$ is the velocity vector of the target stationary relative to the reference system. Because the velocity vector of the sensor and the velocity vector of the target stationary relative to the reference system are same in magnitude, but opposite in direction, each component of the velocity vector of the sensor may be determined as the opposite number of each component of the velocity vector corresponding to the first grid cell in the velocity grid $W_M$.

It can be learned that in manner 4, after the velocity vector corresponding to the first grid cell in the velocity grid $W_1$ is determined, m-1 iterations are performed to determine the velocity vector of the sensor. Because the velocity vector of the first grid cell in the velocity grid $W_{m-1}$ may be used as the reference velocity vector of the velocity grid $W_m$, the resolution cell size of the velocity grid $W_m$ in each dimension may be less than the resolution cell size of the velocity grid $W_{m-1}$ in each dimension, and a resolution cell quantity of the velocity grid $W_m$ in each dimension may be equal to a resolution cell quantity of the velocity grid $W_{m-1}$ in each dimension, an initial velocity grid may be obtained based on a larger resolution cell according to manner 4, to quickly obtain an initial velocity vector of the sensor. A resolution cell size is gradually reduced in an iterative process, to improve precision of the velocity vector of the sensor, that is, to more accurately determine the velocity vector of the sensor. In addition, a problem of great computation consumption caused by directly determining the velocity grid based on a smallest resolution cell size is avoided.

In an optional implementation, after the velocity vector of the sensor is determined, measurement data of the target stationary relative to the reference system may be further determined based on the velocity vector of the sensor from the measurement data. According to this optional implementation, measurement data of a target moving relative to the reference system and the measurement data of the target stationary relative to the reference system can be separated.

Optionally, a two-dimensional velocity vector is used as an example. The velocity vector of the sensor is $(v_x^*, \ v_y^*)$. If an $n^{th}$ piece of measurement data satisfies

$$\left| v_x^* \cdot cos\theta_n + v_y^* \cdot sin\theta_n + \dot{r}_n \right| \le D_T \quad (59),$$

the $n^{th}$ piece of measurement data is the measurement data of the target stationary relative to the reference system; otherwise, the $n^{th}$ piece of measurement data is the measurement data of the moving target, where $D_T$ is a non-negative threshold, and $\theta_n$ and $\dot{r}_n$ are respectively a measurement value of an azimuth angle and a measurement value of a radial velocity that are included in the $n^{th}$ piece of measurement data.

Optionally, a three-dimensional velocity vector is used as an example. If the velocity vector of the sensor is $(v_x^*, \ v_y^*, \ v_z^*)$, and an $n^{th}$ piece of measurement data satisfies

$$\left| v_x^* \cdot cos\varphi_n cos\theta_n + v_y^* \cdot cos\varphi_n sin\theta_n + v_z^* \cdot sin\varphi_n + \dot{r}_n \right| \le D_T \quad (60),$$

the $n^{th}$ piece of measurement data is the measurement data of the target stationary relative to the reference system; otherwise, the $n^{th}$ piece of measurement data is the measurement data of the moving target, where $D_T$ is a non-negative threshold, and $\theta_n$, $\varphi_n$ and $\dot{r}_n$ are respectively a measurement value of an azimuth angle, a measurement value of pitch angle, and a measurement value of a radial velocity that are included in the $n^{th}$ piece of measurement data.

It should be noted that, in the foregoing method, the motion state of the sensor may be further determined based on a direction cosine measurement value of the sensor instead of the measurement value of the azimuth angle or measurement values of the azimuth angle and the pitch angle. In this case, parameters in the foregoing formula may be replaced according to the following formula: (The following formula only reflects a relationship between a direction cosine and an azimuth angle or an azimuth angle and a pitch angle, and does not reflect n. A person skilled in the art may know that a direction cosine value of the nth piece of measurement data needs to correspond to an azimuth angle, a pitch angle, and the like in the nth piece of measurement data.)

For the two-dimensional velocity vector:

$\Lambda_x = cos\theta$, and $\Lambda_y = sin\theta$, where
$\Lambda_x$, $\Lambda_y$ are direction cosines, and $\theta$ is the azimuth angle.

For the three-dimensional velocity vector:

$\Lambda_x = cos\varphi cos\theta$, $\Lambda_y = cos\varphi sin\theta$, and $\Lambda_z = sin\varphi$, where
$\Lambda_x$, $\Lambda_y$ and $\Lambda_z$ are direction cosines, $\theta$ is the azimuth angle, and $\varphi$ is the pitch angle.

Manner 5: The specific implementation of determining the velocity vector of the sensor based on the first grid cell in the velocity grid $W_1$ is: determining, based on the velocity vector corresponding to the first grid cell in the velocity grid $W_1$, measurement data of the target stationary relative to the reference system from the measurement data; and determining the velocity vector of the sensor based on the measurement data of the target stationary relative to the reference system. According to this optional implementation, the velocity vector of the sensor can be determined accurately. Optionally, the reference system may be a geodetic coordinate system, or an inertial coordinate system relative to the earth.

Optionally, the velocity vector corresponding to the grid cell in the velocity grid $W_1$ is the candidate velocity vector of the sensor. The velocity vector corresponding to the first grid cell in the velocity grid $W_1$ among the plurality of velocity vectors in the velocity grid $W_1$ is most likely to be the velocity vector of the sensor. The first grid cell in the velocity grid $W_1$ is (i*, j*), and the corresponding velocity vector is $(v_x^*, \ v_y^*)$. If an nth piece of measurement data satisfies the formula (59), the nth piece of measurement data is the measurement data of the target stationary relative to the reference system.

Optionally, the velocity vector corresponding to the grid cell in the velocity grid $W_1$ is the candidate velocity vector of the sensor. The velocity vector corresponding to the first grid cell in the velocity grid $W_1$ among the plurality of velocity vectors in the velocity grid $W_1$ is most likely to be the velocity vector of the sensor. The first grid cell in the velocity grid $W_1$ is (i*, j*, k*), and the corresponding velocity vector is $(v_x^*, \ v_y^*, \ v_z^*)$. If an nth piece of measurement data satisfies the formula (60), the nth piece of measurement data is the measurement data of the target stationary relative to the reference system.

Optionally, the velocity vector corresponding to the grid cell in the velocity grid $W_1$ is the candidate velocity vector of the target measured by the sensor. The velocity vector corresponding to the first grid cell in the velocity grid $W_1$ among the plurality of velocity vectors in the velocity grid $W_1$ is most likely to be the velocity vector of the target stationary relative to the reference system. If the first grid cell in the velocity grid $W_1$ is (i*, j*), the corresponding velocity vector is $(v_x^*, \ v_y^*)$, and an nth piece of measurement data satisfies $|v_x^* \cdot cos\theta_n + v_y^* \cdot sin\theta_n - \dot{r}_n \leq D_T$, the nth piece of measurement data is the measurement data of the target stationary relative to the reference system, where $D_T$ is a non-negative threshold.

Optionally, the velocity vector corresponding to the grid cell in the velocity grid $W_1$ is the candidate velocity vector of the target measured by the sensor. The velocity vector corresponding to the first grid cell in the velocity grid $W_1$ among the plurality of velocity vectors in the velocity grid $W_1$ is most likely to be the velocity vector of the target stationary relative to the reference system. If the first grid cell in the velocity grid $W_1$ is (i*, j*, k*), the corresponding velocity vector is $(v_x^*, \ v_y^*, \ v_z^*)$, and an nth piece of measurement data satisfies $|v_x^* \cdot cos\varphi_n cos\theta_n + v_y^* \cdot cos\varphi_n sin\theta_n + v_z^* \cdot sin\varphi_n - \dot{r}_n| \leq D_T$, the nth piece of measurement data is the measurement data of the target stationary relative to the reference system, where $D_T$ is a non-negative threshold.

Optionally, in manner 5, a first specific implementation of determining the velocity vector of the sensor based on the measurement data of the target stationary relative to the reference system may be: determining a first grid cell in a velocity grid $W_m$, where the velocity grid $W_m$ includes a plurality of grid cells, each grid cell in the velocity grid $W_m$

corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined based on newly determined measurement data of the target stationary relative to the reference system, and the newly determined measurement data of the target stationary relative to the reference system is determined based on the velocity vector corresponding to the first grid cell in the velocity grid $W_{m-1}$, where m=1, 2, ..., M, and M is an integer; and determining that a velocity vector corresponding to the first grid cell in the velocity grid $W_M$ is the velocity vector of the sensor.

Optionally, the first grid cell in the velocity grid $W_m$ is a grid cell with a largest weight in the velocity grid $W_m$, the first grid cell in the velocity grid $W_m$ may be a grid cell that is in a neighborhood of a grid cell with a largest weight in the velocity grid $W_m$ and that is closest to the reference velocity vector, or the first grid cell in the velocity grid $W_m$ may be a grid cell that is among a plurality of grid cells with maximum weights in the velocity grid $W_m$ and that corresponds to a velocity vector closest to the reference velocity vector. A specific implementation principle of the first grid cell in the velocity grid $W_m$ is similar to that of the first grid cell in the velocity grid $W_1$, and details are not described herein.

Specifically, the reference velocity vector may be equal to a velocity vector corresponding to a grid cell in the velocity grid $W_m$. Preferably, the reference velocity vector may be equal to a velocity vector corresponding to a grid cell located at a central position of the velocity grid $W_m$, or may be equal to a velocity vector corresponding to a grid cell located near a central position. A two-dimensional grid is used as an example. The grid may be similarly obtained according to formula (1) and formula (2), and details are not described herein.

For example, the velocity grid $W_m$ is a two-dimensional grid, where m=1, 2, ..., M, and M is 3. After a first grid cell in a velocity grid $W_1$ is determined, measurement data of a target stationary relative to a reference system is determined based on the first grid cell in the velocity grid $W_1$ from the measurement data from the sensor. As shown in FIG. 8, after the first grid cell in the velocity grid $W_1$ is determined, a velocity grid $W_2$ is determined. Each grid cell in the velocity grid $W_2$ corresponds to one velocity vector. A quantity of grid cells included in the velocity grid $W_2$ may be the same as or different from a quantity of resolution cells included in the velocity grid $W_1$. In FIG. 8, for example, the quantity of grid cells included in the velocity grid $W_2$ is the same as the quantity of resolution cells included in the velocity grid $W_1$.

A velocity vector corresponding to the first grid cell in the velocity grid $W_1$ is used as a reference velocity vector, and the reference velocity vector is equal to a velocity vector corresponding to a grid cell located at a central position of the velocity grid $W_2$. A resolution cell size of the velocity grid $W_2$ is less than a resolution cell size of the velocity grid $W_1$. A resolution cell size of the velocity grid $W_2$ is less than a resolution cell size of the velocity grid $W_1$. For example, as shown in FIG. 8, resolution cell sizes of the velocity grid $W_2$ in a $v_x$ dimension and in a $v_y$ dimension are respectively half resolution cell sizes of the velocity grid $W_1$ in a $v_x$ dimension and in a $v_y$ dimension. The velocity grid $W_2$ can be determined based on the velocity vector corresponding to the grid cell located at the central position of the velocity grid $W_2$ and a resolution cell size and quantity of the velocity grid $W_2$ in each dimension. After the velocity grid $W_2$ is determined, a weight of a grid cell in the velocity grid $W_2$ is determined based on the measurement data of the target stationary relative to the reference system. Then, a first grid cell in the velocity grid $W_2$ is determined, where the first grid cell in the velocity grid $W_2$ is a grid cell with a largest weight in the velocity grid $W_2$.

As shown in FIG. 8, after the first grid cell in the velocity grid $W_2$ is determined, measurement data corresponding to a target stationary relative to the reference system is again separated from one frame of measurement data from the sensor based on a velocity vector corresponding to the first grid cell in the velocity grid $W_2$, or measurement data of a target stationary relative to the reference system is again separated from the measurement data of the target that is stationary relative to the reference system and that is determined last time. After the first grid cell in the velocity grid $W_2$ is determined, a velocity grid $W_3$ may be determined based on the velocity vector corresponding to the first grid cell in the velocity grid $W_2$, where a quantity of grid cells included in the velocity grid $W_3$ may be the same as or different from the quantity of resolution cells included in the velocity grid $W_2$. In FIG. 8, for example, the quantity of grid cells included in the velocity grid $W_3$ is the same as the quantity of resolution cells included in the velocity grid $W_2$. A velocity vector corresponding to a grid cell located at a central position of the velocity grid $W_3$ is equal to the velocity vector corresponding to the first grid cell in the velocity grid $W_2$. A resolution cell size of the velocity grid $W_3$ is less than or equal to the resolution cell size of the velocity grid $W_2$. For example, as shown in FIG. 8, resolution cell sizes of the velocity grid $W_3$ in a $v_x$ dimension and in a $v_y$ dimension are respectively half the resolution cell sizes of the velocity grid $W_2$ in the $v_x$ dimension and in the $v_y$ dimension. The velocity grid $W_3$ may be determined based on the velocity vector corresponding to the grid cell located at the central position of the velocity grid $W_3$ and a resolution cell size and quantity of the velocity grid $W_3$ in each dimension. After the velocity grid $W_3$ is determined, a weight of a grid cell in the velocity grid $W_3$ is determined based on newly determined measurement data of the target stationary relative to the reference system. Then, a first grid cell in the velocity grid $W_3$ is determined, where the first grid cell in the velocity grid $W_3$ is a grid cell with a largest weight in the velocity grid $W_3$. Finally, a velocity vector corresponding to the first grid cell in the velocity grid $W_3$ is

determined as the velocity vector of the sensor.

As described above, the velocity vector of the first grid in the velocity grid $W_{m-1}$ may be taken as the reference velocity vector of the velocity grid $W_m$; the velocity grid $W_m$ is determined based on the reference velocity vector of the velocity grid $W_m$ and the resolution cell size and quantity of the velocity grid $W_m$ in each dimension; the weight of the grid cell in the velocity grid $W_m$ is determined based on the newly determined measurement data of the target stationary relative to the reference system; and the motion state of the sensor, especially the velocity vector of the sensor, is determined based on the weight of the grid cell in the velocity grid $W_m$. The velocity vector of the sensor is the velocity vector corresponding to the first grid cell in the velocity grid $W_M$.

Optionally, the reference velocity vector of the velocity grid $W_m$ is not necessarily the velocity vector corresponding to the grid cell located at the central position of the velocity grid $W_m$. For reasons such as discretization, the reference velocity vector of the velocity grid $W_m$ may be a velocity vector corresponding to a grid cell in a neighborhood of the central position of the velocity grid $W_m$, or may be a velocity vector corresponding to a grid cell slightly deviating from the central position of the velocity grid $W_m$.

It can be learned that, in the first specific implementation of determining the velocity vector of the sensor based on the measurement data of the target stationary relative to the reference system, the measurement data of the target stationary relative to the reference system is determined based on the velocity vector corresponding to the first grid cell in the velocity grid $W_1$ from the measurement data, and m-1 iterations may be performed based on the measurement data of the target stationary relative to the reference system, to determine the velocity vector of the sensor. According to the first specific implementation, the data of the target stationary relative to the reference system can be effectively separated, and weighting of a grid cell based on measurement data of a moving target is reduced or avoided, thereby reducing or avoiding interference of the measurement data of the moving target. In this way, the velocity vector of the sensor can be determined more accurately.

Optionally, in manner 5, a second specific implementation of determining the velocity vector of the sensor based on the measurement data of the target stationary relative to the reference system may be: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined based on newly determined measurement data of the target stationary relative to the reference system, and the newly determined measurement data of the target stationary relative to the reference system is determined based on the velocity vector corresponding to the first grid cell in the velocity grid $W_{m-1}$, where m=1, 2, ..., M, and M is an integer; and determining that an opposite number of each velocity component of a velocity vector corresponding to the first grid cell in the velocity grid $W_M$ is each velocity component of the velocity vector of the sensor.

Optionally, the first grid cell in the velocity grid $W_m$ may be a grid cell with a largest weight in the velocity grid $W_m$, the first grid cell in the velocity grid $W_m$ may be a grid cell that is in a neighborhood of a grid cell with a largest weight in the velocity grid $W_m$ and that is closest to the reference velocity vector, or the first grid cell in the velocity grid $W_m$ may be a grid cell that is among a plurality of grid cells with maximum weights in the velocity grid $W_m$ and that corresponds to a velocity vector closest to the reference velocity vector. A specific implementation principle of the first grid cell in the velocity grid $W_m$ is similar to that of the first grid cell in the velocity grid $W_1$, and details are not described herein.

Specifically, the reference velocity vector may be equal to a velocity vector corresponding to a grid cell in the velocity grid $W_m$. Preferably, the reference velocity vector may be equal to a velocity vector corresponding to a grid cell located at a central position of the velocity grid $W_m$, or may be equal to a velocity vector corresponding to a grid cell located near a central position. For reasons such as discretization, the velocity vector corresponding to the first grid cell in the velocity grid $W_{m-1}$ may be a velocity vector corresponding to a grid cell slightly deviating from a central grid cell in the velocity grid $W_m$.

A difference between the first specific implementation of determining the velocity vector of the sensor based on the measurement data of the target stationary relative to the reference system and the second specific implementation of determining the velocity vector of the sensor based on the measurement data of the target stationary relative to the reference system lies in that, in the first specific implementation, velocity vectors corresponding to grid cells in the velocity grid $W_1$ to the velocity grid $W_m$ are candidate velocity vectors of the sensor, while in the second specific implementation, velocity vectors corresponding to grid cells in the velocity grid $W_1$ to the velocity grid $W_m$ are candidate velocity vectors of the target measured by the sensor. A principle of determining the first grid cell in the velocity grid $W_m$ in the first specific implementation is the same as that of determining the first grid cell in the velocity grid $W_m$ in the second specific implementation, and details are not described herein again by using an example. In the second specific implementation, the velocity vector corresponding to the first grid cell in the velocity grid $W_m$ is the velocity vector of the target stationary relative to the reference system. Because the velocity vector of the sensor and the velocity vector of the target stationary relative to the reference system are same in magnitude, but opposite in direction, the opposite number of the velocity component of the velocity vector corresponding to the first grid cell in the velocity grid $W_M$ may be determined as the velocity component of the velocity vector of the sensor.

It can be learned that, in the second specific implementation of determining the velocity vector of the sensor based on the measurement data of the target stationary relative to the reference system, after the measurement data of the target stationary relative to the reference system is determined based on the velocity vector corresponding to the first grid cell in the velocity grid $W_1$ from the measurement data, M-1 iterations are performed based on the measurement data of the target stationary relative to the reference system, to determine the velocity vector of the sensor. Therefore, an initial velocity grid may be obtained based on a larger resolution cell according to the second specific implementation, to quickly obtain an initial velocity vector of the sensor. A resolution cell size is gradually reduced in an iterative process, to improve precision of the velocity vector of the sensor, that is, to more accurately determine the velocity vector of the sensor. In addition, a problem of great computation consumption caused by directly determining the velocity grid based on a smallest resolution cell size is avoided.

Optionally, in manner 5, a third specific implementation of determining, by the motion state determining apparatus, the velocity vector of the sensor based on the measurement data of the target stationary relative to the reference system may be:

determining the velocity vector of the sensor according to the following measurement equation:

$$-\dot{r}_k = h_k v_s - n_{\dot{r}} \quad (61),$$

or

$$\dot{r}_k = h_k v_T + n_{\dot{r}} \quad (62),$$

where

$v_s$ is the velocity vector of the sensor, and $v_T$ is the velocity vector of the target stationary relative to the reference system. It is readily known that $v_s = -v_T$.

Therefore, the velocity vector $v_s$ of the sensor can be obtained directly according to formula (61); or equivalently, the velocity vector $v_T$ of the target stationary relative to the reference system is obtained according to formula (62), and the velocity vector $v_s$ of the sensor is obtained according to $v_s = -v_T$. (61) is used in the following as an example for description, the velocity vector $v_T$ of the target stationary relative to the reference system may be obtained equivalently according to (62). Details are not further described in this specification.

$\dot{r}_k$ is a measurement value of a radial velocity of a $k^{th}$ target stationary relative to the reference system; $n_{\dot{r}}$ is a measurement error of the radial velocity, and a mean value of the measurement error is 0; and a variance is $\sigma_{\dot{r}}^2$ , and the value of the variance depends on performance of the sensor

A two-dimensional velocity vector is used as an example. $v_s$ and $h_k$ may be respectively

$$v_s = [v_{s,x} \quad v_{s,y}]^T \quad (63),$$

and

$$h_k = [cos\theta_k \quad sin\theta_k] \quad (64),$$

where

$v_{s,x}$ and $v_{s,y}$ are two components of the velocity vector of the sensor, $[\ ]^T$ represents transposition of a matrix or vector, and $\theta_k$ is a measurement value of an azimuth angle of the $k^{th}$ target stationary relative to the reference system.

A three-dimensional velocity vector is used as an example. $v_s$ and $h_k$ may be respectively

$$v_s = [v_{s,x} \quad v_{s,y} \quad v_{s,z}]^T \quad (65),$$

and

$$h_k = [cos\varphi_k cos\theta_k \quad cos\varphi_k sin\theta_k \quad sin\varphi_k] \quad (66),$$

where

$v_{s,x}$, $v_{s,y}$ and $v_{s,z}$ are three velocity components of the velocity vector of the sensor, $\theta_k$ is a measurement value of an azimuth angle of the $k^{th}$ target stationary relative to the reference system, and $\varphi_k$ is a measurement value of a pitch angle of the $k^{th}$ target stationary relative to the reference system.

Specifically, the velocity vector of the sensor may be determined based on a least square (least square, LS) estimation and/or sequential block filtering according to the measurement equation (61) or (62).

It should be noted that, in the foregoing method, the motion state of the sensor may be further determined based on a direction cosine measurement value of the sensor instead of the measurement value of the azimuth angle or measurement values of the azimuth angle and the pitch angle. In this case, parameters in the foregoing formula may be replaced according to the following formula: (The following formula only reflects a relationship between a direction cosine and an azimuth angle or an azimuth angle and a pitch angle, and does not reflect k. A person skilled in the art may know that a direction cosine value of the $k^{th}$ target stationary relative to the reference system needs to correspond to an azimuth angle, a pitch angle, and the like of the $k^{th}$ target stationary relative to the reference system.)

For the two-dimensional velocity vector:

$\Lambda_x = cos\theta$, and $\Lambda_y = sin\theta$, where
$\Lambda_x$, $\Lambda_y$ are direction cosines, and $\theta$ is the azimuth angle.

For the three-dimensional velocity vector:

$\Lambda_x = cos\varphi cos\theta$, $\Lambda_y = cos\varphi sin\theta$, and $\Lambda_z = sin\varphi$, where
$\Lambda_x$, $\Lambda_y$ and $\Lambda_z$ are direction cosines, $\theta$ is the azimuth angle, and $\varphi$ is the pitch angle.

Solution 1: The velocity vector of the sensor is determined based on the least square (least square, LS) estimation.

Specifically, a least square estimation value of the velocity vector of the sensor may be obtained based on a radial velocity vector and a measurement matrix corresponding to the radial velocity vector. Optionally, the least square estimation value of the velocity vector of the sensor is:

$$v_s^{LS} = -H_{N_1}^{-1}\dot{r}_{N_1} \quad (67),$$

or

$$v_s^{LS} = -\left(H_{N_1}^T H_{N_1}\right)^{-1} H_{N_1}^T * \dot{r}_{N_1} \quad (68),$$

where

$v_s^{LS}$ is the least square estimation value of the velocity vector of the sensor, that is, $v_s^{LS}$ is a determined velocity vector of the sensor.

Alternatively,

$$v_s^{RLS} = -\left(H_{N_1}^T H_{N_1} + R\right)^{-1} H_{N_1}^T * \dot{r}_k \quad (69),$$

where

$v_s^{RLS}$ is a regularized least square estimation value of the velocity vector of the sensor, that is, $v_s^{RLS}$ is a determined velocity vector of the sensor. R is a positive semidefinite matrix or a positive definite matrix used for regularization. For example,

$$R = \alpha \cdot I \quad (70),$$

where

I is an identity matrix of order $N_1$, $\alpha$ is a non-negative or positive constant, for example, $\alpha = \gamma \cdot \sigma_{\dot{r}}^2$, where $\gamma \geq 0$.

The radial velocity vector $\dot{r}_{N1}$ is a vector combining $N_1$ measurement values of radial velocities in $N_1$ pieces of measurement data corresponding to the target stationary relative to the reference system, the matrix $H_{N1}$ is a measurement matrix corresponding to the radial velocity vector $\dot{r}_{N_1}$, and $N_1$ is a positive integer greater than 1.

The radial velocity vector $\dot{r}_{N_1}$ and the corresponding measurement matrix $H_{N_1}$ satisfy the following measurement equation:

$$-\dot{\mathrm{r}}_{N_1} = \mathrm{H}_{N_1} v_s - n_{\dot{r}} \quad (71).$$

Specifically, the radial velocity vector $\dot{r}_{N_1}$ can be expressed as $\dot{r}_{N_1} = \begin{bmatrix} \dot{r}_{i_1} & \cdots & \dot{r}_{i_{N_1}} \end{bmatrix}^{\mathrm{T}}$, where $\dot{r}_{i_1}$ represents an $i_1{}^{\mathrm{th}}$ radial velocity measurement value corresponding to the target stationary relative to the reference system, and $n_r$ is a corresponding measurement error vector that includes corresponding radial velocity measurement errors as described above. Correspondingly, the measurement matrix $H_{N_1}$ can be expressed as

$$\mathrm{H}_{N_1} = \begin{bmatrix} h_{i_1} \\ \vdots \\ h_{i_{N_1}} \end{bmatrix} \quad (72).$$

Optionally, that the sensor obtains azimuth angle and radial velocity measurement values is used as an example. The radial velocity measurement matrix $H_{N_1}$ includes $h_{i_1} = [\cos\theta_{i_1} \ \sin\theta_{i_1}$, $h_{i_2} = [\cos\theta_{i_2} \ \sin\theta_{i_2}]$, ..., and $h_{i_{N_1}} = [\cos\theta_{i_{N_1}} \ \sin\theta_{i_{N_1}}]$, where $\theta_{i_1}$, $\theta_{i_2}$, ..., and $\theta_{i_{i_{N_1}}}$ are the azimuth angle measurement values, and $N_1 \geq 2$.

Optionally, that the sensor obtains azimuth angle, pitch angle, and radial velocity measurement values is used as an example. The radial velocity measurement matrix $H_{N_1}$ includes $h_{i_1} = [\cos\varphi_{i_1} \cos\theta_{i_1} \ \cos\varphi_{i_1} \sin\theta_{i_1} \ \sin\varphi_{i_1}]$, $h_{i_2} = [\cos\varphi_{i_2} \cos\theta_{i_2} \ \cos\varphi_{i_2} \sin\theta_{i_2} \ \sin\varphi_{i_2}]$, ..., and $h_{i_{N_1}} = [\cos\varphi_{i_{N_1}} \cos\theta_{i_{N_1}} \ \cos\varphi_{i_{N_1}} \sin\theta_{i_{N_1}} \ \sin\varphi_{i_{N_1}}]$, where $\theta_{i_1}$, $\theta_{i_2}$, ..., and $\theta_{i_{i_{N_1}}}$ are the azimuth angle measurement values, $\varphi_{i_1}$, $\varphi_{i_2}$, ..., and $\varphi_{i_{i_{N_1}}}$ are the pitch angle measurement values, and $N_1 \geq 3$.

In an implementation, selection of the above $\theta_{i_1}$, $\theta_{i_2}$, ..., and $\theta_{i_{N_1}}$ or $\varphi_{i_1}$, $\varphi_{i_2}$, ..., and $\varphi_{i_{N_1}}$ should be made to keep spacing between them as large as possible, to obtain a more precise least square estimation. Under the condition of the angle selection with spacing as large as possible, a condition number of the measurement matrix can be as small as possible.

Optionally, selection of each radial velocity component of the radial velocity vector is made to keep each column vector of the corresponding measurement matrix orthogonal to each other as much as possible.

Solution 2: The motion state of the sensor is determined based on the sequential block filtering.

Specifically, the motion state of the sensor may be obtained based on the sequential block filtering, and the M radial velocity vectors and corresponding measurement matrices, where a radial velocity vector that corresponds to the target stationary relative to the reference system and that includes K radial velocity measurement values is used by the sequential filtering each time.

Optionally, an $m^{\mathrm{th}}$ estimation formula of the sequential filtering is as follows:

$$v_{s,m}^{MMSE} = v_{s,m-1}^{MMSE} + G_m\left(-\dot{r}_{m,K} - H_{m,K} * v_{s,m-1}^{MMSE}\right), m = 1, 2, ..., \mathrm{M} \ (73),$$

where

$G_m$ is a gain matrix, $\dot{r}_{m,K}$ includes the K radial velocity measurement values, and $H_{m,K}$ includes the K radial velocity measurement matrices, as described above. For a two-dimensional velocity vector estimation, K≥2; and for a three-dimensional velocity vector estimation, K≥3.

Optionally, the gain matrix may be

$$G_m = P_{m,1|0} * H_{m,K}^T * \left(H_{m,K} * P_{m,1|0} * H_{m,K}^T + R_{m,K}\right)^{-1} \quad (74),$$

where

$R_{m,K}$ is a covariance matrix of a radial velocity vector measurement error, for example,

$$R_{m,K} = \sigma_{\dot{r}}^2 * I_K \quad (75),$$

$$P_{m,1|1} = \left(I - G_{m-1}H_{m-1,K}\right)P_{m,1|0} \quad (76),$$

and

$$P_{m,1|0} = P_{m-1,1|1} \quad (77).$$

Optionally, in an implementation, an initial estimation and a corresponding covariance $P_{0,1|1} = P_0$ may be obtained based on prior information.

$$P_0 = Q \quad (78),$$

and

$$v_{s,0}^{MMSE} = 0 \quad (79),$$

where

Q is a preset covariance matrix of a velocity estimation, and $v_{s,M}^{MMSE}$ is a determined velocity vector of the sensor.

Solution 3: The motion state of the sensor is determined based on the least square and the sequential block filtering.

Specifically, the measurement data that is of the sensor and that corresponds to the target stationary relative to the reference system may be divided into two parts, where the first part of data is used to obtain a least square estimation value of the velocity vector of the sensor; the second part of data is used to obtain a sequential block filtering estimation value of the velocity vector of the sensor; and the least square estimation value of the velocity vector of the sensor is used as an initial value of the sequential block filtering.

Optionally, in an implementation, an initial estimation and a corresponding covariance $P_{0,1|1} = P_0$ may be obtained based on a least square estimation.

$$P_0 = P^{LS} \quad (80),$$

and

$$v_0^{MMSE} = v^{LS} \quad (81),$$

where

$$\mathrm{P^{LS}} = \mathrm{G_0 R_{N_1} G_0^T} , \quad G_0 = \left(H_{N_1}^T H_{N_1}\right)^{-1} H_{N_1}^T \text{ or } G_0 = (H_{N_1})^{-1}, \text{ and } R_{N_1} = \sigma_{\dot{r}}^2 * I_{N_1} .$$

Alternatively, an initial estimation and a corresponding covariance $P_{0,1|1} = P_0$ are obtained based on a regularized least square estimation.

$$P_0 = P^{RLS} \quad (82),$$

and

$$v_0^{MMSE} = v^{RLS} \quad (83),$$

where

$$P^{RLS} = G_0 R_{N_1} G_0^T, \quad G_0 = \left(H_{N_1}^T H_{N_1} + R\right)^{-1} H_{N_1}^T, R_{N_1} = \sigma_{\dot{r}}^2 * I_{N_1}.$$

$\mathrm{v_{s,m}^{MMSE}}$ is a sequential block filtering value of a velocity of the sensor for an $m^{th}$ time, and $I_K$ is a $K \times K$ identity matrix.

Optionally, for different values of m, the foregoing $\dot{r}_{m,K}$ and $H_{m,K}$ may be different from each other. Values of K may be the same or different for different values of m, which depends on a situation. The sequential filtering estimation can effectively reduce impact of measurement noise and improve estimation precision of the motion velocity vector of the sensor.

It should be noted that the velocity vector of the target stationary relative to the reference system may be obtained first, and the velocity vector of the sensor may be obtained according to the following relationship:

$$v_s^{LS} = -v_T^{LS} \quad (84),$$

and

$$v_T^{LS} = H_{N_1}^{-1} \dot{r}_{N_1} \quad (85)$$

or

$$v_T^{LS} = \left(H_{N_1}^T H_{N_1}\right)^{-1} H_{N_1}^T * \dot{r}_{N_1} \quad (86),$$

where

$\mathrm{v_T^{LS}}$ is a least square estimation value of the target stationary relative to the reference system, that is, it can be considered that $\mathrm{v_T^{LS}}$ is a determined velocity vector of the target stationary relative to the reference system.

Alternatively,

$$v_s^{RLS} = -v_T^{RLS} \quad (87),$$

and

$$v_T^{RLS} = \left(H_{N_1}^T H_{N_1} + R\right)^{-1} H_{N_1}^T * \dot{r}_k \quad (88),$$

where

$v_T^{RLS}$ is a regularized least square estimation value of the velocity vector of the target stationary relative to the reference system, that is, it can be considered that $v_T^{RLS}$ is a determined velocity vector of the target stationary relative to the reference system.

Alternatively,

$$v_s^{MMSE} = -v_{T,M}^{MMSE} \quad (89),$$

and

$$v_{T,m}^{MMSE} = v_{T,m-1}^{MMSE} + G_m(\dot{r}_{m,K} - H_{m,K} * v_{T,m-1}^{MMSE}), m = 1,2,\dots,\mathrm{M} \quad (90),$$

where

$G_m$, $\dot{r}_{m,K}$, $H_{m,K}$, and $P_{m-1}$ are as described above.

An example in which measurement of an azimuth angle and a radial velocity of the sensor and K=2 is used. An $m^{th}$ radial velocity vector is represented as $\dot{r}_{m,K} = [\dot{r}_{m,1}\ \dot{r}_{m,2}]^T$, where $\dot{r}_{m,1}$, $\dot{r}_{m,2}$ are respectively the first and second radial velocity measurement values in an $m^{th}$ group of measurement data of the target stationary relative to the reference system, and a corresponding measurement matrix is

$$H_{m,K} = \begin{bmatrix} cos\theta_{m,1} & sin\theta_{m,1} \\ cos\theta_{m,2} & sin\theta_{m,2} \end{bmatrix} \quad (91),$$

where

$\theta_{m,i}$, i = 1,2 is an $i^{th}$ azimuth angle measurement value in the $m^{th}$ group of measurement data of the target stationary relative to the reference system.

Similarly, an example in which measurement of an azimuth angle, a pitch angle, and a radial velocity of the sensor and K=3 is used. An $m^{th}$ radial velocity vector is represented as $\dot{r}_{m,K} = [\dot{r}_{m,1}\ \dot{r}_{m,2}\ \dot{r}_{m,3}]^T$, where $\dot{r}_{3m,i}$, i = 1,2,3 is an $i^{th}$ radial velocity measurement value in an $m^{th}$ group of measurement data of the target stationary relative to the reference system, and a corresponding measurement matrix is

$$H_{m,K} = \begin{bmatrix} cos\varphi_{m,1} \cdot cos\theta_{m,1} & cos\varphi_{m,1} \cdot sin\theta_{m,1} & sin\varphi_{m,1} \\ os\varphi_{m,2} \cdot cos\theta_{m,2} & cos\varphi_{m,2} \cdot sin\theta_{m,2} & sin\varphi_{m,2} \\ cos\varphi_{m,3} \cdot cos\theta_{m,3} & cos\varphi_{m,3} \cdot sin\theta_{m,3} & sin\varphi_{m,3} \end{bmatrix} \quad (92),$$

where

$\theta_{m,i}$, i = 1,2,3 is an $i^{th}$ azimuth angle measurement value in the $m^{th}$ group of measurement data of the target stationary relative to the reference system, and $\varphi_{m,i}$, i = 1,2,3 is an $i^{th}$ pitch angle measurement value in the $m^{th}$ group of measurement data of the target stationary relative to the reference system.

In an implementation, selection of M groups of measurement data should be made to keep a condition number of a measurement matrix corresponding to each group of measurement data as small as possible.

In an implementation, selection of $\theta_{m,i}$, i = 1,2 or $\theta_{m,i}$, $\varphi_{m,i}$, i = 1,2,3 should be made to keep each column vector of the corresponding measurement matrix orthogonal to each other as much as possible.

Manner six: The specific implementation of determining the motion state of the sensor based on the first grid cell in the velocity grid $W_1$ is: determining the velocity vector of the sensor based on the velocity vector corresponding to the first grid cell in the velocity grid $W_1$, a velocity vector corresponding to a first grid cell in a velocity grid $W_m$, or a velocity vector of the sensor estimated based on measurement data of the target stationary relative to the reference system and a first velocity vector. The first velocity vector includes a velocity vector of the sensor determined based on measurement data of a previous frame and/or a reference velocity vector of the sensor, where the reference velocity vector of the sensor may be a velocity vector of the sensor measured by an IMU or another apparatus.

Optionally, the velocity vector of the sensor may be

$$v_s = \alpha \cdot v_{s,c} + (1 - \alpha) \cdot v_{s,p},$$

where

$\alpha \geq 0$, for example, $\alpha$ is equal to 0.5, 0.6, 0.75, or 0.8; $v_{s,c}$ is the velocity vector corresponding to the first grid cell in the velocity grid $W_1$, the velocity vector corresponding to the first grid cell in the velocity grid $W_m$, or the velocity vector of the sensor estimated based on the measurement data of the target stationary relative to the reference system; and $v_{s,p}$ is the velocity vector of the sensor determined based on the measurement data of the previous frame and/or the reference velocity vector of the sensor.

That is, the current velocity vector of the sensor is determined based on the reference velocity vector and/or the velocity vector of the sensor determined last time, because the velocity vector of the sensor may not vary greatly in a short period of time due to a temporal and/or spatial correlation of motion, and the velocity vector of the sensor calculated based on the measurement data may not differ greatly from the reference velocity vector. Therefore, the current velocity vector of the sensor needs to be determined in combination with the velocity vector of the sensor determined last time and/or the reference velocity vector of the sensor. For example, the velocity vector of the sensor determined in any one of the foregoing manners 1 to 5 is referred to as a velocity vector 1. After the velocity vector 1 is determined based on the velocity vector corresponding to the first grid cell in the velocity grid $W_1$, if the velocity vector 1 is not much different from the previous velocity vector of the sensor, or the velocity vector 1 is not much different from the reference velocity vector, the current velocity vector of the sensor may be determined as the velocity vector 1. Otherwise, the velocity vector 1 is not determined as the current velocity vector of the sensor.

It can be learned that, according to manner six, by using the temporal and/or spatial correlation of the motion, the velocity vector of the sensor may be determined more accurately based on the reference velocity vector and a velocity vector of the sensor obtained based on current measurement data; and/or the velocity vector of the sensor determined last time.

In this embodiment of the present invention, function modules of a device may be divided according to the foregoing method examples. For example, the function modules may be divided according to functions, or two or more functions may be integrated into one module. The integrated module may be implemented in a form of hardware, or may be implemented in a form of a software function module. It should be noted that, module division in this embodiment of the present invention is an example, and is merely logical function division, and there is another division manner during actual implementation.

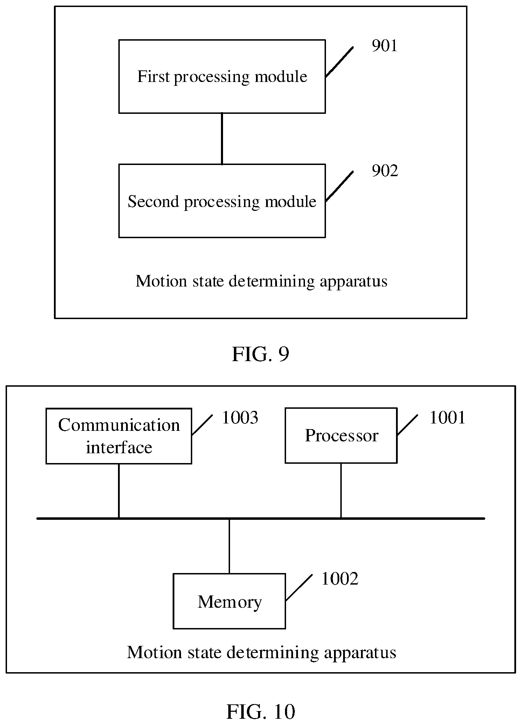

FIG. 9 is a schematic structural diagram of a motion state determining apparatus according to an embodiment of this application. The motion state determining apparatus shown in FIG. 9 may be configured to perform some or all functions of the motion state determining apparatus in the method embodiment described in FIG. 3 or FIG. 7. The motion state determining apparatus shown in FIG. 9 may include a first processing module 901 and a second processing module 902.

The first processing module 901 is configured to determine a weight of a grid cell in a velocity grid $W_1$ based on measurement data from a sensor, where the velocity grid $W_1$ includes a plurality of grid cells, each grid cell in the plurality of grid cells corresponds to one velocity vector, each velocity vector includes at least one velocity component, and the measurement data includes a velocity measurement value.

The second processing module 902 is configured to determine a motion state of the sensor based on the weight of the grid cell, where the motion state of the sensor includes a velocity vector of the sensor, and the velocity vector of the sensor includes at least one velocity component.

For how to determine the weight of the grid cell in the velocity grid $W_1$ and determine the motion state of the sensor based on the weight, refer to the descriptions in the foregoing method embodiments. For example, the weight of the grid cell may be determined according to one or more combinations of formulas (8) to (11), (23) to (26), and (45) to (58).

In an optional implementation, the velocity grid $W_1$ is determined based on at least one of a resolution cell size and a reference velocity vector.

In an optional implementation, the velocity grid $W_1$ is further determined based on at least one of a resolution cell quantity, a minimum velocity of a velocity component, and a velocity range of the velocity component.

For how to determine the velocity grid $W_1$, refer to the descriptions in the foregoing method embodiments. For example, the velocity grid $W_1$ may be determined according to one or more combinations of formulas (1) to (7).

In an optional implementation, a manner in which the second processing module 902 determines the motion state of the sensor based on the weight of the grid cell is specifically: determining the motion state of the sensor based on a first grid cell in the velocity grid $W_1$, where the first grid cell in the velocity grid $W_1$ is a grid cell with a largest weight in the velocity grid $W_1$, the first grid cell in the velocity grid $W_1$ is a grid cell that is in a neighborhood of a grid cell with a largest weight in the velocity grid $W_1$ and that is closest to the reference velocity vector, or the first grid cell in the velocity grid $W_1$ is a grid cell that is among a plurality of grid cells with maximum weights in the velocity grid $W_1$ and that corresponds to a velocity vector closest to the reference velocity vector.

In an optional implementation, a manner in which the first processing module 901 determines the weight of the grid cell in the velocity grid $W_1$ based on the measurement data from the sensor is specifically:

determining a second grid cell (i, j) based on an $n^{th}$ piece of measurement data, and weighting the second grid cell (i, j) based on a weighted increment or weighting factor, where a velocity vector corresponding to the second grid cell (i, j) satisfies

$$\left| v_x\left(i\right)\cdot\cos\theta_n + v_y\left(j\right)\cdot\sin\theta_n + \dot{r}_n \right| \le T_1 ;$$

or

determining a second grid cell (i, j, k) based on an $n^{th}$ piece of measurement data, and weighting the second grid cell (i, j, k) based on a weighted increment or weighting factor, where a velocity vector corresponding to the second grid cell (i, j, k) satisfies

$$\left| v_x\left(i\right)\cdot\cos\varphi_n\cos\theta_n + v_y\left(j\right)\cdot\sin\varphi_n\sin\theta_n + v_z\left(k\right)\cdot\sin\varphi_n + \dot{r}_n \right| \le T_2 ,$$

where

$\theta_n$ is a measurement value of an azimuth angle included in the $n^{th}$ piece of measurement data, $\varphi_n$ is a measurement value of a pitch angle included in the $n^{th}$ piece of measurement data, $\dot{r}_n$ is a measurement value of a radial velocity included in the $n^{th}$ piece of measurement data, $v_x(i)$ is an x-axis component of the velocity vector corresponding to the second grid cell, $v_y(j)$ is a y-axis component of the velocity vector corresponding to the second grid cell, $v_z(k)$ is a z-axis component of the velocity vector of the second grid cell, and both $T_1$ and $T_2$ are non-negative thresholds.

For a specific implementation principle of this implementation, refer to the descriptions of manner 1 and manner 2 of determining the grid cell that is in the velocity grid $W_1$ and that corresponds to one piece of measurement data in the foregoing method embodiments. Details are not described herein again.

In an optional implementation, a manner in which the first processing module 901 determines the weight of the grid cell in the velocity grid $W_1$ based on the measurement data from the sensor is specifically:

determining a second grid cell (i, j) based on an $n^{th}$ piece of measurement data, and weighting the second grid cell (i, j) based on a weighted increment or weighting factor, where a velocity vector corresponding to the second grid cell (i, j) satisfies

$$\left| v_x\left(i\right)\cdot\cos\theta_n + v_y\left(j\right)\cdot\sin\theta_n - \dot{r}_n \right| \le T_1 ;$$

or

determining a second grid cell (i, j, k) based on an $n^{th}$ piece of measurement data, and weighting the second grid cell (i, j, k) based on a weighted increment or weighting factor, where a velocity vector corresponding to the second grid cell (i, j, k) satisfies

$$\left| v_x\left(i\right)\cdot\cos\varphi_n\cos\theta_n + v_y\left(j\right)\cdot\sin\varphi_n\sin\theta_n + v_z\left(k\right)\cdot\sin\varphi_n - \dot{r}_n \right| \le T_2 ,$$

where

$\theta_n$ is a measurement value of an azimuth angle included in the $n^{th}$ piece of measurement data, $\varphi_n$ is a measurement value of a pitch angle included in the $n^{th}$ piece of measurement data, $\dot{r}_n$ is a measurement value of a radial velocity included in the $n^{th}$ piece of measurement data, $v_x(i)$ is an x-axis component of the velocity vector corresponding to the second grid cell, $v_y(j)$ is a y-axis component of the velocity vector corresponding to the second grid cell, $v_z(k)$ is a z-axis component of the velocity vector of the second grid cell, and both $T_1$ and $T_2$ are non-negative thresholds.

For a specific implementation principle of this implementation, refer to the descriptions of manner 3 and manner 4 of determining the grid cell that is in the velocity grid $W_1$ and that corresponds to one piece of measurement data in the foregoing method embodiments. Details are not described herein again.

In an optional implementation, the weighted increment or weighting factor of the grid cell in the velocity grid $W_1$ is a preset value, the weighted increment or weighting factor of the grid cell in the velocity grid $W_1$ is a value determined based on the $n^{th}$ piece of measurement data, or the weighted increment or weighting factor of the grid cell in the velocity grid $W_1$ is a value determined based on the $n^{th}$ piece of measurement data and distribution of a scattering section corresponding to a preset target type.

For a specific implementation principle of this implementation, refer to the descriptions of determining the weighted increment in the foregoing method embodiments. Details are not described herein again. For example, the weighted increment may be determined according to one or more combinations of formulas (15) to (28), (30) to (44), (46) to (51), and (53) to (58).

In an optional implementation, the first grid cell in the velocity grid $W_1$ is the grid cell with the largest weight in the velocity grid $W_1$; and when the velocity grid $W_1$ has a plurality of grid cells with the largest weight, the first grid cell in the velocity grid $W_1$ is a grid cell that is among the plurality of grid cells with the largest weight and that corresponds to a largest velocity vector; or when the velocity grid $W_1$ has a plurality of grid cells with the largest weight, the first grid cell in the velocity grid $W_1$ is a grid cell that is among the plurality of grid cells with the largest weight and that corresponds to a velocity vector closest to the reference velocity vector.

In an optional implementation, a manner in which the second processing module 902 determines the motion state of the sensor based on the first grid cell in the velocity grid $W_1$ is specifically: determining that a velocity vector corresponding to the first grid cell in the velocity grid $W_1$ is the velocity vector of the sensor.

In an optional implementation, a manner in which the second processing module 902 determines the motion state of the sensor based on the first grid cell in the velocity grid $W_1$ is specifically: determining that an opposite number of each velocity component of a velocity vector corresponding to the first grid cell in the velocity grid $W_1$ is each velocity component of the velocity vector of the sensor.

In an optional implementation, a manner in which the second processing module 902 determines the motion state of the sensor based on the first grid cell in the velocity grid $W_1$ is specifically: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, where m=1, 2, ..., M, and M is an integer; and determining that a velocity vector corresponding to the first grid cell in the velocity grid $W_M$ is the velocity vector of the sensor.

In an optional implementation, a manner in which the second processing module 902 determines the motion state of the sensor based on the first grid cell in the velocity grid $W_1$ is specifically: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, where m=1, 2, ..., M, and M is an integer; and determining that an opposite number of each velocity component of a velocity vector corresponding to the first grid cell in the velocity grid $W_M$ is each velocity component of the velocity vector of the sensor.

In an optional implementation, the motion state determining apparatus further includes a third processing module, configured to determine measurement data of a target stationary relative to a reference system from the measurement data based on the velocity vector of the sensor.

In an optional implementation, a manner in which the second processing module 902 determines the motion state of the sensor based on the first grid cell in the velocity grid $W_1$ is specifically: determining, based on a velocity vector corresponding to the first grid cell in the velocity grid $W_1$, measurement data of a target stationary relative to the reference system from the measurement data; and determining the velocity vector of the sensor based on the measurement data of the target stationary relative to the reference system.

In an optional implementation, a manner in which the second processing module 902 determines the velocity vector of the sensor based on the measurement data of the target stationary relative to the reference system is specifically: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined

based on newly determined measurement data of the target stationary relative to the reference system, and the newly determined measurement data of the target stationary relative to the reference system is determined based on the velocity vector corresponding to the first grid cell in the velocity grid $W_{m-1}$, where m=1, 2, ..., M, and M is an integer; and determining that a velocity vector corresponding to the first grid cell in the velocity grid $W_M$ is the velocity vector of the sensor.

In an optional implementation, a manner in which the second processing module 902 determines the velocity vector of the sensor based on the measurement data of the target stationary relative to the reference system is specifically: determining a first grid cell in a velocity grid $W_m$, where the velocity grid $W_m$ includes a plurality of grid cells, each grid cell in the velocity grid $W_m$ corresponds to one velocity vector, the velocity vector corresponding to the grid cell in the velocity grid $W_m$ includes at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined based on newly determined measurement data of the target stationary relative to the reference system, and the newly determined measurement data of the target stationary relative to the reference system is determined based on the velocity vector corresponding to the first grid cell in the velocity grid $W_{m-1}$, where m=1, 2, ..., M, and M is an integer; and determining that an opposite number of each velocity component of a velocity vector corresponding to the first grid cell in the velocity grid $W_M$ is each velocity component of the velocity vector of the sensor.

In an optional implementation, the second processing module 902 determines the velocity vector of the sensor according to the following measurement equation:

$$-\dot{r}_k = h_k v_s - n_{\dot{r}},$$

where
$\dot{r}_k$ is a measurement value of a radial velocity of a $k^{th}$ target stationary relative to the reference system; $v_s$ is the velocity vector of the sensor; $n_{\dot{r}}$ is a measurement error of the radial velocity $\dot{r}_k$; and when a velocity vector corresponding to each grid cell in the velocity grid $W_1$ includes two velocity components, $h_k = [\cos\theta_k \ \sin\theta_k]$, or when a velocity vector corresponding to each grid cell in the velocity grid $W_1$ includes three velocity components, $h_k = [\cos\varphi_k\cos\theta_k \ \cos\varphi_k\sin\theta_k \ \sin\varphi_k]$, where $\varphi_k$ is a measurement value of a pitch angle of the $k^{th}$ target stationary relative to the reference system, and $\theta_k$ is a measurement value of an azimuth angle of the $k^{th}$ target stationary relative to the reference system.

For a specific implementation principle of this implementation, refer to the corresponding descriptions of determining the velocity vector in the foregoing method embodiments. Details are not described herein again.

In an optional implementation, the second processing module 902 determines the velocity vector of the sensor according to the following measurement equation:

$$\dot{r}_k = h_k v_T + n_{\dot{r}},$$

where
$\dot{r}_k$ is a measurement value of a radial velocity of a $k^{th}$ target stationary relative to the reference system; $v_s$ is the velocity vector of the sensor; $n_{\dot{r}}$ is a measurement error of the radial velocity $\dot{r}_k$; and when a velocity vector corresponding to each grid cell in the velocity grid $W_1$ includes two velocity components, $h_k = [\cos\theta_k \ \sin\theta_k]$, or when a velocity vector corresponding to each grid cell in the velocity grid $W_1$ includes three velocity components, $h_k = [\cos\varphi_k\cos\theta_k \ \cos\varphi_k\sin\theta_k \ \sin\varphi_k]$, where $\varphi_k$ is a measurement value of a pitch angle of the $k^{th}$ target stationary relative to the reference system, and $\theta_k$ is a measurement value of an azimuth angle of the $k^{th}$ target stationary relative to the reference system.

For a specific implementation principle of this implementation, refer to the corresponding descriptions of determining the velocity vector in the foregoing method embodiments. Details are not described herein again.

In an optional implementation, a specific implementation of determining the velocity vector of the sensor according to the measurement equation is: obtaining the velocity vector of the sensor according to the measurement equation and based on a least square method and/or sequential block filtering.

For a specific implementation principle of this implementation, refer to the descriptions of obtaining the velocity vector of the sensor based on the least square method and/or sequential block filtering in the foregoing method embodiments. Details are not described herein again. For example, refer to the descriptions corresponding to formulas (67) to (92).

In an optional implementation, a specific implementation of determining the motion state of the sensor based on the first grid cell in the velocity grid $W_1$ is: determining the velocity vector of the sensor based on a velocity vector corresponding to the first grid cell in the velocity grid $W_1$, a velocity vector corresponding to the first grid cell in the velocity grid $W_m$, or a velocity vector of the sensor estimated based on the measurement data of the target stationary relative to the reference system and a first velocity vector. The first velocity vector includes a velocity vector of the sensor determined based on measurement data of a previous frame and/or a reference velocity vector of the sensor, where the reference velocity vector of the sensor may be a velocity vector of the sensor measured by an IMU or another apparatus.

Based on a same inventive concept, a problem-resolving principle of the motion state determining apparatus provided in this embodiment of this application is similar to the principle of the method embodiments of this application. Therefore, for a specific implementation principle of the apparatus, refer to the implementation principle of the method. For brief description, details are not described herein again.

FIG. 10 is a schematic structural diagram of a motion state determining apparatus disclosed in an embodiment of this application. As shown in FIG. 10, the motion state determining apparatus includes a processor 1001, a memory 1002, and a communication interface 1003. The processor 1001, the memory 1002, and the communication interface 1003 are connected.

The processor 1001 may be a central processing unit (central processing unit, CPU), a general-purpose processor, a coprocessor, a digital signal processor (digital signal processor, DSP), an application-specific integrated circuit (application-specific integrated circuit, ASIC), or a field programmable gate array (field programmable gate array, FPGA) or another programmable logic device, a transistor logic device, a hardware component, or any combination thereof. Alternatively, the processor 1001 may be a combination for implementing a computing function, for example, a combination of one or more microprocessors, or a combination of a DSP and a microprocessor.

The communication interface 1003 is configured to implement communication with another device or another communication component in the same motion state determining apparatus.

The processor 1001 invokes program code stored in the memory 1002, to perform steps performed by the motion state determining apparatus in the foregoing method embodiments. The memory 1002 is further configured to store cached data in a process of performing the foregoing method. The memory 1002 and the processor 1001 are coupled to each other, or optionally, may be integrated together. The first processing module, the second processing module, and the third processing module may be implemented by using the processor 1001.

An embodiment of the present invention further provides a computer-readable storage medium. The computer-readable storage medium stores instructions. When the instructions are run on a processor, method procedures in the foregoing method embodiments are implemented.

An embodiment of the present invention further provides a computer program product. When the computer program product runs on a processor, method procedures in the foregoing method embodiments are implemented.

When the apparatus provided in this application is implemented by using software, all or part of the apparatus may be implemented in a form of a computer program product. The computer program product includes one or more computer instructions. When the computer program instructions are loaded and executed on a computer, all or part of the procedures or functions described in the embodiments of this application are implemented. The computer may be a general-purpose computer, a dedicated computer, a computer network, or another programmable apparatus. The computer instructions may be stored in a computer-readable storage medium, or transmitted from one computer-readable storage medium to another. For example, the computer instructions may be transmitted from a website site, computer, server, or data center in a wired (for example, a coaxial cable, an optical fiber, or a digital subscriber line (digital subscriber line, DSL)) or wireless (for example, infrared, wireless, or microwave) manner to another website, computer, server, or data center. The computer-readable storage medium may be any usable medium that can be accessed by the computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

An embodiment of this application further provides a chip system. The chip system includes a processor, configured to support a motion state determining apparatus to implement the functions in the foregoing embodiments, for example, generating or processing the data and/or information in the foregoing method. Optionally, the chip system further includes an interface circuit, and the processor obtains information or outputs information by using the interface circuit. It should be noted herein that the chip system may be an integrated circuit. Further, the integrated circuit includes at least one transistor and/or at least one logic gate.

Further, optionally, the chip system may further include a memory. The memory is configured to store necessary program instructions and data. The processor may invoke and execute the program instructions, to implement the method provided in this application. The chip system may include a chip, or may include a chip and other discrete devices.

Based on a same inventive concept, a problem-resolving principle of the motion state determining apparatus provided in this embodiment of this application is similar to the principle of the motion state determining apparatus in the method embodiments of this application. Therefore, for implementation of each device, refer to the implementation of the method. For brief description, details are not described herein again.

In the foregoing embodiments, descriptions of each embodiment have different emphases. For a part that is not described in detail in an embodiment, refer to related descriptions of other embodiments. Finally, it should be noted that: the foregoing embodiments are merely used to describe the technical solutions of this application, but not to limit them. Although this application has been described in detail with reference to the foregoing embodiments, a person of ordinary skill in the art should understand that the technical solutions described in the foregoing embodiments may still be modified, or some or all technical features thereof may be equivalently replaced. However, these modifications or replacements do not make the essence of the corresponding technical solutions fall out of the protection scope of the technical solutions in the embodiments of this application.

**Claims**

1.  A motion state determining method, wherein the method comprises:

    determining a weight of a grid cell in a velocity grid $W_1$ based on measurement data from a sensor, wherein the velocity grid $W_1$ comprises a plurality of grid cells, each grid cell in the plurality of grid cells corresponds to one velocity vector, each velocity vector comprises at least one velocity component, and the measurement data comprises a velocity measurement value; and
    determining a motion state of the sensor based on the weight of the grid cell, wherein the motion state of the sensor comprises a velocity vector of the sensor, and the velocity vector of the sensor comprises at least one velocity component.

2.  The method according to claim 1, wherein the velocity grid $W_1$ is determined based on at least one of a resolution cell size and a reference velocity vector.

3.  The method according to claim 2, wherein the velocity grid $W_1$ is further determined based on at least one of a resolution cell quantity, a minimum velocity of a velocity component, and a velocity range of the velocity component.

4.  The method according to any one of claims 1 to 3, wherein the determining a motion state of the sensor based on the weight of the grid cell comprises:
    determining the motion state of the sensor based on a first grid cell in the velocity grid $W_1$, wherein the first grid cell in the velocity grid $W_1$ is a grid cell with a largest weight in the velocity grid $W_1$, the first grid cell in the velocity grid $W_1$ is a grid cell that is in a neighborhood of a grid cell with a largest weight in the velocity grid $W_1$ and that is closest to the reference velocity vector, or the first grid cell in the velocity grid $W_1$ is a grid cell that is among a plurality of grid cells with maximum weights in the velocity grid $W_1$ and that corresponds to a velocity vector closest to the reference velocity vector.

5.  The method according to any one of claims 1 to 4, wherein the determining a weight of a grid cell in a velocity grid $W_1$ based on measurement data from a sensor comprises:

    determining a second grid cell (i, j) based on an $n^{th}$ piece of measurement data, and weighting the second grid cell (i, j) based on a weighted increment or weighting factor, wherein a velocity vector corresponding to the second grid cell (i, j) satisfies

    $$\left| v_x(i) \cdot \cos\theta_n + v_y(j) \cdot \sin\theta_n + \dot{r}_n \right| \le T_1 ;$$

    or
    determining a second grid cell (i, j, k) based on an $n^{th}$ piece of measurement data, and weighting the second grid cell (i, j, k) based on a weighted increment or weighting factor, wherein a velocity vector corresponding to the second grid cell (i, j, k) satisfies

    $$\left| v_x(i) \cdot \cos\varphi_n \cos\theta_n + v_y(j) \cdot \sin\varphi_n \sin\theta_n + v_z(k) \cdot \sin\varphi_n + \dot{r}_n \right| \le T_2 ,$$

    wherein
    $\theta_n$ is a measurement value of an azimuth angle comprised in the $n^{th}$ piece of measurement data, $\varphi_n \, 'r_n$ is a measurement value of a pitch angle comprised in the $n^{th}$ piece of measurement data, $\dot{r}_n$ is a measurement value of a radial velocity comprised in the $n^{th}$ piece of measurement data, $v_x$ (i) is an x-axis component of the velocity vector corresponding to the second grid cell, $v_y$ (j) is a y-axis component of the velocity vector corresponding to the second grid cell, $v_z$ (k) is a z-axis component of the velocity vector of the second grid cell, and both $T_1$ and $T_2$ are non-negative thresholds.

6. The method according to any one of claims 1 to 5, wherein the weighted increment or weighting factor of the grid cell in the velocity grid $W_1$ is a preset value, the weighted increment or weighting factor of the grid cell in the velocity grid $W_1$ is a value determined based on the $n^{th}$ piece of measurement data, or the weighted increment or weighting factor of the grid cell in the velocity grid $W_1$ is a value determined based on the $n^{th}$ piece of measurement data and distribution of a scattering section corresponding to a preset target type.

7. The method according to claim 4, wherein the first grid cell in the velocity grid $W_1$ is the grid cell with the largest weight in the velocity grid $W_1$; and

   when the velocity grid $W_1$ has a plurality of grid cells with the largest weight, the first grid cell in the velocity grid $W_1$ is a grid cell that is among the plurality of grid cells with the largest weight and that corresponds to a largest velocity vector; or
   when the velocity grid $W_1$ has a plurality of grid cells with the largest weight, the first grid cell in the velocity grid $W_1$ is a grid cell that is among the plurality of grid cells with the largest weight and that corresponds to a velocity vector closest to the reference velocity vector.

8. The method according to claim 4 or 7, wherein the determining the motion state of the sensor based on a first grid cell in the velocity grid $W_1$ comprises:
   determining that a velocity vector corresponding to the first grid cell in the velocity grid $W_1$ is the velocity vector of the sensor.

9. The method according to claim 4 or 7, wherein the determining the motion state of the sensor based on a first grid cell in the velocity grid $W_1$ comprises:

   determining a first grid cell in a velocity grid $W_m$, wherein the velocity grid $W_m$ comprises a plurality of grid cells, each grid cell in the velocity grid $W_m$ corresponds to one velocity vector, the velocity vector corresponding to the grid cell in the velocity grid $W_m$ comprises at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, wherein m=1, 2, ..., M, and M is an integer; and
   determining that a velocity vector corresponding to the first grid cell in the velocity grid $W_M$ is the velocity vector of the sensor.

10. The method according to any one of claims 1 to 9, wherein the method further comprises:
    determining measurement data of a target stationary relative to a reference system from the measurement data based on the velocity vector of the sensor.

11. The method according to claim 4 or 7, wherein the determining the motion state of the sensor based on a first grid cell in the velocity grid $W_1$ comprises:

    determining measurement data of a target stationary relative to a reference system from the measurement data based on a velocity vector corresponding to the first grid cell in the velocity grid $W_1$; and
    determining the velocity vector of the sensor based on the measurement data of the target stationary relative to the reference system.

12. The method according to claim 11, wherein the determining the velocity vector of the sensor based on the measurement data of the target stationary relative to the reference system comprises:

    determining a first grid cell in a velocity grid $W_m$, wherein the velocity grid $W_m$ comprises a plurality of grid cells, each grid cell in the velocity grid $W_m$ corresponds to one velocity vector, the velocity vector corresponding to the grid cell in the velocity grid $W_m$ comprises at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined based on newly determined measurement data of the target stationary relative to the reference system, and the newly determined measurement data of the target stationary relative to the reference system is determined based on the velocity vector corresponding to the first grid cell in the velocity grid $W_{m-1}$, wherein m=1, 2, ..., M, and M is an integer; and

determining that a velocity vector corresponding to the first grid cell in the velocity grid $W_M$ is the velocity vector of the sensor.

13. The method according to claim 11, wherein the velocity vector of the sensor is determined according to the following measurement equation:

$$-\dot{r}_k = h_k v_s - n_{\dot{r}},$$

wherein

$\dot{r}_k$ is a measurement value of a radial velocity of a $k^{th}$ target stationary relative to the reference system, $n_{\dot{r}}$ is a measurement error of the radial velocity, $v_s$ is the velocity vector of the sensor, $v_s$ is a two-dimensional vector, and $h_k = [cos\ \theta_k,\ sin\ \theta_k]$ ; or $v_s$ is a three-dimensional vector, and $h_k = [\cos\ \varphi_k \cos\ \theta_k \cos\ \varphi_k \sin\ \theta_k \sin\ \varphi_k]$, wherein $\theta_k$ is a measurement value of an azimuth angle of the $k^{th}$ target stationary relative to the reference system, and $\varphi_k$ is a measurement value of a pitch angle of the $k^{th}$ target stationary relative to the reference system.

14. The method according to claim 13, wherein that the velocity vector of the sensor is determined according to the measurement equation comprises:
obtaining the velocity vector of the sensor according to the measurement equation and based on a least square method and/or sequential block filtering.

15. A motion state determining apparatus, wherein the motion state determining apparatus comprises:

a first processing module, configured to determine a weight of a grid cell in a velocity grid $W_1$ based on measurement data from a sensor, wherein the velocity grid $W_1$ comprises a plurality of grid cells, each grid cell in the plurality of grid cells corresponds to one velocity vector, each velocity vector comprises at least one velocity component, and the measurement data comprises a velocity measurement value; and
a second processing module, configured to determine a motion state of the sensor based on the weight of the grid cell, wherein the motion state of the sensor comprises a velocity vector of the sensor, and the velocity vector of the sensor comprises at least one velocity component.

16. The motion state determining apparatus according to claim 15, wherein the velocity grid $W_1$ is determined based on at least one of a resolution cell size and a reference velocity vector.

17. The motion state determining apparatus according to claim 16, wherein the velocity grid $W_1$ is further determined based on at least one of a resolution cell quantity, a minimum velocity of a velocity component, and a range of the velocity component.

18. The motion state determining apparatus according to any one of claims 15 to 17, wherein a manner in which the second processing module determines the motion state of the sensor based on the weight of the grid cell is specifically:
determining the motion state of the sensor based on a first grid cell in the velocity grid $W_1$, wherein the first grid cell in the velocity grid $W_1$ is a grid cell with a largest weight in the velocity grid $W_1$, the first grid cell in the velocity grid $W_1$ is a grid cell that is in a neighborhood of a grid cell with a largest weight in the velocity grid $W_1$ and that is closest to the reference velocity vector, or the first grid cell in the velocity grid $W_1$ is a grid cell that is among a plurality of grid cells with maximum weights in the velocity grid $W_1$ and that corresponds to a velocity vector closest to the reference velocity vector.

19. The motion state determining apparatus according to any one of claims 15 to 18, wherein a manner in which the first processing module determines the weight of the grid cell in the velocity grid $W_1$ based on the measurement data from the sensor is specifically:

determining a second grid cell (i, j) based on an nth piece of measurement data, and weighting the second grid cell (i, j) based on a weighted increment or weighting factor, wherein a velocity vector corresponding to the second grid cell (i, j) satisfies

$$\left| v_x\left(i\right)\cdot\cos\theta_n + v_y\left(j\right)\cdot\sin\theta_n + \dot{r}_n \right| \le T_1;$$

or
determining a second grid cell (i, j, k) based on an nth piece of measurement data, and weighting the second grid cell (i, j, k) based on a weighted increment or weighting factor, wherein a velocity vector corresponding to the second grid cell (i, j, k) satisfies

$$\left| v_x\left(i\right)\cdot\cos\varphi_n\cos\theta_n + v_y\left(j\right)\cdot\sin\varphi_n\sin\theta_n + v_z\left(k\right)\cdot\sin\varphi_n + \dot{r}_n \right| \le T_2,$$

wherein
$\theta_n$ is a measurement value of an azimuth angle comprised in the nth piece of measurement data, $\varphi_n$ 'r$_n$ is a measurement value of a pitch angle comprised in the nth piece of measurement data, $\dot{r}_n$ is a measurement value of a radial velocity comprised in the nth piece of measurement data, $v_x$ (i) is an x-axis component of the velocity vector corresponding to the second grid cell, $v_y$ (j) is a y-axis component of the velocity vector corresponding to the second grid cell, $v_z$ (k) is a z-axis component of the velocity vector of the second grid cell, and both $T_1$ and $T_2$ are non-negative thresholds.

20. The motion state determining apparatus according to claim 19, wherein the weighted increment or weighting factor of the grid cell in the velocity grid $W_1$ is a preset value, the weighted increment or weighting factor of the grid cell in the velocity grid $W_1$ is a value determined based on the nth piece of measurement data, or the weighted increment or weighting factor of the grid cell in the velocity grid $W_1$ is a value determined based on the nth piece of measurement data and distribution of a scattering section corresponding to a preset target type.

21. The motion state determining apparatus according to claim 18, wherein the first grid cell in the velocity grid $W_1$ is the grid cell with the largest weight in the velocity grid $W_1$; and

when the velocity grid $W_1$ has a plurality of grid cells with the largest weight, the first grid cell in the velocity grid $W_1$ is a grid cell that is among the plurality of grid cells with the largest weight and that corresponds to a largest velocity vector; or
when the velocity grid $W_1$ has a plurality of grid cells with the largest weight, the first grid cell in the velocity grid $W_1$ is a grid cell that is among the plurality of grid cells with the largest weight and that corresponds to a velocity vector closest to the reference velocity vector.

22. The motion state determining apparatus according to claim 18 or 21, wherein a manner in which the second processing module determines the motion state of the sensor based on the first grid cell in the velocity grid $W_1$ is specifically: determining that a velocity vector corresponding to the first grid cell in the velocity grid $W_1$ is the velocity vector of the sensor.

23. The motion state determining apparatus according to claim 18 or 21, wherein a manner in which the second processing module determines the motion state of the sensor based on the first grid cell in the velocity grid $W_1$ is specifically:

determining a first grid cell in a velocity grid $W_m$, wherein the velocity grid $W_m$ comprises a plurality of grid cells, each grid cell in the velocity grid $W_m$ corresponds to one velocity vector, the velocity vector corresponding to the grid cell in the velocity grid $W_m$ comprises at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, and the weight of the grid cell in the velocity grid $W_m$ is determined based on the measurement data from the sensor, wherein m=1, 2, ..., M, and M is an integer; and

determining that a velocity vector corresponding to the first grid cell in the velocity grid $W_M$ is the velocity vector of the sensor.

24. The motion state determining apparatus according to any one of claims 15 to 23, wherein the motion state determining apparatus further comprises:

a third processing module, configured to determine measurement data of a target stationary relative to a reference system from the measurement data based on the velocity vector of the sensor.

25. The motion state determining apparatus according to claim 18 or 21, wherein a manner in which the second processing module determines the motion state of the sensor based on the first grid cell in the velocity grid $W_1$ is specifically:

determining measurement data of a target stationary relative to a reference system from the measurement data based on a velocity vector corresponding to the first grid cell in the velocity grid $W_1$; and
determining the velocity vector of the sensor based on the measurement data of the target stationary relative to the reference system.

26. The motion state determining apparatus according to claim 25, wherein a manner in which the second processing module determines the velocity vector of the sensor based on the measurement data of the target stationary relative to the reference system is specifically:

determining a first grid cell in a velocity grid $W_m$, wherein the velocity grid $W_m$ comprises a plurality of grid cells, each grid cell in the velocity grid $W_m$ corresponds to one velocity vector, the velocity vector corresponding to the grid cell in the velocity grid $W_m$ comprises at least one velocity component, the velocity grid $W_m$ is determined based on a reference velocity vector and a resolution cell size of the velocity grid $W_m$ in each dimension, the reference velocity vector is a velocity vector corresponding to a first grid cell in a velocity grid $W_{m-1}$, the resolution cell size of the velocity grid $W_m$ is less than or equal to a resolution cell size of the velocity grid $W_{m-1}$, the first grid cell in the velocity grid $W_m$ is determined based on a weight of a grid cell in the velocity grid $W_m$, the weight of the grid cell in the velocity grid $W_m$ is determined based on newly determined measurement data of the target stationary relative to the reference system, and the newly determined measurement data of the target stationary relative to the reference system is determined based on the velocity vector corresponding to the first grid cell in the velocity grid $W_{m-1}$, wherein m=1, 2, ..., M, and M is an integer; and
determining that a velocity vector corresponding to the first grid cell in the velocity grid $W_M$ is the velocity vector of the sensor.

27. The motion state determining apparatus according to claim 25, wherein the second processing module determines the velocity vector of the sensor according to the following measurement equation:

$$-\dot{r}_k = h_k v_s - n_{\dot{r}},$$

wherein
$\dot{r}_k$ is a measurement value of a radial velocity of a $k^{th}$ target stationary relative to the reference system, $n_{\dot{r}}$ is a measurement error of the radial velocity, $v_s$ is the velocity vector of the sensor, $v_s$ is a two-dimensional vector, and $h_k =[\cos \theta_k \sin \theta_k]$ ; or $v_s$ is a three-dimensional vector, and $h_k =[\cos \varphi_k \cos \theta_k \cos \varphi_k \sin \theta_k \sin \varphi_k]$ , wherein $\theta_k$ is a measurement value of an azimuth angle of the $k^{th}$ target stationary relative to the reference system, and $\varphi_k$ is a measurement value of a pitch angle of the $k^{th}$ target stationary relative to the reference system.

28. The motion state determining apparatus according to claim 27, wherein a manner in which the second processing module determines the velocity vector of the sensor according to the measurement equation is specifically:
obtaining the velocity vector of the sensor according to the measurement equation and based on a least square method and/or sequential block filtering.

Sensor platform

Sensor | Motion state determining apparatus

FIG. 1

y

Measured target

$\dot{r}$

V

r

θ

Sensor

x

FIG. 2

301

Determine a weight of a grid cell in a velocity grid $W_1$ based on measurement data from a sensor

302

Determine a motion state of the sensor based on the weight of the grid cell

FIG. 3

Velocity grid W$_1$

v$_x$

FIG. 4

Velocity grid W$_1$

v$_y$

v$_x$

FIG. 5

Velocity grid $W_1$

$v_y$

$v_x$

$v_z$

FIG. 6

701

Determine a weight of a grid cell in a velocity grid $W_1$ based on measurement data from a sensor

702

Determine a motion state of the sensor based on a first grid cell in the velocity grid $W_1$

FIG. 7

Velocity grid W₁

First grid cell

Central grid cell

First grid cell

A resolution cell size is 10 m/s

A resolution cell size is 10 m/s

Velocity grid W₂

A resolution cell size is 5 m/s

A resolution cell size is 5 m/s

Velocity grid W₃

Central grid cell

First grid cell

A resolution cell size is 2.5 m/s

A resolution cell size is 2.5 m/s

FIG. 8

First processing module — 901

Second processing module — 902

Motion state determining apparatus

FIG. 9

Communication interface — 1003

Processor — 1001

Memory — 1002

Motion state determining apparatus

FIG. 10

## INTERNATIONAL SEARCH REPORT

International application No.

**PCT/CN2020/094020**

**A. CLASSIFICATION OF SUBJECT MATTER**

G01C 21/16(2006.01)i

According to International Patent Classification (IPC) or to both national classification and IPC

**B. FIELDS SEARCHED**

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNPAT, EPODOC, WPI, CNKI: 华为技术有限公司, 运动, 移动, 传感器, 修正, 校正, 补偿, 速度, 矢量, 网格, 图表, 权重, SENSOR?, MOV+, TRANSFER+, COMPENSAT+, AMEND+, CORRECT+, MODIFY+, VECTOR, WEIGHT+, SPEED, VELOCITY, GRIDDING, CHART

**C. DOCUMENTS CONSIDERED TO BE RELEVANT**

| Category* | Citation of document, with indication, where appropriate, of the relevant passages | Relevant to claim No. |
|---|---|---|
| X | CN 107421537 A (GUILIN UNIVERSITY OF ELECTRONIC TECHNOLOGY) 01 December 2017 (2017-12-01) claims 1-5, description paragraphs [0029]-[0043], figure 1 | 1-3, 15-17 |
| A | CN 108761514 A (BEIDOU GUOXIN INTELLIGENT TECHNOLOGY (BEIJING) CO., LTD.) 06 November 2018 (2018-11-06) entire document | 1-28 |
| A | CN 107289951 A (UNIVERSITY OF ELECTRONIC SCIENCE AND TECHNOLOGY OF CHINA) 24 October 2017 (2017-10-24) entire document | 1-28 |
| A | CN 102278987 A (SEIKO EPSON CORPORATION) 14 December 2011 (2011-12-14) entire document | 1-28 |
| A | CN 103837157 A (XIANG, Jie) 04 June 2014 (2014-06-04) entire document | 1-28 |
| A | JP 07307890 A (NAKAMURA, Takahiro) 21 November 1995 (1995-11-21) entire document | 1-28 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 August 2020** | **28 August 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/094020**

| Patent document cited in search report | | | Publication date (day/month/year) | Patent family member(s) | | | Publication date (day/month/year) |
|---|---|---|---|---|---|---|---|
| CN | 107421537 | A | 01 December 2017 | CN | 107421537 | B | 17 July 2020 |
| CN | 108761514 | A | 06 November 2018 | None | | | |
| CN | 107289951 | A | 24 October 2017 | CN | 107289951 | B | 12 May 2020 |
| CN | 102278987 | A | 14 December 2011 | US | 2011257920 | A1 | 20 October 2011 |
| | | | | JP | 2011220844 | A | 04 November 2011 |
| | | | | US | 8781776 | B2 | 15 July 2014 |
| CN | 103837157 | A | 04 June 2014 | None | | | |
| JP | 07307890 | A | 21 November 1995 | None | | | |

Form PCT/ISA/210 (patent family annex) (January 2015)